(19) Europäisches Patentamt
European Patent Office
Office européen des brevets

(11) Veröffentlichungsnummer: **0 280 139 B1**

(12) **EUROPÄISCHE PATENTSCHRIFT**

(45) Veröffentlichungstag der Patentschrift: **22.01.92**

(51) Int. Cl.$^5$: **C09B 62/503**, C09B 62/04, D06P 1/38

(21) Anmeldenummer: **88102164.6**

(22) Anmeldetag: **15.02.88**

# (54) Kupferkomplex-Formazan-Verbindungen, Verfahren zu ihrer Herstellung und ihre Verwendung als Farbstoffe.

(30) Priorität: **24.02.87 DE 3705789**

(43) Veröffentlichungstag der Anmeldung:
**31.08.88 Patentblatt 88/35**

(45) Bekanntmachung des Hinweises auf die Patenterteilung:
**22.01.92 Patentblatt 92/04**

(84) Benannte Vertragsstaaten:
**BE CH DE ES FR GB IT LI**

(56) Entgegenhaltungen:
**EP-A- 0 021 351**
**EP-A- 0 099 721**

**CHEMICAL ABSTRACTS, Band 97, Nr. 22, Februar 1982, Seite 86, Ref. Nr. 183939h, Columbus, Ohio, US; && JP-A-82 92 054 (NIPPON KAYAKU CO., LTD) 08-06-1982**

(73) Patentinhaber: **HOECHST AKTIENGESELLSCHAFT**
**Postfach 80 03 20**
**W-6230 Frankfurt am Main 80(DE)**

(72) Erfinder: **Schwaiger, Günther, Dr.**
**Johannesallee 41**
**W-6230 Frankfurt am Main 80(DE)**
Erfinder: **Springer, Hartmut, Dr.**
**Am Erdbeerstein 27**
**W-6240 Königstein/Taunus(DE)**
Erfinder: **Russ, Werner Hubert, Dr.**
**Berliner Strasse 10**
**W-6238 Hofheim am Taunus(DE)**

**EP 0 280 139 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der Faserreaktiven Metallkomplex-Formazan-Farbstoffe.

Aus der britischen Patentanmeldungs-Veröffentlichung Nr. 2 026 527 A und aus den europäischen Patentschriften Nrs. 0 021 351B und 0 009 721B sind bereits Kupferkomplex-Formazan-Verbindungen bekannt, die einen faserreaktiven Rest enthalten, der aus einem Monohalogen-triazinyl-Rest und, an diesen über eine Phenylaminogruppe gebunden, aus einem Rest der Vinylsulfon-Reihe aufgebaut ist.

Der mit vorliegenden Erfindung wurden nunmehr neue, wertvolle Kupferkomplex-Formazan-Verbindungen gefunden, die der allgemeinen Formel (1)

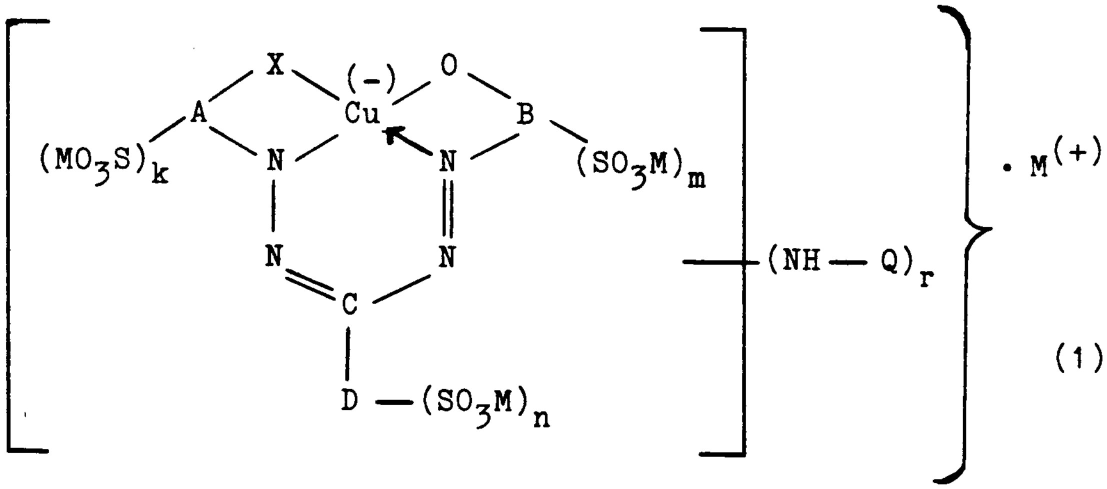

(1)

entsprechen; hierin bedeuten:

- M ist ein Wasserstoffatom oder ein salzbildendes Metallatom, bevorzugt ein Alkalimetall, wie Natrium, Kalium oder Lithium;
- k is die Zahl Null, 1 oder 2 (wobei im Falle k = Null diese Gruppe für ein Wasserstoffatom steht), bevorzugt Null oder 1,
- m ist die Zahl Null, 1 oder 2 (wobei im Falle m = Null diese Gruppe für ein Wasserstoffatom steht), und
- n ist die Zahl Null, 1 oder 2 (wobei im Falle n = Null diese Gruppe für ein Wasserstoffatom steht), bevorzugt Null oder 1,

wobei die Summe von (k + m + n) gleich eine ganze Zahl von 1 bis 4, bevorzugt 2 oder 3, insbesondere 2, ist;

- A ist ein Benzolring oder ein Naphthalinring, die beide neben den eingezeichneten Gruppen durch die angegebene und nachstehend definierte faserreaktive Gruppe -NH-Q und/oder durch 1 oder 2, bevorzugt 1, andere Substituenten aus der Gruppe Halogen, wie Chlor und Brom, Nitro, Carboxy, Alkyl von 1 bis 4 C-Atomen, wie Methyl und Ethyl, Alkoxy von 1 bis 4 C-Atomen, wie Methoxy und Ethoxy, Sulfamoyl, N-($C_1$-$C_4$)-Alkyl-sulfamoyl, N,N-Di-[($C_1$-$C_4$)-alkyl]-sulfamoyl, ($C_1$-$C_4$)-Alkyl-sulfonyl, wie Ethylsulfonyl, und Phenylsulfonyl, bevorzugt Halogen, wie Chlor, und Alkoxy von 1 bis 4 C-Atomen, wie Methoxy, substituiert sein können,
  wobei der an A gebundene Rest X und das Stickstoffatom bevorzugt in ortho-Stellung zueinander an A gebunden sind;
- B ist ein Benzolring oder ein Naphthalinring, die beide neben den eingezeichneten Gruppen durch die angegebene und nachstehend definierte faserreaktive Gruppe -NH-Q und/oder durch 1 oder 2, bevorzugt 1, andere Substituenten aus der Gruppe Halogen, wie Chlor und Brom, Nitro, Alkyl von 1 bis 4 C-Atomen, wie Methyl und Ethyl, Alkoxy von 1 bis 4 C-Atomen, wie Methoxy und Ethoxy, Sulfamoyl, N-($C_1$-$C_4$)-Alkyl-sulfamoyl, N,N-Di-[($C_1$-$C_4$)-alkyl]-sulfamoyl, ($C_1$-$C_4$)-Alkyl-sulfonyl, wie Ethylsulfonyl, und Phenylsulfonyl, substituiert sein können,
  wobei die an B gebundenen Sauerstoff- und Stickstoffatome bevorzugt in ortho-Stellung zueinander an B gebunden sind;
- D ist ein Benzol- oder Naphthalinring, die beide neben der Gruppe -$(SO_3M)_n$ und der angegebenen und nachstehend definierten faserreaktiven Gruppe -NH-Q zusätzlich durch 1 oder 2 Substituenten aus der Gruppe Halogen, wie Brom und Chlor, Alkyl von 1 bis 4 C-Atomen, wie Methyl und Ethyl,

Alkoxy von 1 bis 4 C-Atomen, wie Methoxy und Ethoxy, Nitro, Hydroxy, Alkanoylamino von 2 bis 5 C-Atomen, Carboxy und Carbalkoxy von 2 bis 5 C-Atomen, wie Carbomethoxy und Carbethoxy, hiervon bevorzugt Chlor, Methyl und Methoxy subsitituiert sein können;

X ist eine Gruppe der Formel $-SO_3^{(-)}$, wobei die Bindung zum Kupferatom und dessen negative Ladung entfallen, oder ist bevorzugt eine Oxygruppe -O- und insbesondere eine Carbonyloxygruppe -CO-O- ;

r ist die Zahl 1 oder 2, bevorzugt 1;

Q ist eine Gruppe der allgemeinen Formel (2)

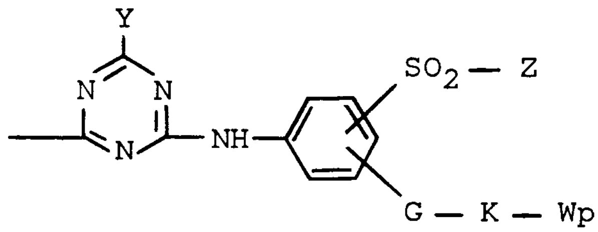

(2)

in welcher

Y für ein Halogenatom, wie ein Fluoratom oder bevorzugt ein Chloratom, steht,

Z die Vinylgruppe oder eine Ethylgruppe, die in ß-Stellung durch einen alkalisch eliminierbaren Substituenten substituiert ist, bedeutet,

G eine Gruppe der Formel -S- oder bevorzugt -N(R)- ist,

worin

R für ein Wasserstoffatom oder eine Alkylgruppe von 1 bis 4 C-Atomen steht, die substituiert sein kann, wie beispielsweise durch einen oder zwei, bevorzugt einen, Substituenten aus der Gruppe Hydroxy, Phenyl, Sulfo, Carboxy, Sulfato, Phosphato und Alkanoyloxy von 2 bis 5 C-Atomen, oder

R eine nachstehend definierten Gruppe $-K-W_p$ ist,

K eine Alkylengruppe oder ein Arylenrest oder ein Arylen-alkylen- oder ein Alkylen-arylen-Rest ist, wobei sowohl die Alkylen- als auch die Arylenreste subsituiert sein können und wobei sowohl die Alkylenreste als auch die Alkylen- und Arylenreste in den Alkylen-arylen- und Arylen-alkylen-Resten noch durch mindestens eine Heterogruppe, wie beispielsweise 1, 2 oder 3 Heterogruppen, unterbrochen sein können,

W eine wasserlöslichkeits-vermittelnde Gruppe ist, wie beispielsweise eine Hydroxy-, Sulfato-, Sulfo-, Carboxy-, Phosphato- oder Phosphonogruppe, bevorzugt hiervon Sulfato- und Sulfogruppen, und

p für die Zahl 1, 2 oder 3, bevorzugt 1 oder 2, steht;

die faserreaktive Gruppierung -NH-Q ist an ein aromatisches C-Atom eines Benzol- oder Naphthalinringes von A oder von B oder von D oder an ein aliphatisches C-Atom von D oder eines Substituenten von A oder B gebunden, jedoch im Falle r = 2 beide Gruppen, -NH-Q nicht gleichzeitig an A oder an B oder an D.

Die Formelglieder in Formel (1) können zueinander gleiche oder voneinander verschiedene Bedeutungen besitzen.

Alkylgruppen von 1 bis 4 C-Atomen sind bevorzugt die Methyl- und Ethylgruppe; Alkoxygruppen von 1 bis 4 C-Atomen sind bevorzugt die Methoxy- und Ethoxygruppe.

Insbesondere bevorzugt ist der Formelrest G eine Aminogruppe der Formel -NH- oder $-N(CH_3)-$ .

In der Gruppe der Formel (2) ist die Gruppe der Formel $-SO_2-Z$ bevorzugt in meta-Stellung zur am Triazinrest ständigen Aminogruppe an den Benzolkern und die Gruppierung der Formel $-G-K-W_p$ bevorzugt in para-Stellung zu dieser Aminogruppe gebunden.

Bevorzugt ist D ein Benzolring, der neben der angegebenen Gruppierung $-(SO_3M)_n$ durch 1 oder 2 Substituenten aus der Gruppe Alkyl von 1 bis 4 C-Atomen, Alkoxy von 1 bis 4 C-Atomen, Carboxy, Carbalkoxy von 2 bis 5 C-Atomen und Chlor substituiert sein kann.

Die Alkylengruppen (-reste) im Formelrest K sind bevorzugt geradkettige oder verzweigte Alkylengruppen von 1 bis 6 C-Atomen, bevorzugt 1 bis 4 C-Atomen, oder, falls sie durch Heterogruppen unterbrochen sind, von 2 bis 8 C-Atomen, bevorzugt 2 bis 6 C-Atomen.

Die Arylenreste im Formelrest K sind sowohl unsubstituierte als auch substituierte Arylenreste. Arylenreste sind bevorzugt die Phenylen- und Naphthylengruppen. Die Arylenreste können durch Substituenten,

bevorzugt 1 oder 2 Substituenten, aus der Gruppe Alkoxy von 1 bis 4 C-Atomen, Alkyl von 1 bis 4 C-Atomen, Halogen, wie Chlor und Brom, Sulfo und Carboxy, hiervon bevorzugt Methoxy, Ethoxy, Methyl, Chlor und Sulfo, substituiert sein.

Heterogruppen, die Alkylenreste des Formelrestes K oder Alkylen- und Arylenreste in den Alkylen-arylen- und Arylen-alkylen-Resten des Formelrestes K unterbrechen können, sind beispielsweise Gruppen der Formeln -O- , -S- , $-SO_2-$ , -CO- , -NH-CO- , -CO-NH- , -NH- und -N(R′)- , worin R′ ein Wasserstoffatom oder eine Alkylgruppe von 1 bis 4 C-Atomen ist, die substituiert sein kann, wie beispielsweise durch einen oder zwei, bevorzugt einen, Substituenten aus der Gruppe Hydroxy, Sulfo, Carboxy, Sulfato, Phosphato, Phenyl und Alkanoyloxy von 2 bis 5 C-Atomen, oder R′ eine Alkanoylgruppe von 2 bis 5 C-Atomen, wie die Acetylgruppe, ist. Bevorzugte Heterogruppen sind Gruppen der Formeln -O- , -NH-CO- , -NH- und -N(R′)- , in welcher R′ für die Methyl-oder Ethylgruppe steht.

Substituenten in β-Stellung der Ethylgruppe des Formelrestes Z, die durch ein Alkali eliminiert werden können, wobei diese β-substituierte Ethylgruppe in die Vinylgruppe übergeht, sind beispielsweise die Phosphato-, Sulfato- und Thilsulfatogruppe, bevorzugt hiervon die Sulfatogruppe.

Eine Sulfogruppe ist eine Gruppe der allgemeinen Formel $-SO_3M$ , eine Carboxygruppe eine Gruppe der allgemeinen Formel -COOM , eine Thiosulfatogruppe eine Gruppe der allgemeinen formel $-S-SO_3M$ , eine Phosphatogruppe eine Gruppe der allgemeinen Formel $-OPO_3M_2$ , eine Phosphonogruppe eine Gruppe der allgemeinen Formel $-PO_3M$ und eine Sulfatogruppe eine Gruppe der allgemeinen Formel $-OSO_3M$ , jeweils mit M der obengenannten Bedeutung.

Die neuen Verbindungen können sowohl in saurer Form als auch in Form ihrer Salze vorliegen. Bevorzugt sind sie in Form der Salze, insbesondere der Alkalimetallsalze, und finden auch bevorzugt in Form dieser Salze Verwendung zum Färben (hier und im folgenden im allgemeinen Sinne und einschließlich des Bedruckens verstanden) von hydroxy-und/oder carbonamidgruppenhaltigen Materialien, insbesondere Fasermaterialien.

Von den erfindungsgemäßen Verbindungen der allgemeinen Formel (1) sind solche bevorzugt, die der allgemeinen Formel (1a)

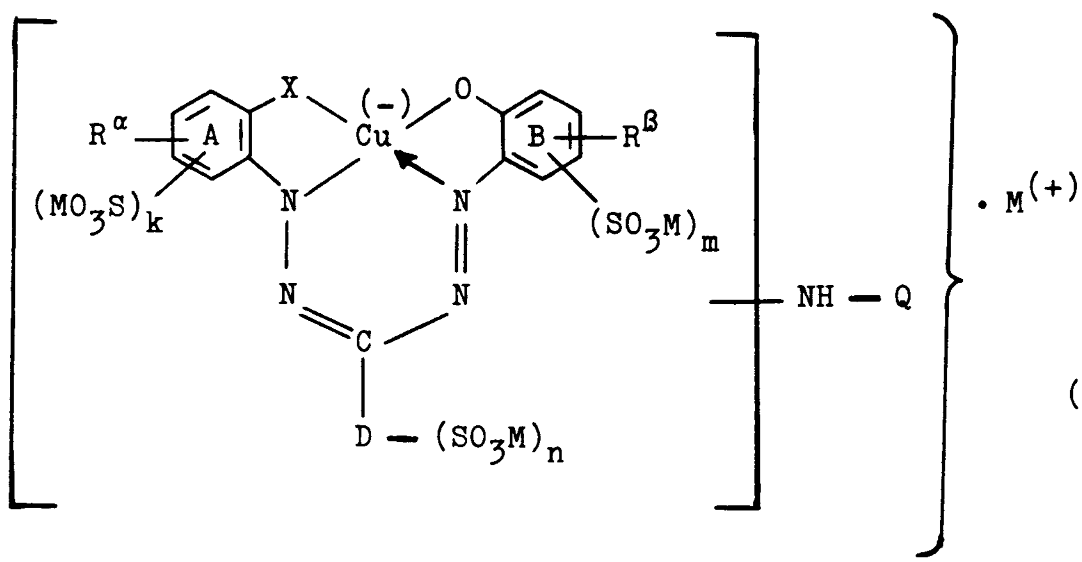

(1a)

entsprechen, worin bedeuten:

- $R^{\alpha}$ ist ein Wasserstoffatom oder die angegebene Gruppe -NH-Q oder eine Methyl-, Methoxy-, Ethoxy- oder Nitrogruppe oder ein Chloratom, bevorzugt eine Gruppe -NH-Q und insbesondere ein Wasserstoffatom;
- $R^{\beta}$ ist ein Wasserstoffatom oder die angegebene Gruppe -NH-Q oder eine Methyl-, Methoxy-, Ethoxy-, Ethylsulfonyl- oder Nitrogruppe oder ein Chloratom, bevorzugt ein Wasserstoffatom und insbesondere eine Gruppe -NH-Q ;
- k ist die Zahl Null, 1 oder 2, bevorzugt Null oder 1,
- m ist die Zahl Null, 1 oder 2, bevorzugt 1 oder 2, und
- n ist die Zahl Null, 1 oder 2, bevorzugt Null oder 1,

wobei die Summe von (k + m + n) gleich 2 oder 3, bevorzugt 2, ist;

M, D, Q und X haben die obengenannten, insbesondere bevorzugten Bedeutungen;

die faserreaktive Gruppierung -NH-Q ist an den Benzolring A oder den Benzolring B oder an ein aromatisches C-Atom eines Benzol- oder Naphthalinringes von D, bevorzugt an A oder B, insbesondere bevorzugt an B gebunden.

Besonders bevorzugt sind weiterhin Verbindungen entsprechend einer allgemeinen Formel (1b) und insbesondere (1c)

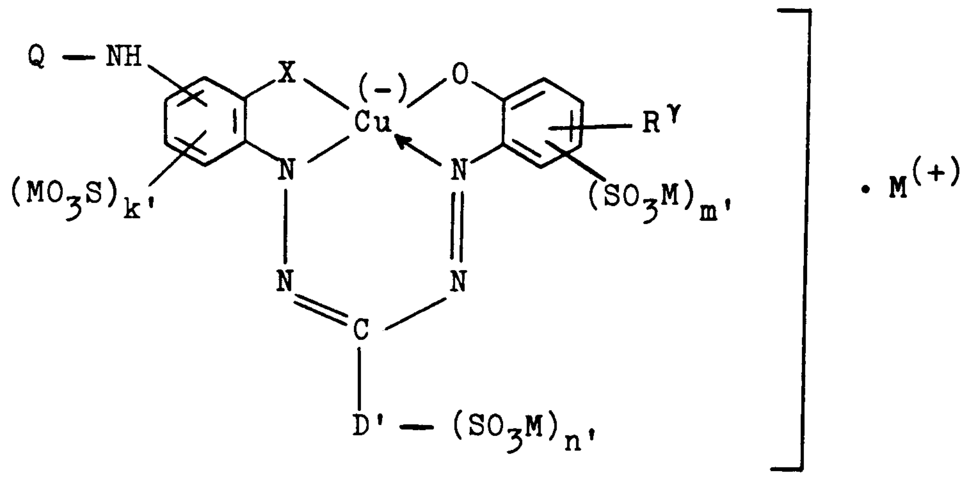

(1b)

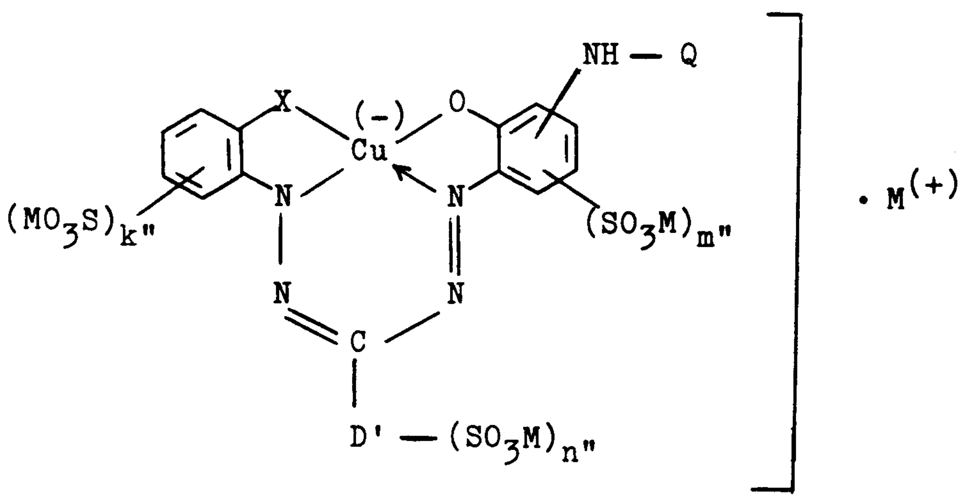

(1c)

in welchen

- k′ die Zahl Null oder 1, bevorzugt Null ist,
- m′ die Zahl 1 oder 2 ist und
- n′ die Zahl Null, 1 oder 2, bevorzugt Null oder 1 bedeutet,

wobei die Summe von (k′ + m′ + n′) gleich 2 oder 3 ist,

- k″ die Zahl Null, 1 oder 2, bevorzugt 1 ist,
- m″ die Zahl Null oder 1, bevorzugt 1 ist,
- n″ die Zahl Null, 1 oder 2, bevorzugt Null oder 1 ist,

wobei die Summe von (k″ + m″ + n″) gleich 2 oder 3, bevorzugt 2, ist,

- $R^{\gamma}$ eine Methoxy-, Ethoxy-, Methyl- oder Ethylsulfonyl-Gruppe oder ein Chloratom oder bevorzugt ein Wasserstoffatom ist,
- D′ eine der für D obengenannten, insbesondere bevorzugten Bedeutungen hat und insbesondere bevorzugt ein Benzolring ist, der neben der Gruppierung $-(SO_3M)_{n'}$ bzw. $-(SO_3M)_{n''}$ durch eine Methoxy-, Ethoxy- oder Methylgruppe oder ein Chloratom substituiert sein kann, und
- M, Q und X die obengenannten, insbesondere bevorzugten, Bedeutungen haben.

In Formel (1b) steht die Gruppe der Formel Q-NH-bevorzugt in para-Stellung zum Stickstoffatom an den Benzolring und in Formel (1c) bevorzugt in ortho-Stellung zum Sauerstoffatom an den Benzolring gebunden.

In Formel (1c) steht eine Sulfogruppe $(MO_3S)_{k''}$- bevorzugt in meta- oder para-Stellung zur Gruppe X und insbesondere bevorzugt in para-Stellung zur Gruppe X, und die Gruppe X ist insbesondere bevorzugt die Carbonyloxygruppe.

Insbesondere bevorzugt sind von den erfindungsgemäßen Verbindungen solche, die der allgemeinen Formel (1d)

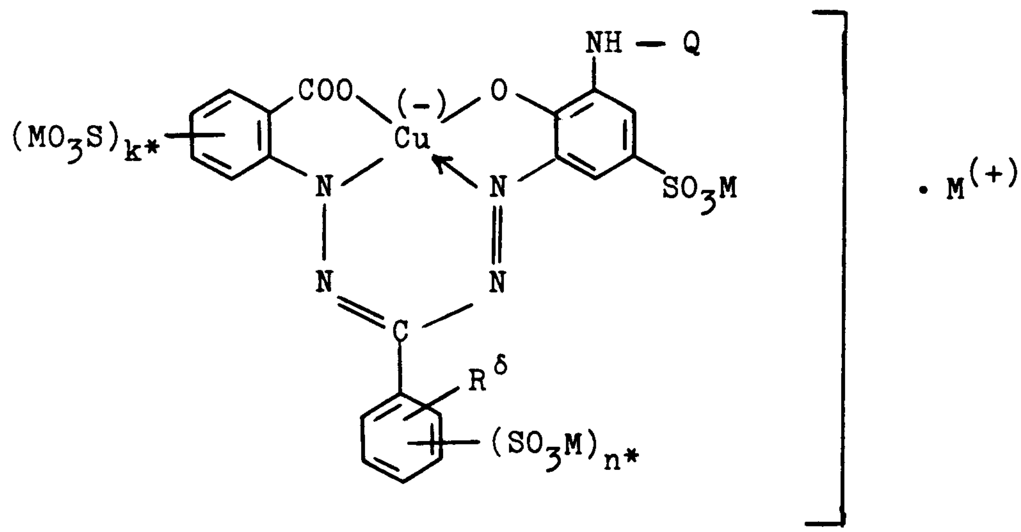

(1d)

entsprechen, in welcher

k* die Zahl Null oder 1, bevorzugt 1 ist und

n* die Zahl Null oder 1, bevorzugt Null ist,

wobei die Summe von (k* + n*) bevorzugt gleich 1 ist,

$R^{\delta}$ ein Wasserstoffatom oder eine Methyl-, Methoxy- oder Ethoxygruppe oder ein Chloratom ist und

M und Q die obengenannten, insbesondere bevorzugten Bedeutungen haben.

In Formel (1d) steht eine Sulfogruppe $(MO_3S)_{k*}$- bevorzugt in meta- oder para-Stellung zur Gruppe X und insbesondere bevorzugt in para-Stellung zur Gruppe X.

In den erfindungsgemäßen Verbindungen der allgemeinen Formel (1), so auch in den bevorzugten Verbindungen der allgemeinen Formeln (1a) bis (1d), ist der Formelrest Q bevorzugt ein Rest der allgemeinen Formel (2a)

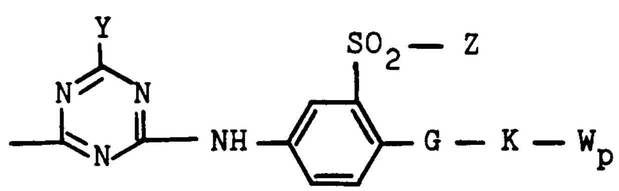

(2a)

in welcher Y, Z, G, K, W und p die obengenannten, insbesondere bevorzugten Bedeutungen besitzen. Bevorzugt ist in Formel (2a) die Gruppe Z eine β-Sulfatoethyl-Gruppe, der Rest G bevorzugt ein Schwefelatom oder eine Gruppe der Formel -NH- oder -N(R')- mit R' gleich Wasserstoff oder Alkyl von 1 bis 4 C-Atomen, wie hiervon insbesondere Methyl und Ethyl, der Formelrest K bevorzugt die Ethylengruppe oder die n-Propylen-Gruppe oder eine Gruppe der Formel $-CH_2-CH_2-O-CH_2-CH_2-$ oder insbesondere bevorzugt eine Gruppe der Formel $-CH_2-CH_2-NH-CO-CH_2-CH_2-$ , der Formelrest W bevorzugt eine Sulfato-, Sulfo- oder Carboxygruppe und p bevorzugt die Zahl 1.

Sofern G für ein Schwefelatom steht, ist K insbesondere bevorzugt die Ethylengruppe und W die Sulfatogruppe mit p gleich 1. Sofern G für eine Aminogruppe der Formel -N(R')-steht, ist K bevorzugt die Ethylen- oder n-Propylen-Gruppe oder die Gruppe $-CH_2-CH_2-O-CH_2-CH_2-$ oder $CH_2-CH_2-NH-CO-CH_2-CH_2-$ und W die Sulfo-, Sulfato- oder Carboxygruppe mit p gleich 1. Insbesondere bevorzugt ist in Formel (2a) der Formelrest $-G-K-W_p$ die (β-Sulfatoethyl)-amino- oder die N-Methyl-N-(β-sulfatoethyl)-amino-Gruppe oder

die N-[β-(β'-Carboxy-ethyl)-carbonamido]-ethyl-amino-Gruppe der Formel $-NH-CH_2-CH_2-NH-CO-CH_2-CH_2-COOM$ mit M der obengenannten Bedeutung.

Besonders hervorgehoben werden können erfindungsgemäße Kupferkomplex-Formazan-Verbindungen, die der allgemeinen Formel (1e)

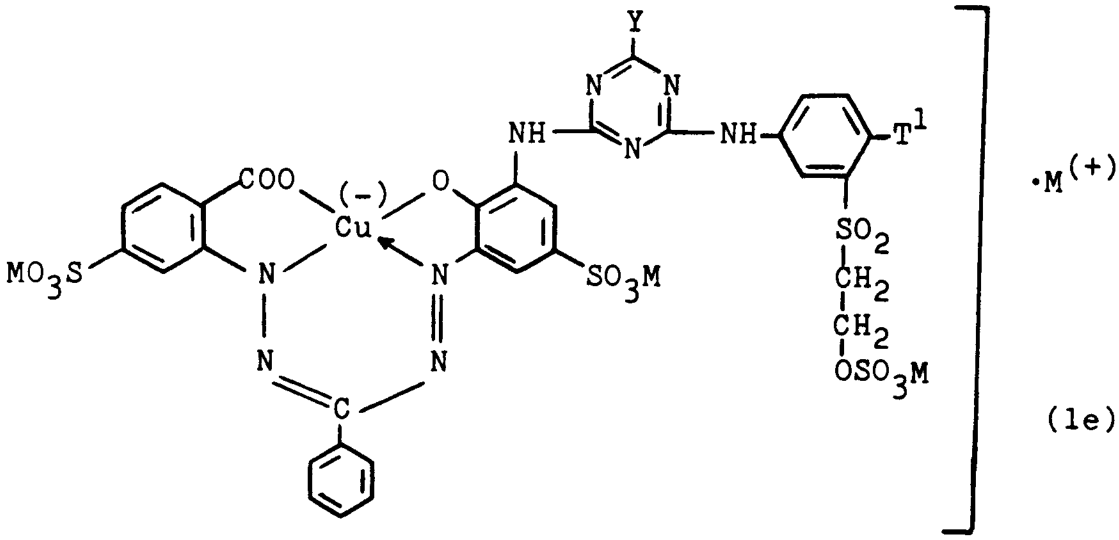

(1e)

entsprechen, in welcher M die obengenannte Bedeutung besitzt, Y ein Chlor- oder Fluoratom bedeutet und $T^1$ für die γ-Sulfatopropyl-amino-, β-Sulfatopropyl-amino- oder die N-[β-(β'-Sulfatoethoxy)-ethyl]-amino-Gruppe oder insbesondere die β-Sulfatoethyl-amino-, N-Methyl-N-(β-sulfatoethyl)-amino-, N-[β-(β'-Carboxy-ethyl)-carbonamido]-ethyl-amino-, β-Sulfoethyl-amino- oder β-Sulfatoethyl-thio-Gruppe steht.

Die vorliegende Erfindung betrifft auch ein Verfahren zur Herstellung der neuen Verbindungen der allgemeinen Formel (1). Dieses ist dadurch gekennzeichnet, daß man Cyanurchlorid oder Cyanurfluorid in beliebiger Reihenfolge mit einer aminogruppenhaltigen Kupferkomplex-Formazanverbindung der allgemeinen Formel (3)

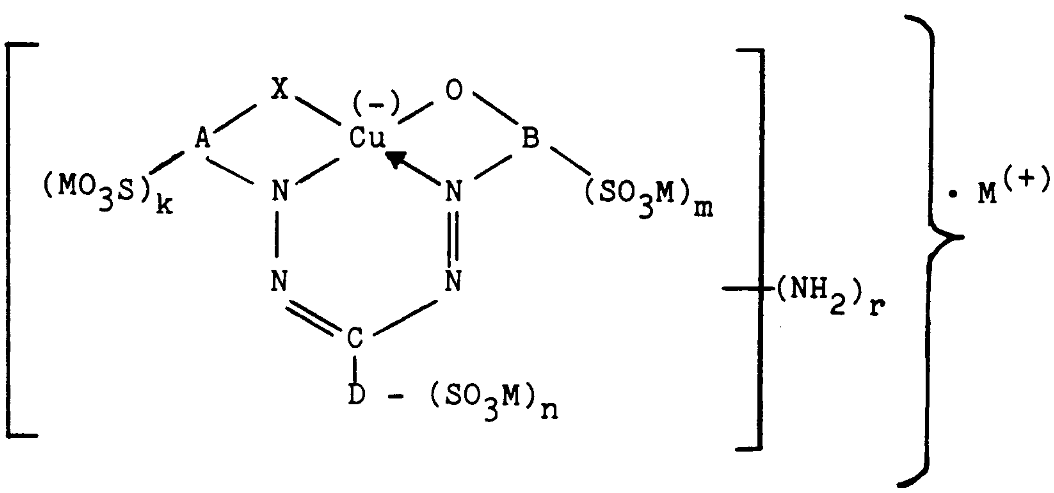

in welcher die einzelnen Formelglieder die für Formel (1) genannten Bedeutungen haben, wobei die Aminogruppe, die ein- oder zweimal im Kupferkomplexformazan-Molekül enthalten ist (r = 1 oder 2), - analog der faserreaktiven Gruppierung -NH-Q in den Verbindungen der Formel (1) - an ein aromatisches C-Atom eines Benzol- oder Naphthalin-Ringes von A oder von B oder von D oder an ein aliphatisches C-Atom von D oder eines Substituenten von A oder B gebunden ist, jedoch im Falle von r = 2 beide Aminogruppen nicht gleichzeitig an A oder an B oder an D gebunden sind,
und mit einer Anilinverbindung der allgemeinen Formel (4)

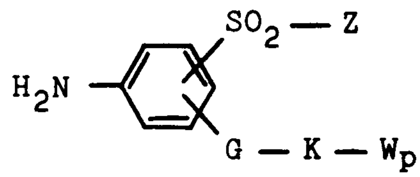

(4)

in welcher G, K, W, p und Z die obengenannten Bedeutungen haben, umsetzt.

Die erfindungsgemäßen Umsetzungen erfolgen in der Regel in wäßrigem Medium bei einem pH-Wert zwischen 2 und 8, vorzugsweise zwischen 3 und 6, und bei einer Reaktionstemperatur zwischen -5° C und +50° C, vorzugsweise zwischen 0 und 40° C. Bevorzugt setzt man bei dem erfindungsgemäßen Verfahren im 1. Reaktionsschritt diejenige Aminoverbindung mit dem Cyanurchlorid oder Cyanurfluorid zum Monokondensationsprodukt um, die die geringere Reaktivität zum Cyanurchlorid bzw. Cyanurfluorid besitzt.

Gemäß den erfindungsgemäßen Verfahrensvarianten des erfindungsgemäßen Herstellungsverfahrens kann man somit zur Herstellung einer erfindungsgemäßen Kupferkomplex-Formazanverbindung eine Dihalogen-triazinylamino-Kupferformazanverbindung der allgemeinen Formel (5)

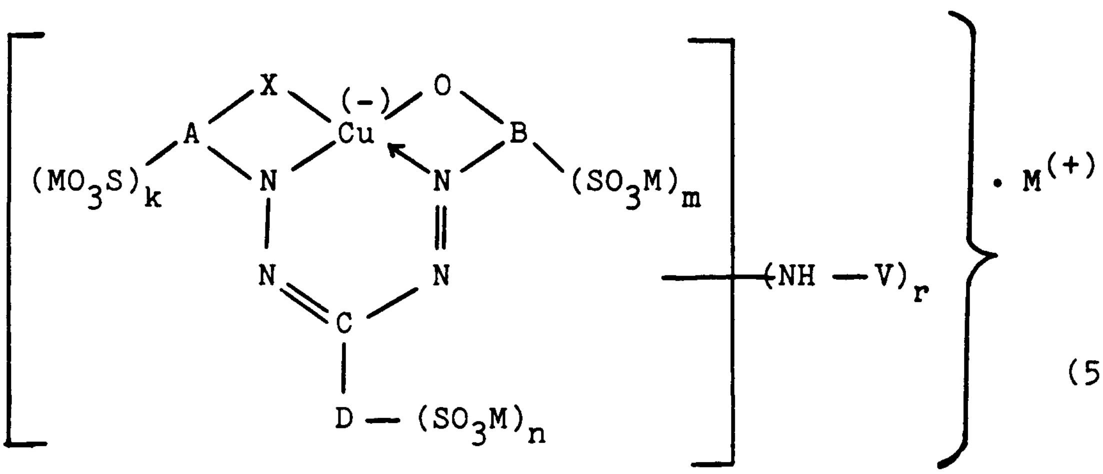

(5)

in welcher V ein Rest der allgemeinen Formel (5a)

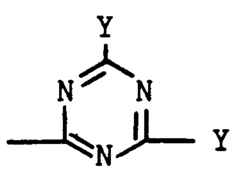

(5a)

ist, worin beide Y die obengenannten Bedeutungen haben, jedoch zueinander gleich sind, und bevorzugt beide Y jedes für ein Fluoratom oder für ein Chloratom stehen und in welcher die anderen Formelglieder die für Formel (1) genannten Bedeutungen haben, wobei die Gruppe -NH-V , die ein- oder zweimal im Kupferkomplexformazan-Molekül enthalten ist, - analog der faserreaktiven Gruppierung -NH-Q in den Verbindungen der Formel (1) - an ein aromatisches C-Atom eines Benzol- oder Naphthalin-Ringes von A oder von B oder von D oder an ein aliphatisches C-Atom von D oder eines Substituenten von A oder B gebunden ist, jedoch beide Gruppen -NH-V im Falle von r = 2 nicht gleichzeitig an A oder an B oder an D gebunden sind,

mit einer Anilinverbindung der oben genannten und definierten allgemeinen Formel (4) umsetzen,

oder eine Dihalogen-triazinylamino-Verbindung der allgemeinen Formel (6)

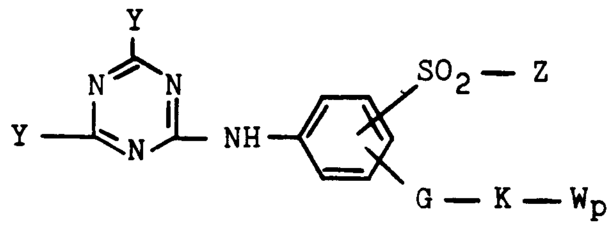

(6)

in welcher beide Y jedes für ein Fluoratom oder für ein Chloratom stehen und G, K, W, p und Z die obengenannten Bedeutungen haben, mit einer Amino-Kupferformazanverbindung der obengenannten und definierten allgemeinen Formel (3) umsetzen.

Die 1. Kondensationsreaktion zum Monokondensatinsprodukt erfolgt bei der Umsetzung mit Cyanurchlorid bevorzugt bei einem pH-Wert von 2 bis 4, insbesondere von 3 bis 4, bei der Umsetzung mit Cyanurfluorid bei einem pH-Wert zwischen 5 und 7, bevorzugt zwischen 5,5 und 6,3, und sowohl bei der Umsetzung mit Cyanurchlorid als auch mit Cyanurfluorid bevorzugt bei einer Reaktionstemperature von -5° C bis +20° C, insbesondere von 0 bis 10 °C. Die 2. Kondensationsreaktion zur erfindungsgemäßen Kupferkomplex-Formazanverbindung erfolgt sodann bevorzugt bei einem pH-Wert von 4 bis 7,5, im Falle der Verwendung von Cyanurchlorid insbesondere bei einem pH-Wert von 4 bis 6 und bevorzugt bei einer Reaktionstemperatur von 20 bis 50° C, insbesondere von 30 bis 40° C, und im Falle der Verwendung von Cyanurfluorid insbesondere bei einem pH-Wert zwischen 5 und 6 und bei einer Temperatur zwischen 5 und 30° C, insbesondere zwischen 10 und 25° C.

Die Amino-Kupferkomplexformazan-Ausgangsverbindungen der allgemeinen Formel (3) sind entweder bekannt, beispielsweise aus den europäischen Patentanmeldungs-Veröffentlichungen Nrs. 0 021 351A und 0 099 721A, der britischen Patentschrift Nr. 1 502 998 und den US-Patentschriften Nrs. 3 627 749, 3 660 393, 4 024 123 und 4 556 706, oder können analog den dortigen Angaben hergestellt werden. So geht man in der Regel von den üblichen Ausgangsverbindungen für den Kupferkomplex-Formazan-Chromophor aus, nämlich von einem Arylhydrazon aus einem Arylhydrazin mit der Arylkomponente A gemäß den für Formel (1) gemachten Angaben und einem Aldehyd $(SO_3M)_n$-D-CHO sowie einem eine phenolische Hydroxygruppe enthaltenden Arylamin mit der Arylkomponente B gemäß den für Formel (1) gemachten Angaben, wobei eine dieser Komponenten - oder im Falle von r = 2 zwei dieser Komponenten - die Aminogruppe, die die Kupferkomplex-Formazan-Ausgangsverbindung der allgemeinen Formel (3) enthalten soll, in Form entweder einer Nitrogruppe oder einer niederen Alkanoylaminogruppe, wie Acetylaminogruppe, oder einer mit einer anderen üblichen Schutzgruppe versehenen Aminogruppe besitzt. Man erhält zunächst eine Kupferkomplex-Formazanverbindung, die der allgemeinen Formel (3) entspricht, die jedoch anstelle der Aminogruppe die Nitrogruppe oder eine Alkanoylaminogruppe, wie Acetylaminogruppe, oder die durch eine andere Schutzgruppe versehene Aminogruppe enthält. Die Nitrogruppe kann sodann in der üblichen Weise zur Aminogruppe reduziert und die mit der Schutzgruppe versehene Aminogruppe, wie Alkanoylaminogruppe, durch Hydrolyse, vorzugsweise alkalische Hydrolyse, analog bekannten Verfahrensweisen in die Aminogruppe und somit in die Amino-Ausgangsverbindung der allgemeinen Formel (3) übergeführt werden. Die Arylhydrazine erhält man in altbekannter Weise über den Weg der Reduktion der Diazoniumsalze der entsprechenden Arylamine der Arylkomponente B. Solche Verfahrensweise sind aus den obengenannten Druckschriften bekannt.

Arylaminoverbindungen mit der Arylkomponente B und der daran gebundenen phenolischen Gruppe, die als Ausgangskomponenten zur Herstellung des Ausgangs-Kupferkomplexformazan-Chromophors durch Umsetzung mit einem entsprechenden Arylhydrazon und einem üblichen kupferabgebenden Mittel dienen und die gegebenenfalls die Nitrogruppe oder eine mit einer Schutzgruppe versehene Aminogruppe enthalten, sind beispielsweise 2-Amino-phenol, 4-Methyl-2-amino-phenol, 5-Methyl-2-amino-phenol, 4-Sulfo-2-amino-phenol, 5-Sulfo-2-amino-phenol, 4-Sulfo-6-carboxy-2-amino-phenol, 4-Methoxy-2-amino-phenol, 5-Methylsulfonyl-2-amino-phenol, 4-(N-Methyl-sulfamoyl)-2-amino-phenol, 4-(N,N-Dimethyl-sulfamoyl)-2-amino-phenol, 5-Nitro-2-amino-phenol, 4-Brom-2-amino-phenol, 4,6-Disulfo-2-amino-phenol, 4-Sulfo-6-acetylamino-2-amino-phenol, 6-Nitro-4-sulfo-2-amino-phenol, 4-Nitro-6-sulfo-2-amino-phenol, 4-Acetylamino-6-sulfo-2-amino-phenol, 4-Chlor-6-sulfo-2-amino-phenol, 6-Chlor-4-sulfo-2-amino-phenol, 4-Methylsulfonyl-2-amino-phenol, 4-Butylsulfonyl-2-amino-phenol, 4-Ethylsulfonyl-2-amino-phenol, 4-Ethylsulfonyl-6-sulfo-2-amino-phenol, 2-Sulfamoyl-2-amino-phenol, 1-Amino-2-hydroxy-naphthalin-4,6-disulfonsäure, 1-Amino-2-hydroxy-6-nitro-naphthalin-4-sulfonsäure, 1-Amino-2-hydroxy-6-chlor-naphthalin-4-sulfonsäure und 4-Methyl-6-sulfo-2-amino-phenol.

Ausgangs-Arylamine mit der Arylkomponente A, die zur Herstellung des Kupferkomplex-Formazan-Ausgangschromophors dienen und gegebenenfalls die Nitrogruppe oder eine mit einer Schutzgruppe versehene Aminogruppe enthalten und zunächst durch Diazotierung und Reduktion mittels Natriumsulfit in die Arylhydrazin-Derivate übergeführt werden und nach deren Umsetzung mit der Aldehydkomponente als Arylhydrazon mit einem üblichen kupferabgebenden Mittel und der Arylamin-Komponente B umgesetzt werden, sind beispielsweise 2-Amino-phenol, 4-Methyl-2-amino-phenol, 5-Methyl-2-amino-phenol, 4-Sulfo-2-amino-phenol, 5-Sulfo-2-amino-phenol, 4-Sulfo-6-carboxy-2-amino-phenol, 4-Methoxy-2-amino-phenol, 5-Methylsulfonyl-2-amino-phenol, 4-(N-Methyl-sulfamoyl)-2-amino-phenol, 4-(N,N-Dimethyl-sulfamoyl)-2-amino-phenol, 5-Nitro-2-amino-phenol, 4-Brom-2-amino-phenol, 4,6-Disulfo-2-amino-phenol, 4-Sulfo-6-acetylamino-2-amino-phenol, 6-Nitro-4-sulfo-2-amino-phenol, 4-Nitro-6-sulfo-2-amino-phenol, 4-Acetyl-amino-6-sulfo-2-amino-phenol, 4-Chlor-6-sulfo-2-amino-phenol, 6-Chlor-4-sulfo-2-amino-phenol, 4-Methylsulfonyl-2-amino-phenol, 4-Butylsulfonyl-2-amino-phenol, 4-Ethylsulfonyl-2-amino-phenyl, 4-Sulfamoyl-2-amino-phenol, 1-Amino-2-hydroxy-naphthalin-4,6-disulfonsäure, 1-Amino-2-hydroxy-6-nitro-naphthalin-4-sulfonsäure, 1-Amino-2-hydroxy-6-chlor-naphtalin-4-sulfonsäure, 4-Methyl-6-sulfo-2-amino-phenol, 2-Amino-benzoesäure, 4-Sulfo-2-amino-benzoesäure, 5-Sulfo-2-amino-benzoesäure, 5-Nitro-2-amino-benzoesäure, 4-Chlor-2-amino-benzoesäure, 5-Chlor-2-amino-benzoesäure, 4-Methoxy-2-amino-benzoesäure, 4-Acetyl-amino-2-amino-benzoesäure, 5-Acetylamino-2-amino-benzoesäure, 2,5-Dicarboxy-anilin und 2,5-Disulfo-anilin.

Aldehydkomponenten zur Synthese des Kupferkomplex-Formazan-Ausgangschromophors, die gegebenenfalls die Nitrogruppe oder die mit einer Schutzgruppe versehene Aminogruppe enthalten, sind beispielsweise Benzaldehyd, 2-Methylbenzaldehyd, 3-Methyl-benzaldehyd, 4-Methyl-benzaldehyd, 3-Sulfo-4-methyl-benzaldehyd, 2-Methoxy-benzaldehyd, 3-Methoxybenzaldehyd, 4-Methoxy-benzaldehyd, 4-Methoxy-3-chlor-benzaldehyd, 2-Nitro-benzaldehyd, 3-Nitro-benzaldehyd, 2-Hydroxy-benzaldehyd, 2-Chlor-benzaldehyd, 4-Chlor-benzaldehyd, 2,4-Dichlor-benzaldehyd, 5-Sulfo-2-chlor benzaldehyd, 2-Sulfo-benzaldehyd, 3-Sulfo-benzaldehyd, 4-Sulfo-benzaldehyd, 2,4-Disulfo-benzaldehyd, 2-Acetylamino-benzaldehyd, 4-Acetylamino-benzaldehyd, 3-Aminobenzaldehyd, 2-Sulfo-4-nitro-benzaldehyd, 2-Nitro-3-methyl-benzaldehyd, 6-Nitro-3-methyl-benzaldehyd, 2-Chlor-6-nitro-benzaldehyd, 1-Naphthaldehyd, 2-Naphthaldehyd, Furan-2-aldehyd, Thiophen-2-aldehyd, Pyrrol-2-aldehyd, Imidazol-2-aldehyd, Pyrazol-5-aldehyd, Pyridin-2-aldehyd, Pyridin-3-aldehyd, Pyridin-4-aldehyd, Pyrimidin-5-aldehyd, Chinolin-4-aldehyd, Benzimidazol-2-aldehyd, Acetaldehyd, Propionaldehyd, n-Butyraldehyd, Oenanthaldehyd, Acrylaldehyd, Crotonaldehyd, Phenacetaldehyd oder Zimtaldehyd.

Ausgangs-Anilinverbindungen entsprechend der allgemeinen Formel (4) sind beispielsweise aus den europäischen Patentanmeldungs-Veröffentlichungen Nrs. 0 153 599A, 0 171 611A und 0 197 418A bekannt oder können analog den dortigen Angaben hergestellt werden, beispielsweise auch aus den entsprechenden Anilinverbindungen der allgemeinen Formel (4a)

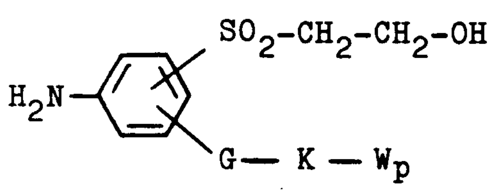

(4a)

in welcher G, K, W und p die obengenannten Bedeutungen haben, analog bekannten Verfahrensweisen durch Umsetzung mit üblichen Sulfatierungs- oder Phosphatierungsmitteln oder mit einem anderen Veresterungs- oder Acylierungsmittel, wie einem Anhydrid einer Alkancarbonsäure oder einem Carbonsäurechlorid einer aromatischen Carbonsäure oder Sulfochlorid einer aromatischen Sulfonsäure, wodurch man die entsprechenden $\beta$-Sulfato-ethylsulfonyl- bzw. $\beta$-Phosphatoethylsulfonyl-Derivate bzw. die entsprechenden $\beta$-Acyloxy-ethylsulfonyl-Derivate mit dem Acylrest einer Carbon- oder Sulfonsäure gemäß Formel (4) erhält. Aus der $\beta$-Sulfatoethylsulfonyl-Verbindung entsprechend der allgemeinen Formel (4) beispielsweise kann sodann in an und für sich bekannter Verfahrensweise deren Vinylsulfonyl-Verbindung gewonnen werden, die wiederum in andere Verbindungen der allgemeinen Formel (4) mit einer $\beta$-substituierten Ethylsulfonylgruppe, wie beispielsweise der $\beta$-Thiosulfatoethylsulfonyl-Gruppe, übergeführt werden kann.

Anilinverbindungen der allgemeinen Formel (4) sind beispielsweise 3-($\beta$-Sulfatoethylsulfonyl)-4-N-($\beta$-sulfatoethyl)-amino-anilin, 3-($\beta$-Thiosulfatoethylsulfonyl)-4-N-($\beta$-thiosulfatoethyl)-amino-anilin, 3-($\beta$-Phosphatoethylsulfonyl)-4-N-($\beta$-phosphatoethyl)-amino-anilin, 3-($\beta$-Sulfato-ethylsulfonyl)-4-N-($\gamma$-sulfato-n-)-amino-anilin, 3-($\beta$-Sulfatoethylsulfonyl)-N-($\omega$-sulfato-n-hexyl)-amino-anilin, 3-($\beta$-Sulfatoethylsulfonyl)-4-($\beta$-sulfatoethyl)-thio-anilin, 3-($\beta$-Sulfatoethylsulfonyl)-N-($\beta$-sulfoethyl)-amino-anilin, 3-($\beta$-Sulfatoethylsulfonyl)-4-[N-methyl-N-(β-sulfo-ethyl)]-amino-anilin, 3-(β-Sulfatoethylsulfonyl)-4-[N-methyl-N-(β-sulfatoethyl)]-amino-anilin, 3-(β-Sulfatoethylsulfonyl)-4-[β-(β'-sulfato-ethoxy)-ethyl]-amino-anilin, 3-(β-Sulfatoethylsulfonyl)-4-N-(α,β-disulfato-n-propyl)-amino-anilin, 3-(β-Sulfatoethylsulfonyl)-4-N-(carboxymethyl)-amino-anilin, 3-(β-Sulfatoethylsulfonyl)-4-N-(β-carboxyethyl)-amino-anilin, 3-(β-Sulfatoethylsulfonyl)-4-N-[β-(β'-sulfatoethyl-amino)-ethyl]-amino-anilin, 3-(β-Sulfatoethylsulfonyl)-4-N-{β-[N'-methyl-N'-(β'-sulfatoethyl)-amino]-ethyl]-amino-anilin, 3-(β-Sulfatoethyl-sulfonyl)-4-N-[β-(β'-carboxy-propionylamido)-ethyl]-amino-anilin, 3-(β-Sulfatoethylsulfonyl)-4-N-[β-(sulfo-acetamido)-ethyl]-amino-anilin und 3-(β-Sulfatoethylsulfonyl)-4-N-[β-(4'-sulfo-phenyl)-ethyl]-amino-anilin.

Die Abscheidung der erfindungsgemäß hergestellten Kupferkomplex-Formazanverbindungen der allgemeinen Formel (1) aus ihren Syntheseansätzen erfolgt nach allgemein bekannten Methoden entweder durch Ausfällen aus dem Reaktionsmedium mittels einem Elektrolytsalz, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz und/oder ein Lösungsvermittler zugefügt werden kann. Die neuen Verbindungen (1) haben faserreaktive Eigenschaften und besitzen sehr gute Farbstoffeigenschaften. Sie können deshalb zum Färben von hydroxy- und/oder carbonamidgruppenhaltigem Material, beispielsweise in Form von Flächengebilden, wie Folien und Papier, wie auch Leder, oder in der Masse, wie Polyamid und Polyurethan, insbesondere jedoch von Materialien in Faserform, verwendet werden. Ebenso können die bei der Synthese der erfindungsgemäßen Verbindungen anfallende Lösungen, gegebenenfalls nach Zusatz einer Puffersubstanz und/oder eines Lösungsvermittlers und gegebenenfalls nach Konzentrierung der Lösung direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich der Massefärbung und des Bedrukkens) dieser Materialien bzw. Verfahren zum Färben solcher Materialien in an und für sich üblicher Verfahrensweise, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratoprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11und Polyamid-4.

Die erfindungsgemäßen Verbindungen der Formel (1) lassen sich auf den genannten Substraten, insbesondere auf den genannten Fasermaterialien, nach den für wasserlösliche Farbstoffe, insbesondere für faserreaktive Farbstoffe bekannten Anwendungstechniken applizieren und fixieren.

So erhält man mit ihnen auf Cellulosefasern nach den Ausziehverfahren aus langer Flotte under Verwendung von verschiedensten säurebindenden Mitteln und gegebenenfalls neutralen Salzen, wie beispielsweise Natriumchlorid oder Natriumsulfat, sehr gute Farbausbeuten. Man färbt bei Temperaturen zwischen 60 und 100 °C, gegebenenfalls bei Temperaturen bis zu 120 °C unter Druck, gegebenenfalls in Gegenwart von üblichen Färbereihilfsmitteln, in wäßrigem Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eingentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise in Anwesenheit von Natriumbicarbonat oder anderer säurebindender Mittel in der die Verbindung der Formel (1) enthaltenden Druckpaste und anschließendes Dämpfen des bedruckten Materials bei 101 bis 103 °C, oder zweiphasig, beispielsweise durch Bedrucken mit einer neutralen oder schwach sauren, die Verbindung der Formel (1) enthaltenden Druckfarbe und Fixierung durch Hindurchführen durch ein heißes elektrolythaltiges alkalisches Bad oder durch Überklotzen mit einer alkalischen elektrolythaltigen Klotzflotte und anschließendem Verweilen dieses behandelten Materials oder anschließendem Dämpfen oder anschließender Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen

Verbindungen erhaltenen Fixiergrade sehr hoch.

Bei der Fixierung mittels Trockenhitze nach den üblichen Thermofixierverfahren verwendet man Heißluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Farbstoffe auf Cellulosefasern bewirkenden Mittel sind beispielsweise wasserlösliche basische Salze der Alkalimetalle oder Erdalkalimetalle von anorganischen oder organischen Säuren oder Verbindungen, die in der Hitze Alkali freisetzen, und insbesondere die Alkalimetallhydroxide und Alkalimetallsalze von schwachen bis mittelstarken anorganischen oder organischen Säuren, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natrium-trichloracetat, Wasserglas und Trinatriumphosphat.

Durch die Behandlung der erfindungsgemäßen Verbindungen mit den säurebindenden Mitteln, gegebenenfalls unter Wäremeeinwirkung, werden die erfindungsgemäßen Verbindungen (Farbstoffe) chemisch an die Cellulosefaser gebunden; die Cellulosefärbungen zeigen nach der üblichen Nachbehandlung durch Spülen zur Entfernung von nicht fixierten Farbstoffanteilen ausgezeichnete Naßechtheiten.

Für das coloristische Verhalten der erfindungsgemäßen Verbindungen ist besonders hervorzuheben, daß sie sich durch gute Stabilität in Druckpasten und Klotzflotten, auch in Anwesenheit von Alkali, durch ein sehr gutes Ziehvermögen aus langer Flotte, durch guten Farbaufbau nach den üblichen Färbe- und Druckverfahren, durch eine gleiche Farbtiefe beim Färben auf Baumwolle und Regeneratcellulosefasern, durch ein egales Warenbild der mit ihnen hergestellten Färbungen und Drucke und ebenfalls durch einen gleichmäßigen Ausfall der Färbungen aus langer Flotte bei Zugabe verschiedener Mengen an Elektrolyten auszeichnen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das zuerst schwach alkalisch eingestellte Bad eingebracht, dort einige Zeit darin bewegt, das Färbebad dann auf einen schwach sauren, vorzugsweise schwach essigsauren, pH-Wert eingestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den erfindungsgemäßen Verbindungen hergestellten Färbungen und Drucke zeichnen sich durch reine, vorwiegend blaue Farbtöne aus. Insbesondere die Färbungen und Drucke auf Cellulosefasermaterialien besitzen eine hohe Farbstärke sowie gute bis sehr gute Gebrauchs- und Fabrikationsechtheiten, wie eine sehr gute Licht-, Schweißlicht-, Naßlicht- und Reibechtheit und vorzügliche Naßechtheiten, wie Wasch-, Chlorbadewasser-, Chlorbleich-, Meerwasser-, Walk-, Alkali-, Säurelager-, Peroxid- und Schweißechtheit, weiterhin eine gute Bügel- und eine gute Trockenreinigungsechtheit und gute Stabilität des Komplexes gegen Eisen. Nicht fixierte Anteile an Farbstoff lassen sich leicht und vollständig wieder aus dem Fasermaterial auswaschen, was eine wesentliche Voraussetzung für die guten Naßechtheiten der erhältlichen Färbungen ist. Desweiteren sind die Färbungen gegen die üblichen Kunstharzappreturen stabil. Die erfindungsgemäßen Verbindungen (Farbstoffe) erreichen teils den üblichen Anthrachinonstandard bezüglich der Reinheit des Farbtones und haben darüber hinaus den Vorteil der sehr viel leichteren Ätzbarkeit gegenüber den erwähnten Anthrachinonfarbstoffen.

Die nachstehenden Beispiele dienen zur Erläuterung der Erfindung. Die formelmäßig beschriebenen Verbindungen sind in Form der freien Säuren angegeben. Im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Die in den Beispielen genannten Teile sind Gewichtsteile und die Prozentangaben stellen Gewichtsprozente dar, sofern nicht anders vermerkt. Gewichtsteile stehen zu Volumenteilen im Verhältnis von Kilogramm zu Litern.

Die in den Beispielen für die erfindungsgemäßen Kupferkomplex-Formazanverbindungen angegebenen $\lambda_{max}$-Werte stellen die Absorptionsmaxima im sichtbaren Bereich, gemessen an den Alkalimetallsalzen der

erfindungsgemäßen Verbindungen (1) in wäßriger Lösung, dar.

**Beispiel 1**

a) eine wäßrige, neutrale Lösung des Natriumsalzes von 32,0 Teilen des Hydrazons aus 2-Carboxy-5-sulfophenylhydrazin und Benzaldehyd in etwa 160 Teilen Wasser gibt man unter Rühren bei 5 bis 15°C mit einer durch übliche Diazotierung erhaltenen wäßrigen Lösung des Diazoniumsalzes aus 24,6 Teilen 6-Acetylamino-4-sulfo-2-aminophenol zusammen, gibt sodann 25,0 Teile Kupfersulfat-pentahydrat hinzu und hält einen pH-Wert von 5 mittels Natriumcarbonat. Man rührt den Reaktionsansatz bei 15 bis 25°C noch nach, bis keine Diazoniumverbindung mehr nachweisbar ist.

b) In der unter a) synthetisierten Kupferkomplex-Formazanverbindung wird die Acetylaminogruppe zur Aminogruppe direkt in der Syntheselösung nach Zugabe einer 6- bis 10-fach molaren Menge einer konzentrierten wäßrigen Natronlauge bei einer Temperatur zwischen 90 und 100°C während etwa 10 Stunden hydrolysiert (die Acetylamino-Kupferformazanverbindung kann auch zuvor aus der Syntheselösung mittels Natriumchlorid ausgesalzen und isoliert und sodann in etwa 3%iger wäßriger Natronlauge hydrolisiert werden). Die erhaltene aminogruppenhaltige Kupferkomplex-Formazanverbindung kann nach Rückstellung des pH auf einen Wert von etwa 4 durch Aussalzen mit Natriumchlorid isoliert werden.

c) Bevorzugt geht man von der Syntheselösung von b) mit dem pH-Wert von 4 zur weiteren Umsetzung der Amino-Kupferkomplexformazanverbindung aus, indem man die Lösung unter gutem Rühren bei einer Temperatur von 0 bis 5°C und einem pH-Wert zwischen 3 und 4, der mittels einer wäßrigen Natriumcarbonatlösung eingehalten wird, mit 16,6 Teilen Cyanurchlorid zur 2,4-Dichlor-s-triazin-6-ylamino-Kupferkomplexformazanverbindung innerhalb von 3 bis 4 Stunden umsetzt.

d) Zu der Syntheselösung von c) gibt man eine wäßrige Lösung des Natriumsalzes von 40 Teilen 3-(β-Sulfatoethylsulfonyl)-4-N-(β-sulfatoethyl)-amino-anilin, erwärmt auf 30 bis 40°C und hält mittels einer wäßrigen Natriumcarbonatlösung einen pH-Wert von 4 bis 5 ein, bis die Umsetzung beendet ist. Die erhaltene Syntheselösung wird sodann bei 40 bis 50°C geklärt und die synthetisierte erfindungsgemäße Verbindung aus dem Filtrat durch Zugabe von Natriumchlorid oder Kaliumchlorid oder - gegebenenfalls nach vorheriger Behandlung mit Oxalsäure - durch Eindampfen oder Sprühtrocknung isoliert.

Es wird das Alkalimetallsalz (Natrium- oder Kaliumsalz) der Verbindung der Formel

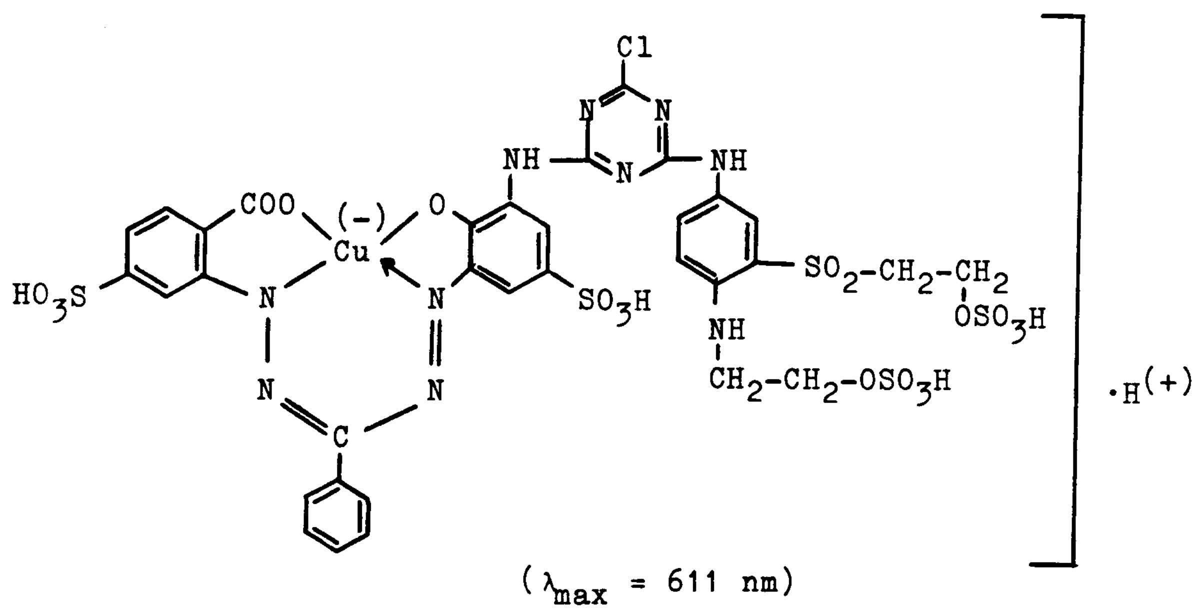

($\lambda_{max}$ = 611 nm)

als elektrolytsalzhaltiges dunkles Pulver erhalten. Die erfindungsgemäße Verbindung zeigt sehr gute Farbstoffeigenschaften und färbt die in der Beschreibung genannten Materialien in blauen Farbtönen mit schwach rotstichiger Nuance. Insbesondere Cellulosefasermaterialien, wie Baumwolle und ebenso regenierte Cellulosefasermaterialien, werden gemäß den in der Technik für faserreaktive Farbstoffe üblichen Applikations- und Fixiermethoden, so beispielsweise aus wäßriger, langer Flotte bei 70°C in Gegenwart eines säurebindenden Mittels in farbstarken Tönen gefärbt. Nach der üblichen Nachbehandlung, beispielsweise durch 10-minütiges Seifen und Spülen mit Wasser, zeichnen sich die erfindungsgemäß erhaltenen

Färbungen durch sehr gute Lichtechtheiten in trockenen sowie in mit Trinkwaser oder einer alkalischen oder sauren Schweißlösung befeuchtetem Zustand, desweiteren durch vorzügliche Naßechtheiten, wie Wasch-, Chlorbadewasser-, Chlorbleich-, Alkali-, Schweiß-und Peroxid-Echtheiten, aus. Desweiteren zeigen sie eine gute Säurelagerstabilität.

**Beispiel 2**

a) Man suspendiert 18,4 Teile Cyanurchlorid, gegebenenfalls unter Zugabe eines nicht-ionischen Hilfsmittels, in einem Gemisch aus 50 Teilen Wasser und 50 Teilen Eis, gibt sodann unter Einhaltung einer Temperatur von 0 bis 5° C und eines pH-Wertes von etwa 2 innerhalb einer Stunde eine wäßrige Lösung des Natriumsalzes von 42,0 Teilen 3-(β-Sulfatoethylsulfonyl)-4-N-(β-sulfatoethyl)-amino-anilin hinzu und rührt noch einige Zeit nach, bis kein freies Cyanurchlorid mehr nachweisbar ist.

b) Zu der nach a) erhaltenen und gegebenenfalls geklärten Lösung des Monokondensationsproduktes aus Cyanurchlorid und der Anilinverbindung gibt man eine gemäß Beispiel 1a) bis c) hergestellte wäßrige, auf einen pH-Wert von 5 eingestellte Suspension der Amino-Kupferkomplexformazanverbindung, erwärmt den Ansatz auf 30 bis 40° C und hält ihn bei dieser Temperatur bei einem pH-Wert von 5 bis 6 mittels wäßriger 10%iger Natriumcarbonatlösung, bis die Kondensationsreaktion der Dichlortriazinylaminoverbindung mit der Aminogruppe der Kupferkomplex-Formazanverbindung beendet ist.

Die erhaltene erfindungsgemäße Verbindung ist mit der des Beispieles 1 identisch und besitzt die dort beschriebenen guten faserreaktiven Farbstoffeigenschaften.

**Beispiele 3a bis 7h**

In den nachfolgenden Tabellenbeispielen sind weitere erfindungsgemäße Kupferkomplexformazanverbindungen mit Hilfe der allgemeinen Formel (A)

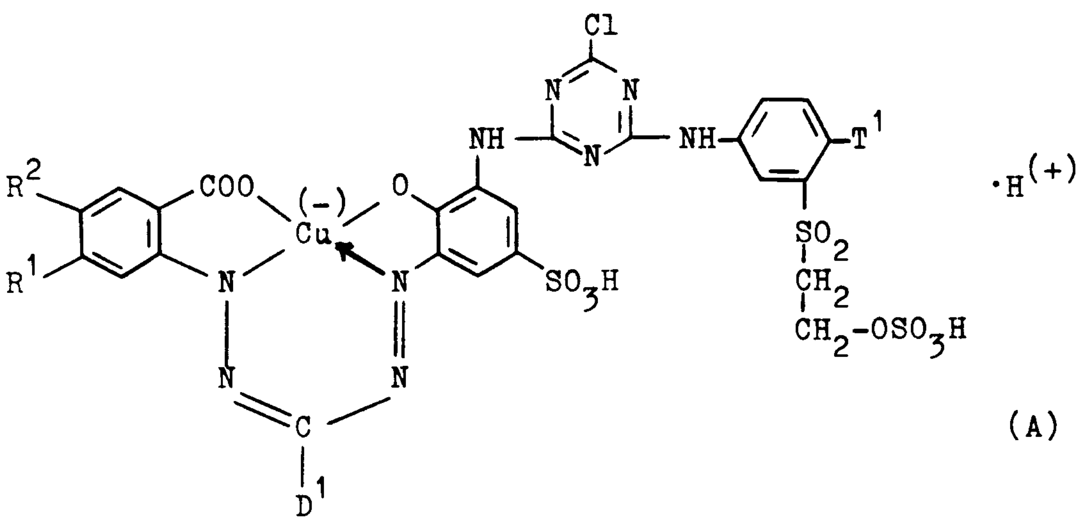

(A)

beschrieben. Sie lassen sich in erfindungsgemäßer Weise, beispielsweise analog den Ausführungsbeispielen 1 und 2, mit Hilfe der aus Formel (A) und den aus dem jeweiligen Tabellenbeispiel ersichtlichen Komponenten (Cyanurchlorid, 2-Carboxy-5-sulfo- oder -4-sulfo-phenylhydrazin, dem Benzaldehyd entsprechend einer allgemeinen Formel $D^1$-CHO, dem in Beispiel 1 angegebenen Aminophenol und einer Anilinverbindung entsprechend der allgemeinen Formel (3a)

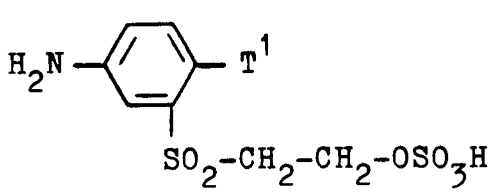

(3a)

mit $T^1$ der in dem jeweiligen Tabellenbeispiel angegebenen Bedeutung) herstellen. Sie besitzen ebenfalls sehr gute faserreaktive Farbstoffeigenschaften und liefern nach den für faserreaktive Farbstoffe üblichen Färbe- und Druckverfahren, insbesondere auf Cellulosefasermaterialien, farbstarke echte Färbungen und Drucke mit dem in dem jeweiligen Tabellenbeispiel angegebenen Farbton auf Baumwolle.

| Bsp. | Verbindungen entsprechend Formel (A) $R^1$ | $R^2$ | Rest $D^1$ | Aminorest $T^1$ | Farbton ($\lambda_{max}$) |
|---|---|---|---|---|---|
| 3a | Sulfo | H | Phenyl | N-Methyl-N-(ß-sulfatoethyl)-amino | blau (611) |
| 3b | Sulfo | H | Phenyl | N-(γ-Sulfato-n-propyl)-amino | blau (611) |
| 3c | Sulfo | H | Phenyl | N-(ß-Sulfato-n-propyl)-amino | blau (611) |
| 3d | Sulfo | H | Phenyl | N-[(ß-Sulfato-α-methyl)-ethyl]-amino | blau |
| 3e | Sulfo | H | Phenyl | N-[(ß-Sulfato-α-ethyl)-ethyl]-amino | blau |
| 3f | Sulfo | H | Phenyl | N-(δ-Sulfato-n-butyl)-amino | blau |
| 3g | Sulfo | H | Phenyl | N-(ß-Sulfoethyl)-amino | blau (611) |
| 3h | Sulfo | H | Phenyl | N-Methyl-N-(ß-sulfo-ethyl)-amino | blau |
| 3j | Sulfo | H | Phenyl | N-[ß-(ß'-Sulfato-ethoxy)-ethyl]-amino | blau (611) |
| 3k | Sulfo | H | Phenyl | N-[ß-(ß'-Sulfato-ethylamino)-ethyl]-amino | blau |
| 3m | Sulfo | H | Phenyl | N-{ß-[N'-Methyl-N'-(ß'-sulfatoethyl)-amino]-ethyl}-amino | blau |
| 3n | Sulfo | H | Phenyl | N-(Carboxymethyl)-amino | blau |
| 3p | Sulfo | H | Phenyl | N-[ß-(ß'-Carboxy-ethyl)-carbonamido]-ethyl-amino | blau (611) |
| 3q | Sulfo | H | Phenyl | ß-Sulfatoethyl-thio | blau (611) |
| 4a | Sulfo | H | 4-Chlor-phenyl | N-(ß-Sulfatoethyl)-amino | blau (611) |
| 4b | Sulfo | H | 4-Methyl-phenyl | dito | blau |
| 4c | Sulfo | H | 3-Methoxy-phenyl | dito | blau |
| 4d | Sulfo | H | 4-Methoxy-phenyl | dito | grünst. blau |

| Bsp. | Verbindungen entsprechend Formel (A) $R^1$ | $R^2$ | Rest $D^1$ | Aminorest $T^1$ | Farbton ($\lambda_{max}$) |
|---|---|---|---|---|---|
| 4e | Sulfo | H | 4-Sulfo-phenyl | dito | blau |
| 4f | Sulfo | H | 3-Sulfo-phenyl | dito | blau |
| 4g | Sulfo | H | 2-Chlor-5-sulfo-phenyl | dito | rotst. blau |
| 5a | H | Sulfo | Phenyl | N-(ß-Sulfatoethyl)-amino | blau (617) |
| 5b | H | Sulfo | Phenyl | N-Methyl-N-(ß-sulfatoethyl)-amino | blau (617) |
| 5c | H | Sulfo | Phenyl | N-(γ-Sulfato-n-propyl)-amino | blau (617) |
| 5d | H | Sulfo | Phenyl | N-(ß-Sulfato-n-propyl)-amino | blau |
| 5e | H | Sulfo | Phenyl | N-[(ß-Sulfato-α-methyl)-ethyl]-amino | blau |
| 5f | H | Sulfo | Phenyl | N-[(ß-Sulfato-α-ethyl)-ethyl]-amino | blau |
| 5g | H | Sulfo | Phenyl | N-(δ-Sulfato-n-butyl)-amino | blau |
| 5h | H | Sulfo | Phenyl | N-(ß-Sulfoethyl)-amino | blau (617) |
| 5j | H | Sulfo | Phenyl | N-Methyl-N-(ß-sulfo-ethyl)-amino | blau |
| 5k | H | Sulfo | Phenyl | N-[ß-(ß'-Sulfato-ethoxy)-ethyl]-amino | blau |
| 5m | H | Sulfo | Phenyl | N-[ß-(ß'-Sulfato-ethylamino)-ethyl]-amino | blau |
| 5n | H | Sulfo | Phenyl | N-{ß-[N'-Methyl-N'-(ß'-sulfatoethyl)-amino]-ethyl}-amino | blau |
| 5q | H | Sulfo | Phenyl | N-(Carboxymethyl)-amino | blau |
| 5r | H | Sulfo | Phenyl | N-[ß-(ß'-Carboxy-ethyl)-carbonamido]-ethyl-amino | blau (617) |
| 5s | H | Sulfo | Phenyl | ß-Sulfatoethyl-thio | blau (617) |

| Bsp. | Verbindungen entsprechend Formel (A) $R^1$ | $R^2$ | Rest $D^1$ | Aminorest $T^1$ | Farbton ($\lambda_{max}$) |
|---|---|---|---|---|---|
| 6a | H | Sulfo | 4-Chlor-phenyl | N-(ß-Sulfato-ethyl)-amino | blau |
| 6b | H | Sulfo | 4-Methyl-phenyl | dito | blau |
| 6c | H | Sulfo | 3-Methoxy-phenyl | dito | blau |
| 6d | H | Sulfo | 4-Methoxy-phenyl | dito | grünst. blau |
| 6e | H | Sulfo | 4-Sulfo-phenyl | dito | blau |
| 6f | H | Sulfo | 3-Sulfo-phenyl | dito | blau |
| 6g | H | Sulfo | 2-Chlor-5-sulfo-phenyl | dito | rotst. blau |
| 7a | Sulfo | H | 4-Chlor-phenyl | N-Methyl-N-(ß-sulfatoethyl)-amino | blau |
| 7b | H | Sulfo | 4-Chlor-phenyl | dito | blau |
| 7c | H | Sulfo | 4-Methyl-phenyl | dito | blau |
| 7d | Sulfo | H | 4-Methyl-phenyl | dito | blau |
| 7e | H | Sulfo | dito | N-(γ-Sulfato-n-propyl)-amino | blau |
| 7f | Sulfo | H | dito | dito | blau |
| 7g | H | Sulfo | 4-Chlor-phenyl | dito | blau |
| 7h | Sulfo | H | 4-Chlor-phenyl | dito | blau |

**Beispiel 8**

Ebenfalls technisch wertvolle erfindungsgemäße Kupferkomplex-Formazanverbindungen mit guten faserreaktiven Farbstoffeigenschaften erhält man, wenn man in den Beispielen 3c bis 3n die Benzaldehyd-Komponenten durch eine andere Benzaldehyd-Komponente gemäß den Beispielen 4d bis 4g ersetzt.

**Beispiel 9**

Ebenfalls technisch wertvolle erfindungsgemäße Kupferkomplex-Formazanverbindungen mit guten faserreaktiven Farbstoffeigenschaften erhält man, wenn man in den Beispielen 4a bis 4g die Aminokomponente $T^1$ durch eine andere Aminokomponente gemäß Beispielen 3c bis 3n ersetzt.

**Beispiel 10**

Zur Herstellung einer erfindungsgemäßen Kupferkomplex-Formazanverbindung verfährt man gemäß der Verfahrensweise des Beispieles 1 oder des Beispieles 2, setzt jedoch zur Herstellung der Amino-Kupferkomplexformazan-Ausgangsverbindung gemäß Beispiel 1c) anstelle des im Beispiel 1a) erwähnten Ausgangs-Phenylhydrazons aus 2-Carboxy-5-sulfo-phenylhydrazin und Benzaldehyd die äquivalente Menge des Phenylhydrazons aus 2-Hydroxy-5-sulfo-phenylhydrazin und Benzaldehyd ein. Die erfindungsgemäße Verbindung kann gemäß den Angaben des Beispieles 1 isoliert werden. Sie besitzt, in Form der freien Säure geschrieben, die Formel

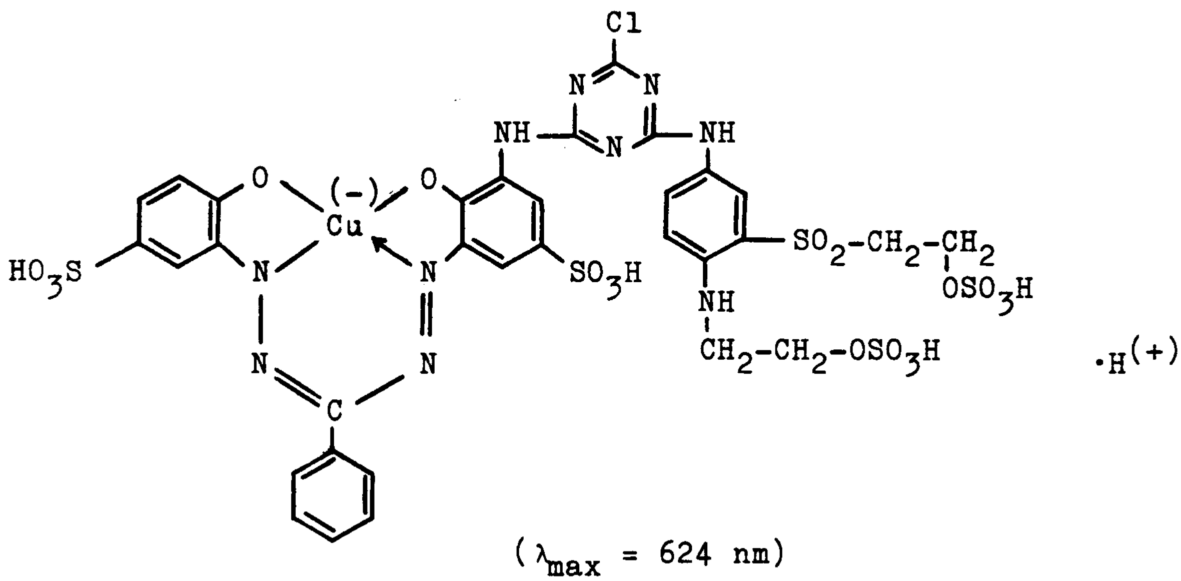

($\lambda_{max}$ = 624 nm)

und zeigt sehr gute faserreaktive Farbstoffeigenschaften. Insbesondere auf Cellulosefasermaterialien liefert sie nach den für faserreaktive Farbstoffe üblichen Färbe- und Druckverfahren farbstarke, blaue Färbungen und Drucke mit guten Echtheitseigenschaften.

**Beispiel 11**

Zur Herstellung einer erfindungsgemäßen Kupferkomplex-Formazanverbindung verfährt man gemäß der Angabe des Beispieles 10, setzt jedoch im Verfahrensschritt gemäß Beispiel 1d), bzw. 2a) anstelle der dort verwendeten Anilinverbindung die äquivalente Menge an 3-($\beta$-Sulfatoethylsulfonyl)-4-[N-methyl-N-($\beta$-sulfatoethyl)]-amino-anilin ein.

Die erfindungsgemäße Verbindung besitzt, in Form der freien Säure geschrieben, die Formel

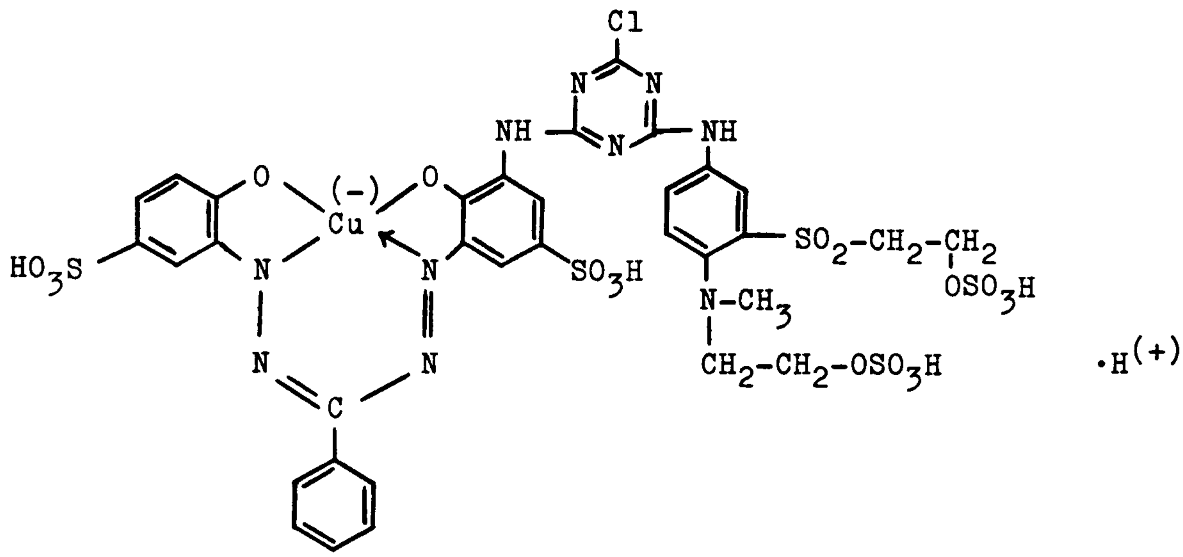

($\lambda_{max}$ = 624 nm)

und zeigt ebenfalls sehr gute faserreaktive Farbstoffeigenschaften. Sie liefert insbesondere auf Cellulosefasermaterialien farbstarke, blaue Färbungen und Drucke mit guten Echtheitseigenschaften.

**Beispiel 12**

a) Eine wäßrige, neutrale Lösung des Natriumsalzes von 37,7 Teilen des Hydrazons aus 2-Carboxy-4-acetylaminophenylhydrazin und 2-Sulfo-benzaldehyd in etwa 200 Teilen Wasser gibt man unter Rühren bei 5 bis 15° C zu einer durch übliche Diazotierung erhaltenen wäßrigen Lösung des Diazoniumsalzes aus 18,9 Teilen 4-Sulfo-2-amino-phenol, gibt sodann 25,0 Teile Kupfersulfat-pentahydrat hinzu und hält einen pH-Wert von 5 mittels Natriumcarbonat. Man rührt den Reaktionsansatz bei 15 bis 25° C noch nach, bis keine Diazoniumverbindung mehr nachweisbar ist.

b) In der unter a) synthetisierten Kupferkomplex-Formazanverbindung wird die Acetylaminogruppe zur Aminogruppe direkt in der Syntheselösung nach Zugabe einer 6- bis 10-fach molaren Menge einer konzentrierten wäßrigen Natronlauge bei einer Temperatur zwischen 90 und 100° C während etwa 10 Stunden hydrolisiert (die Acetylamino-Kupferformazanverbindung kann auch zuvor aus der Syntheselösung mittels Natriumchlorid ausgesalzen und isoliert und sodann in wäßriger Natronlauge hydrolysiert werden). Die erhaltene aminogruppenhaltige Kupferkomplex-Formazanverbindung kann nach Rückstellung des pH auf einen Wert von etwa 4 durch Aussalzen mit Natriumchlorid isoliert werden.

c) Bevorzugt geht man von der Syntheselösung von b) mit dem pH-Wert von 4 zur weiteren Umsetzung der Amino-Kupferkomplexformazanverbindung aus, indem man die Lösung unter gutem Rühren bei einer Temperatur von 0 bis 5° C und einem pH-Wert zwischen 3 und 4, der mittels einer wäßrigen Natriumcarbonatlösung eingehalten wird, mit 16,6 Teilen Cyanurchlorid zur 2,4-Dichlor-s-triazin-6-ylamino-Kupferkomplexformazanverbindung innerhalb von 3 bis 4 Stunden umsetzt.

d) Zu der Syntheselösung von c) gibt man eine wäßrige Lösung des Natriumsalzes von 40 Teilen 3-(β-Sulfatoethylsulfonyl)-4-N-(β-sulfatoethyl)-amino-anilin, erwärmt auf 30 bis 40° C und hält mittels einer wäßrigen Natriumcarbonatlösung einen pH-Wert von 4 bis 5 ein, bis die Umsetzung beendet ist. Die erhaltene Syntheselösung wird sodann bei 40 bis 50° C geklärt und die synthetisierte erfindungsgemäße Verbindung aus dem Filtrat durch Zugabe von Natriumchlorid oder Kaliumchlorid oder - gegebenenfalls nach vorheriger Behandlung mit Oxalsäure - durch Eindampfen oder Sprühtrocknung isoliert.

Es wird das Alkalimetallsalz (Natrium- oder Kaliumsalz) der Verbindung der Formel

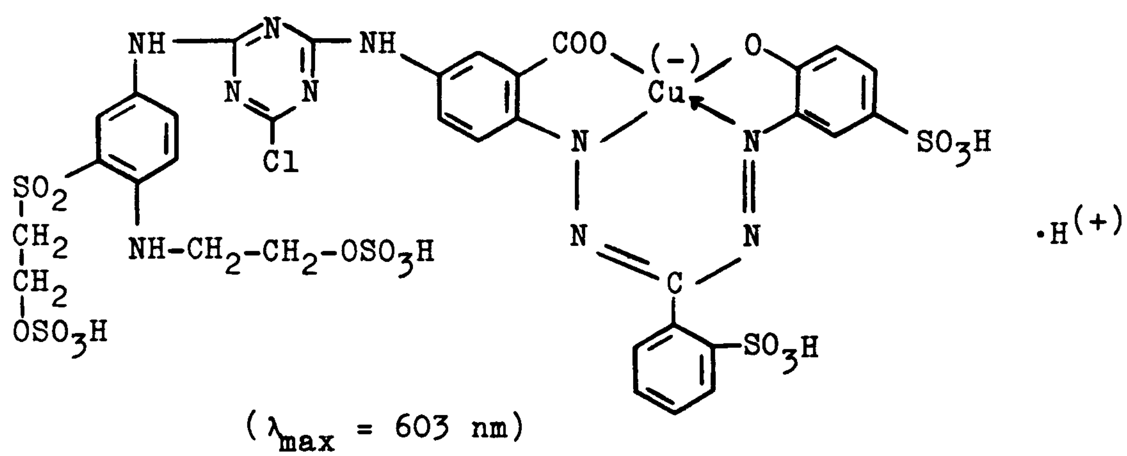

($\lambda_{max}$ = 603 nm)

als elektrolytsalzhaltiges dunkles Pulver erhalten. Die erfindungsgemäße Verbindung zeigt sehr gute Farbstoffeigenschaften und färbt die in der Beschreibung genannten Materialien in blauen Farbtönen mit schwach rotstichiger Nuance. Insbesondere Cellulosefasermaterialien, wie Baumwolle und ebenso regenerierte Cellulosefasermaterialien, werden gemäß den in der Technik für faserreaktive Farbstoffe üblichen Applikations- und Fixiermethoden, so beispielsweise im Klotz-Kurzverweil-Verfahren in Gegenwart eines säurebindenden Mittels in farbstarken Tönen gefärbt. Nach der üblichen Nachbehandlung, beispielsweise durch 10-minütiges Seifen und Spülen mit Wasser, zeichnen sich die erfindungsgemäß erhaltenen Färbungen durch sehr gute Lichtechtheiten in trockenen sowie in mit Trinkwasser oder einer alkalischen oder sauren Schweißlösung befeuchteten Zustand, desweiteren durch vorzügliche Naßechtheiten, wie Wasch-, Chlorbadewasser-, Chlorbleich-, Alkali-, Schweiß-und Peroxid-Echtheiten, aus. Desweiteren zeigen sie eine gute Säurelagerstabilität.

**Beispiel 13**

a) Man suspendiert 18,4 Teile Cyanurchlorid, gegebenenfalls unter Zugabe eines nicht-ionischen Hilfsmittels, in einem Gemisch aus 50 Teilen Wasser und 50 Teilen Eis, gibt sodann unter Einhaltung einer Temperatur von 0 bis 5° C und eines pH-Wertes von etwa 2 innerhalb einer Stunde eine wäßrige Lösung des Natriumsalzes von 42,0 Teilen 3-(β-Sulfatoethylsulfonyl)-4-N-(β-sulfatoethyl)-amino-anilin hinzu und rührt noch einige Zeit nach, bis kein freies Cyanurchlorid mehr nachweisbar ist.

b) Zu der nach a) erhaltenen und gegebenenfalls geklärten Lösung des Monokondensationsproduktes aus Cyanurchlorid und der Anilinverbindung gibt man eine gemäß Beispiel 12a) bis c) hergestellte wäßrige, auf einen pH-Wert von 5 eingestellte Suspension der Amino-Kupferkomplexformazanverbindung, erwärmt den Ansatz auf 30 bis 40° C und hält ihn bei dieser Temperatur bei einem pH-Wert von 5 bis 6 mittels wäßriger 10%iger Natriumcarbonatlösung, bis die Kondensationsreaktion der Dichlortriazinylaminoverbindung mit der Aminogruppe der Kupferkomplex-Formazanverbindung beendet ist.

Die erhaltene erfindungsgemäße Verbindung ist mit der des Beispieles 12 identisch und besitzt die dort beschriebenen guten faserreaktiven Farbstoffeigenschaften.

**Beispiel 14**

Zur Herstellung einer erfindungsgemäßen Kupferkomplex-Formazanverbindung verfährt man gemäß der Verfahrensweise des Beispieles 12 oder 13, setzt jedoch zur Herstellung der Amino-Kupferkomplexformazan-Ausgangsverbindung gemäß Beispiel 12c) anstelle der im Beispiel 12a) verwendeten Diazokomponente 2-Amino-phenol-4-sulfonsäure die äquivalente Menge an 2-Amino-phenol-4,6-disulfonsäure ein. Die erfindungsgemäße Verbindung kann gemäß den Angaben des Beispieles 12 isoliert werden. Sie zeigt sehr gute faserreaktive Farbstoffeigenschaften ($\lambda_{max}$ = 605 nm) und liefert insbesondere auf Cellulosefasermaterialien nach den für faserreaktive Farbstoffe üblichen Färbe- und Druckverfahren, wie bspw. einem Klotz-Kurzverweil-Verfahren, farbstarke, blaue Färbungen und Drucke mit den für die erfindungsgemäße Verbindung des Beispieles 12 angegebenen Eigenschaften.

**Beispiel 15**

Zu einer Lösung von 64 Teilen des Natriumslazes der Amino-Kupferkomplexformazan-Verbindung von Beispiel 1c) in 600 Teilen Wasser gibt man bei 0°C langsam unter gutem Rühren 13,5 Teile Cyanurfluorid, wobei man mit 10%iger wäßriger Natriumcarbonatlösung einen pH-Wert von 6 einhält. Nach Beendigung der Kondensationsreaktion gibt man eine wäßrige Lösung des Natriumsalzes von 42,0 Teilen 3-(β-Sulfatoethylsulfonyl)-4-(β-sulfatoethyl)-amino-anilin hinzu und rührt unter Einhaltung eines pH-Wertes zwischen 5 und 6 und einer Temperatur von 20°C noch bis zur Beendigung der zweiten Kondensationsreaktion nach. Sodann isoliert man die erfindungsgemäße Verbindung durch Aussalzen mit Natrium-oder Kaliumchlorid und Filtration, wäscht mit einer etwa 10%igen wäßrigen Lösung von Natrium- bzw. Kaliumchlorid nach und trocknet das Produkt bei 40°C unter reduziertem Druck.

Es wird das Alkalimetallsalz (Natrium- oder Kaliumsalz) der Verbindung der Formel

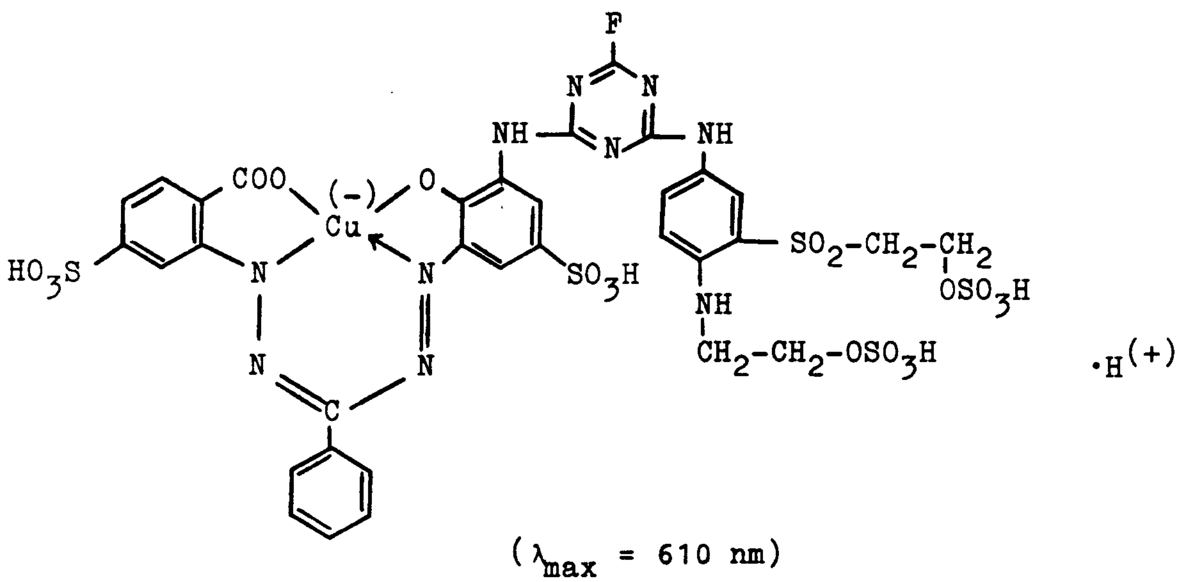

($\lambda_{max}$ = 610 nm)

als elektrolytsalzhaltiges dunkles Pulver erhalten. Die erfindungsgemäße Verbindung zeigt sehr gute Farbstoffeigenschaften und färbt die in der Beschreibung genannten Materialien in blauen Farbtönen mit schwach rotstichiger Nuance. Insbesondere Cellulosefasermaterialien, wie Baumwolle und ebenso regenerierte Cellulosefasermaterialien, werden gemäß den in der Technik für faserreaktive Farbstoffe üblichen Applikations- und Fixiermethoden, so beispielsweise aus wäßriger, langer Flotte bei 60°C in Gegenwart eines säurebindenden Mittels in farbstarken blauen Tönen gefärbt. Die erfindungsgemäße erhaltenen Färbungen und Drucke zeichnen sich durch sehr gute Lichtechtheiten in trockenen sowie in mit Trinkwasser oder einer alkalischen oder sauren Schweißlösung befeuchteten Zustand, desweiteren durch vorzügliche Naßechtheiten, wie Wasch-, Chlorbadwasser-, Chlorbleich-, Alkali-, Schweiß- und Peroxid-Echtheiten, aus. Desweiteren zeigen sie eine gute Säurelagerstabilität.

**Beispiel 16a**

Zur Herstellung einer erfindungsgemäße Kupferkomplex-Formazanverbindung verfährt man gemäß der Verfahrensweise des Beispieles 15, setzt jedoch anstelle des dort verwendeten 3-(β-Sulfatoethylsulfonyl)-4-(β-sulfatoethyl)-amino-anilins das 3-(β-Sulfatoethylsulfonyl)-4-[N-methyl-N-(β-sulfatoethyl)]-amino-anilin in äquivalenter Menge ein. Diese erfindungsgemäße Fluortriazin-Verbindung besitzt ebenfalls sehr gute faserreaktive Farbstoffeigenschaften und liefert nach den für faserreaktive Farbstoffe üblichen Anwendungsverfahren insbesondere auf Cellulosefasermaterialien farbstarke, blaue, echte Färbungen und Drucke. In wäßriger Lösung zeigt sie ein Absorptionsmaximum bei 609 nm.

**Beispiel 16b**

Zur Herstellung einer erfindungsgemäßen Kupferkomplex-Formazanverbindung verfährt man gemäß der Verfahrensweise des Beispieles 15, setzt jedoch anstelle des dort verwendeten 3-(β-Sulfatoethylsulfonyl)-4-(β-sulfatoethyl)-amino-anilins das 3-(β-Sulfatoethylsulfonyl)-4-N-[β-(β'-carboxyethyl-carbonamido)ethyl]-amino-anilin in äquivalenter Menge ein. Diese erfindungsgemäße Fluortriazin-Verbindung besitzt ebenfalls

sehr gute faserreaktive Farbstoffeigenschaften und liefert nach den für faserreaktive Farbstoffe üblichen Anwendungsverfahren insbesondere auf Cellulosefasermaterialien farbstarke, blaue, echte Färbungen und Drucke. Sie zeigt in wäßriger Lösung ein Absorptionsmaximum bei 610 nm.

**Beispiel 16c**

Zur Herstellung einer erfindungsgemäßen Kupferkomplex-Formazanverbindung verfährt man gemäß der Verfahrensweise des Beispieles 15, setzt jedoch anstelle des dort verwendeten 3-(β-Sulfatoethylsulfonyl)-4-(β-sulfatoethyl)-amino-anilins eine der in den Beispielen 3a bis 3q beschriebenen Anilinverbindungen entsprechend der allgemeinen Formel (3a) in äquivalenter Menge ein. Diese erfindungsgemäßen Fluortriazin-Verbindungen besitzen ebenfalls sehr gute faserreaktive Farbstoffeigenschaften und liefern nach den für faserreaktive Farbstoffe üblichen Färbe- und Druckverfhahren, insbesondere auf Cellulosefasermaterialien, farbstarke, blaue, echte Färbungen und Drucke.

**Anwendungsbeispiel 1**

Zu 1900 Volumenteilen eines wäßrigen Färbebades, das 2 Teile der in Beispiel 1 beschriebenen erfindungsgemäßen Kupferkomplex-Formazanverbindung und 100 Teile Natriumchlorid gelöst enthält, gibt man bei 25°C 100 Teile eines Baumwollgewebes, erhöht die Färbetemperatur innerhalb von 20 Minuten auf 60°C, führt die Färbung bei dieser Temperatur noch 15 Minuten fort, gibt sodann 100 Teile einer wäßrigen Natriumcarbonatlösung (entnommen aus einer Lösung von 200 Teilen calciniertem Natriumcarbonat in 1000 Teilen Wasser) hinzu, führt die Färbung bei 60°C noch weitere 45 Minuten fort, entnimmt sodann das gefärbte Baumwollgewebe und behandelt es in üblicher Weise nach, indem man es zunächst mit Wasser spült, sodann 15 Minuten bei 40°C in einer wenig Essigsäure enthaltenden Lösung neutralisiert, nochmals mit Wasser spült, 15 Minuten in einem Bad, das ein nichtionogenes Waschmittel enthält, bei Kochtemperatur behandelt, nochmals mit Wasser spült und trocknet.

Man erhält eine rotstichig-blaue Färbung mit den guten bis sehr guten, in Beispiel 1 genannten Echtheitseigenschaften.

**Anwendungsbeispiel 2**

Eine gleich gute, farbstarke und echte Färbung wie im Anwendungsbeispiel 1 erhält man, wenn man in dem in Anwendungsbeispiel 1 beschriebenen Färbebad das Natriumchlorid durch die äquivalente Menge an wasserfreiem Natriumsulfat ersetzt und die Färbung bei 70°C durchführt.

**Anwendungsbeispiel 3**

Man stellt eine Färbeflotte her, indem man 3 Teile der im Beispiel 1 beschriebenen erfindungsgemäßen Kupferkomplex-Formazanverbindung in 50 Teilen Wasser löst und hierzu 50 Teile einer 1%igen wäßrigen Natronlauge hinzugibt. Mit dieser Färbeflotte wird ein Baumwollgewebe mit einer Flottenaufnahme von 70 % des Warengewichtes geklotzt, auf eine Docke gewickelt, in eine Plastikfolie eingehüllt und während 8 Stunden bei 20°C gelagert. Anschließend wird das gefärbte Gewebe, wie im Beispiel 1 beschriebenen, nachbehandelt. Man erhält eine tief rotstichig-blaue Färbung mit den im Beispiel 1 beschriebenen guten Echtheitseigenschaften.

**Anwendungsbespiel 4**

Man stellt eine Färbeflotte her, indem man 2 Teile der in Beispiel 1 beschriebenen erfindungsgemäßen Kupferkomplex-Formazanverbindung in 50 Teilen Wasser löst und hierzu 50 Teile einer alkalischen wäßrigen Lösung gibt, die pro Liter 16 g Natriumhydroxid, 200 ml einer wäßrigen Wasserglas-Lösung von 38°Bé und 200 g Harnstoff enthält. Mit dieser Färbeflotte wird ein Baumwollgewebe mit einer Flottenaufnahme von 70 % des Warengewichtes geklotzt, auf eine Docke gewickelt, in eine Plastikfolie eingehüllt und 12 bis 24 Stunden bei 20°C gelagert. Anschließend wird das gefärbte Gewebe, wie im Beispiel 1 beschrieben, nachbehandelt. Man erhält eine tief rotstichig blaue Färbung mit den im Beispiel 1 beschriebenen guten Echtheitseigenschaften.

**Anwendungsbeispiel 5**

Zu einer Lösung von 4 Teilen der im Beispiel 1 beschriebenen erfindungsgemäßen Kupferkomplex-Formazanverbindung in 50 Teilen Wasser gibt man 50 Teile einer alkalischen wäßrigen Lösung, die pro Liter 40 g Natriumcarbonat und 200 g Harnstoff enthält. Mit dieser Färbeflotte wird ein Baumwollgewebe mit einer Flottenaufnahme von 75 % des Warengewichtes geklotzt, bei 60° C getrocknet und sodann bei 140° C während 60 bis 120 Sekunden thermofixiert. Das gefärbte Gewebe wird, wie im Beispiel 1 beschrieben, nachbehandelt. Man erhält eine rotstichig blaue Färbung mit den im Beispiel 1 beschriebenen guten Echtheitseigenschaften.

**Anwendungsbeispiel 6**

Man imprägniert ein Baumwollgewebe mit einer wäßrigen Färbeflotte aus 4 Teilen der in Beispiel 1 beschriebenen erfindungsgemäßen Kupferkomplex-Formazanverbindung und 0,5 Teilen Natrium-m-Nitrobenzolsulfonat in 100 Teilen Wasser mit einer Flottenaufnahme von 75 % des Warengewichtes. Das imprägnierte Gewebe wird nach dem Trocknen bei 60° C bei 20° C mit einer alkalischen wäßrigen Lösung, die pro Liter 7 g Natriumhydroxid und 250 g Natriumchlorid enthält, mit einer Flottenaufnahme von 75 % des Warengewichtes überklotzt. Das überklotzte Gewebe wird anschließend mit Wasserdampf von 100 bis 102° C 30 bis 60 Sekunden gedämpft und anschließend in der üblichen Weise, beispielsweise wie im Beispiel 1 beschrieben, nachbehandelt. Man erhält eine rotstichig blaue Färbung mit den im Beispiel 1 genannten guten Echtheitseigenschaften.

**Anwendungsbeispiel 7**

Man versetzt eine wäßrige Lösung von 6 Teilen der im Beispiel 1 beschriebenen erfindungsgemäßen Kupferkomplex-Formazanverbindung in 50 Teilen Wasser mit 50 Teilen einer alkalischen wäßrigen Lösung, die pro Liter 40 g Natriumcarbonat und 200 g Harnstoff enthält. Mit dieser Färbeflotte wird ein Baumwollgewebe mit einer Flottenaufnahme von 70 % des Warengewichtes geklotzt, das geklotzte Gewebe getrocknet, beispielsweise bei einer Trockenhitze von 100° C während 90 Sekunden, und sodann mit Sattdampf von 102° C während 30 bis 60 Sekunden gedämpft. Die Färbung wird in üblicher Weise, wie beispielsweise im Beispiel 1 beschrieben, nachbehandelt. Man erhält eine rotstichig-blaue Färbung mit den im Beispiel 1 genannten guten Echtheitseigenschaften.

**Anwendungsbeispiel 8**

Man stellt eine wäßrige Druckpaste aus 100 Teilen einer wäßrigen Stammverdickung, die neben Wasser 50 Teile einer 5%igen wäßrigen neutralen Natriumalginatverdickung, 10 Teile Harnstoff, 1 Teil Natrium-m-Nitrobenzolsulfonat und 2,5-Teile Natriumhydrogencarbonat enthält, und 2 Teilen der im Beispiel 1 beschriebenen erfindungsgemäßen Kupferkomplex-Formazanverbindung her. Mit dieser Druckpaste wird ein Baumwollgewebe bedruckt, bei 60° C getrocknet, und mit Sattdampf von 102° C während 8 Minuten gedämpft und anschließend in üblicher Weise, beispielsweise wie im Beispiel 1 beschrieben, nachbehandelt. Man erhält einen farbstarken, rotstichig blauen Druck, der die im Beispiel 1 beschriebenen guten Echtheitseigenschaften aufweist.

**Patentansprüche**
**Patentansprüche für folgende Vertragsstaaten : DE, GB, FR, IT, CH, LI, BE**

**1.** Eine Kupferkomplex-Formazan-Verbindung, die der allgemeinen Formel (1)

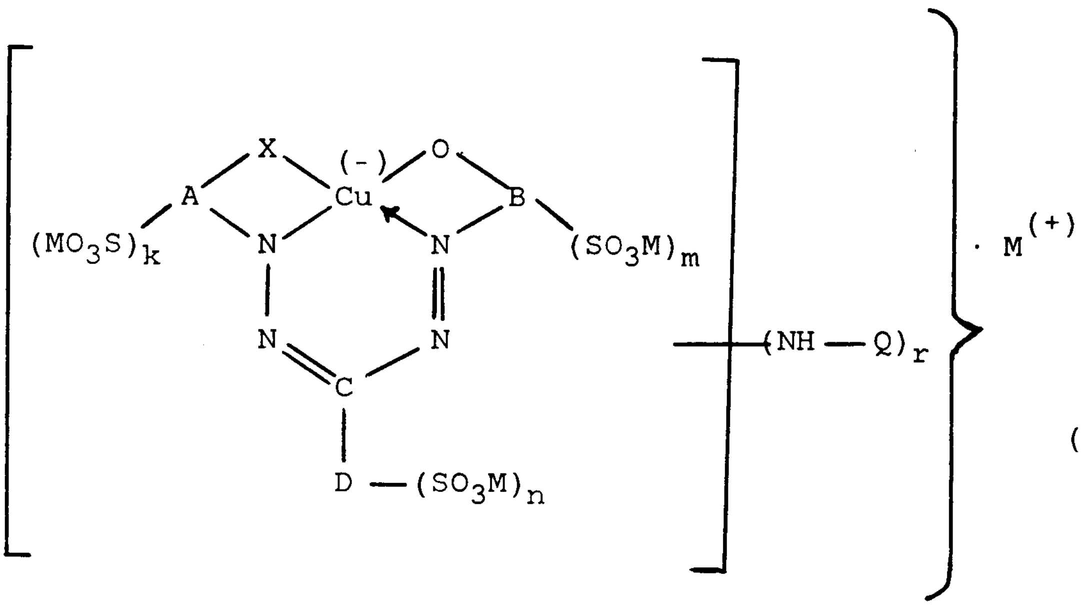

(1)

entspricht, in welcher bedeuten:

- M ist ein Wasserstoffatom oder ein salzbildendes Metallatom;
- k ist die Zahl Null, 1 oder 2,
- m ist die Zahl Null, 1 oder 2 und
- n ist die Zahl Null, 1 oder 2,

wobei die Summe von (k + m + n) gleich eine ganze Zahl von 1 bis 4 ist;

- A ist ein Benzolring oder ein Naphthalinring, die beide neben den eingezeichneten Gruppen durch die angegebene und nachstehend definierte faserreaktive Gruppe -NH-Q und/oder durch 1 oder 2 andere Substituenten substituiert sein können, die der Gruppe der Substituenten Halogen, Nitro, Carboxy, Alkyl von 1 bis 4 C-Atomen, Alkoxy von 1 bis 4 C-Atomen, Sulfamoyl, N-($C_1$-$C_4$)-Alkyl-sulfamoyl, N,N-Di-[$C_1$-$C_4$)-alkyl]-sulfamoyl-, ($C_1$-$C_4$)-Alkyl-sulfonyl und Phenylsulfonyl angehören, wobei der an A gebundene Rest X und das Stickstoffatom bevorzugt in ortho-Stellung zueinander an A gebunden sind;
- B ist ein Benzolring oder ein Naphthalinring, die beide neben den eingezeichneten Gruppen durch die angegebene und nachstehend definierte faserreaktive Gruppe -NH-Q und/oder durch 1 oder 2 Substituenten substituiert sein können, die der Gruppe der Substituenten Halogen, Nitro, Alkyl von 1 bis 4 C-Atomen, Alkoxy von 1 bis 4 C-Atomen, Sulfamoyl, N-($C_1$-$C_4$)-Alkylsulfamoyl,N,N-Di-[$C_1$-$C_4$)-alkyl]-sulfamoyl, ($C_1$-$C_4$)-Alkylsulfonyl und Phenylsulfonyl angehören, wobei die an B gebundenen Sauerstoff- und Stickstoffatome bevorzugt in ortho-Stellung zueinander an B gebunden sind;
- D ist ein Benzol- oder Naphthalinring, die beide neben -$(SO_3M)_n$ und der angegebenen Gruppe -NH-Q zusätzlich durch 1 oder 2 Substituenten aus der Gruppe Halogen, Alkyl von 1 bis 4-C-Atomen, Alkoxy von 1 bis 4 C-Atomen, Nitro, Hydroxy, Carboxy und Carbalkoxy von 2 bis 5 C-Atomen substituiert sein können;
- X ist eine Gruppe der Formel -$SO_3^{(-)}$, wobei die Bindung zum Kupferatom und dessen negative Ladung entfallen, oder ist die Oxygruppe -O- oder die Carbonyloxygruppe -CO-O- ;
- r ist die Zahl 1 oder 2;
- Q ist eine Gruppe der allgemeinen Formel (2)

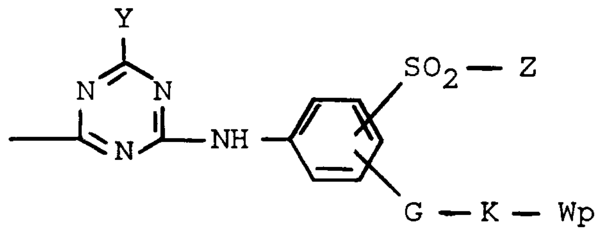

(2)

in welcher
Y ein Halogenatom ist,
Z die Vinylgruppe oder eine Ethylgruppe, die in ß-Stellung durch einen alkalisch eliminierbaren Substituenten substituiert ist, bedeutet,
G die Thiogruppe -S- oder eine Aminogruppe der Formel -N(R)- ist,
worin
R für ein Wasserstoffatom oder eine Alkylgruppe von 1 bis 4 C-Atomen, die substituiert sein kann, steht oder eine nachstehend definierte Gruppe der Formel -K-Wp ist,
K eine Alkylengruppe oder ein Arylenrest oder ein Arylen-alkylen- oder ein Alkylen-arylen-Rest ist, wobei sowohl die Alkylen- als auch die Arylenreste substituiert sein können und wobei sowohl die Alkylenreste als auch die Alkylen- und Arylenreste in den Alkylen-arylen- und Arylen-alkylen-Resten noch durch mindestens eine Heterogruppe unterbrochen sein können,
W eine wasserlöslichkeits-vermittelnde Gruppe ist und
p für die Zahl 1, 2 oder 3 steht;

die faserreaktive Gruppierung -NH-Q ist an ein aromatisches C-Atom eines Benzol- oder Naphthalinringes von A oder von B oder von D oder an ein aliphatisches C-Atom von D oder eines Substituenten von A oder B gebunden, jedoch im Falle r = 2 beide Gruppen -NH-Q nicht gleichzeitig an A oder an B oder an D.

2. Verbindung nach Anspruch 1, dadurch gekennzeichnet, daß r für die Zahl 1 steht.

3. Verbindung nach Anspruch 1 oder 2, dadurch gekennzeichnet, daß die faserreaktive Gruppierung -NH-Q an ein aromatisches C-Atom des Benzol- oder Naphthalinringes von A oder von B gebunden ist.

4. Verbindung nach mindestens einem der Ansprüche 1 bis 3, dadurch gekennzeichnet, daß A und B beide einen Benzolring mit den angegebenen Bedeutungen darstellen.

5. Verbindung nach Anspruch 1 der allgemeinen Formel (1a)

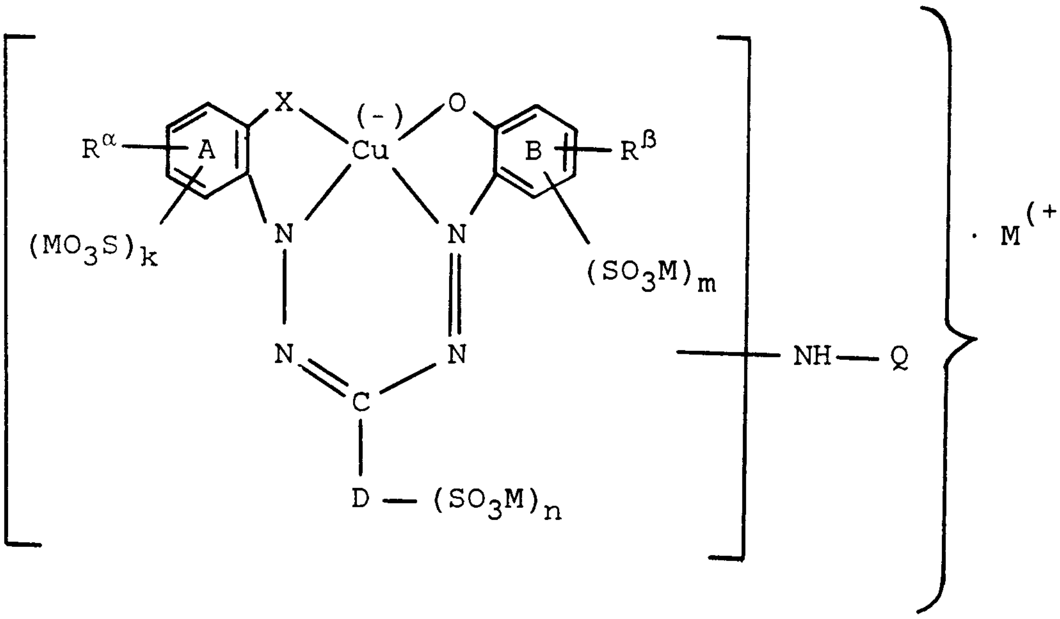

(1a)

in welcher bedeuten:

- $R^{\alpha}$ ist ein Wasserstoffatom oder die angegebene Gruppe -NH-Q oder eine Methyl-, Methoxy-, Ethoxy- oder Nitrogruppe oder ein Chloratom;
- $R^{\beta}$ ist ein Wasserstoffatom oder die angegebene Gruppe -NH-Q oder eine Methyl-, Methoxy-, Ethoxy-, Ethylsulfonyl- oder Nitrogruppe oder ein Chloratom;
- k ist die Zahl Null, 1 oder 2,
- m ist die Zahl Null, 1 oder 2 und
- n ist die Zahl Null, 1 oder 2,

wobei die Summe von (k + m + n) gleich 2 oder 2 ist;

M, D, Q und X haben die in mindestens einem der Ansprüche 1 bis 6 genannten Bedeutungen;

die faserreaktive Gruppierung -NH-Q ist an den Benzolring A oder den Benzolring B oder an ein aromatisches C-Atomen eines Benzol- oder Naphthalinringes von D gebunden.

**6.** Verbindung nach Anspruch 1 der allgemeinen Formel (1b)

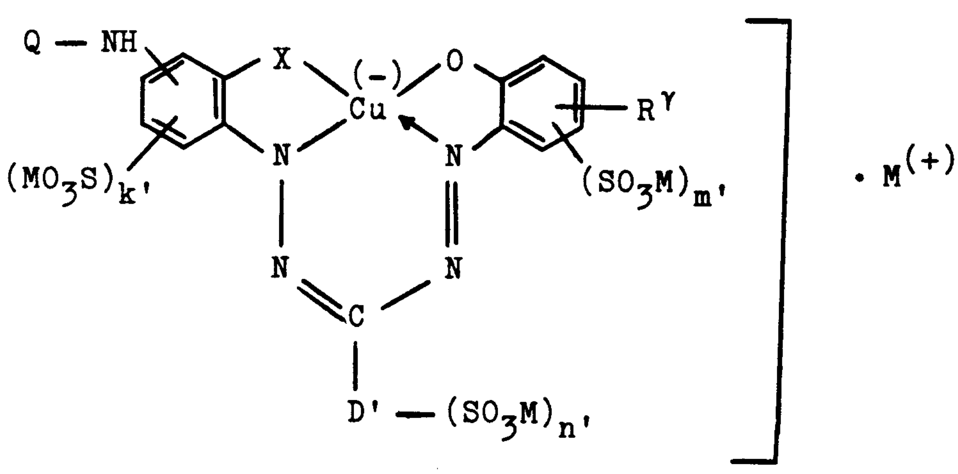

(1b)

in welcher bedeuten:

- k′ ist die Zahl Null oder 1,
- m′ ist die Zahl 1 oder 2 und
- n′ ist die Zahl Null, 1 oder 2,

wobei die Summe von (k′ + m′ + n′) gleich 2 oder 3 ist;

| | |
|---|---|
| $R^{\gamma}$ | ist eine Methoxy-, Ethoxy-, Methyl- oder Ethylsulfonyl-Gruppe oder ein Chloratom oder ein Wasserstoffatom; |
| D′ | ist ein Benzolring, der neben der Gruppierung $-(SO_3M)_{n'}$ durch eine Methoxy-, Ethoxy- oder Methylgruppe oder ein Chloratom substituiert sein kann; |
| M, Q und X | haben die in Anspruch 1 genannten Bedeutungen. |

**7.** Verbindung nach Anspruch 1 der allgemeinen Formel (1c)

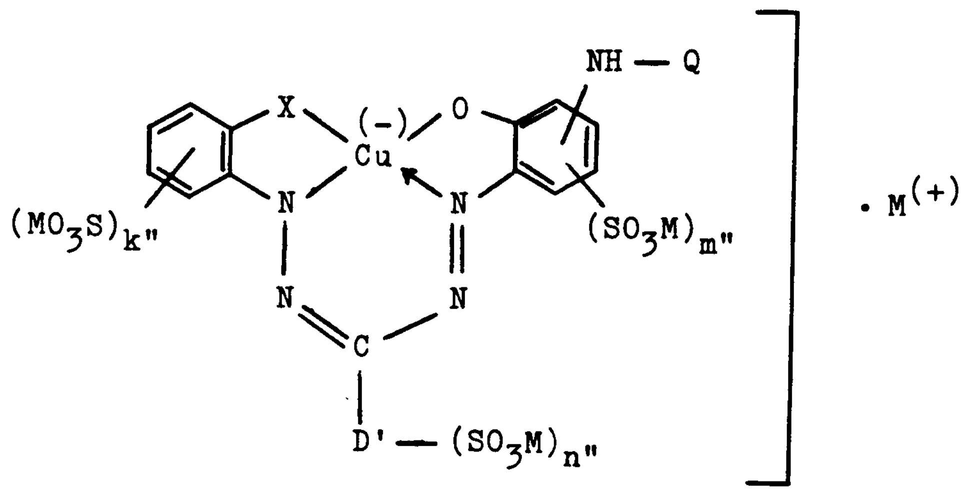

(1c)

in welcher bedeuten:

| | |
|---|---|
| k″ | ist die Zahl Null, 1 oder 2, |
| m″ | ist die Zahl Null oder 1 und |
| n″ | ist die Zahl Null, 1 oder 2, |

wobei die Summe von (k″ + m″ + n″) gleich 2 oder 3 ist;

| | |
|---|---|
| D′ | ist ein Benzolring, der neben der Gruppierung $-(SO_3M)_{n''}$ durch eine Methoxy-, Ethoxy- oder Methylgruppe oder ein Chloratom substituiert sein kann; |
| M, Q und X | haben die in Anspruch 1 genannten Bedeutungen. |

**8.** Verbindung nach mindestens einem der Ansprüche 1 bis 7, dadurch gekennzeichnet, daß X die Oxygruppe oder die Carbonyloxygruppe ist.

**9.** Verbindung nach mindestens einem der Ansprüche 1 bis 8, dadurch gekennzeichnet, daß X die Carbonyloxygruppe ist.

**10.** Verbindung nach Anspruch 1 der allgemeinen Formel (1d)

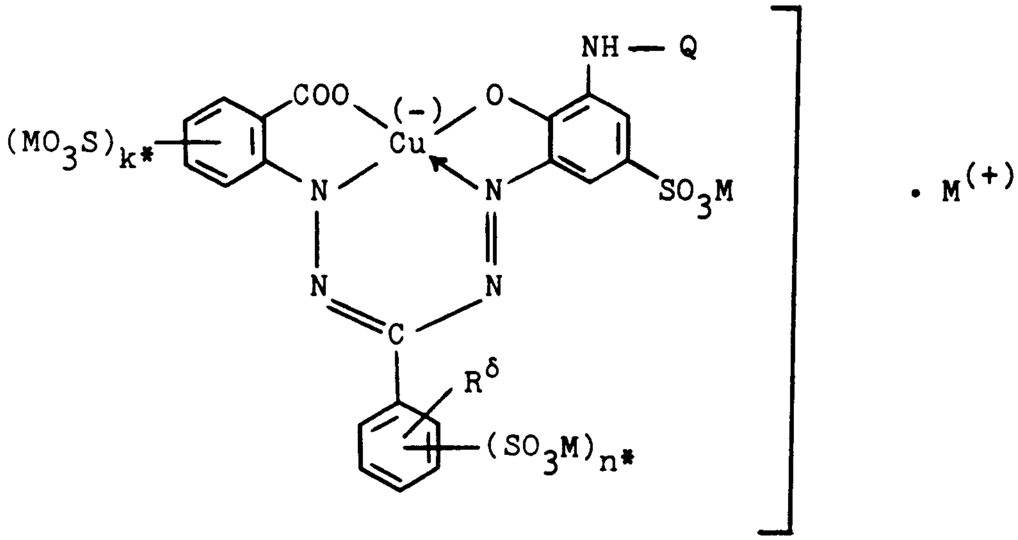

(1d)

in welcher bedeuten:

- k* ist die Zahl Null oder 1 und
- n* ist die Zahl Null oder 1,

wobei die Summe von (k* + n*) die Zahl 1 oder 2, bevorzugt 1 ist;

- $R^{\delta}$ ist ein Wasserstoffatom oder eine Methyl-, Methoxy-oder Ethoxygruppe oder ein Chloratom;
- M und Q haben die in Anspruch 1 genannten Bedeutungen.

**11.** Verbindung nach Anspruch 1 der allgemeinen Formel (1e)

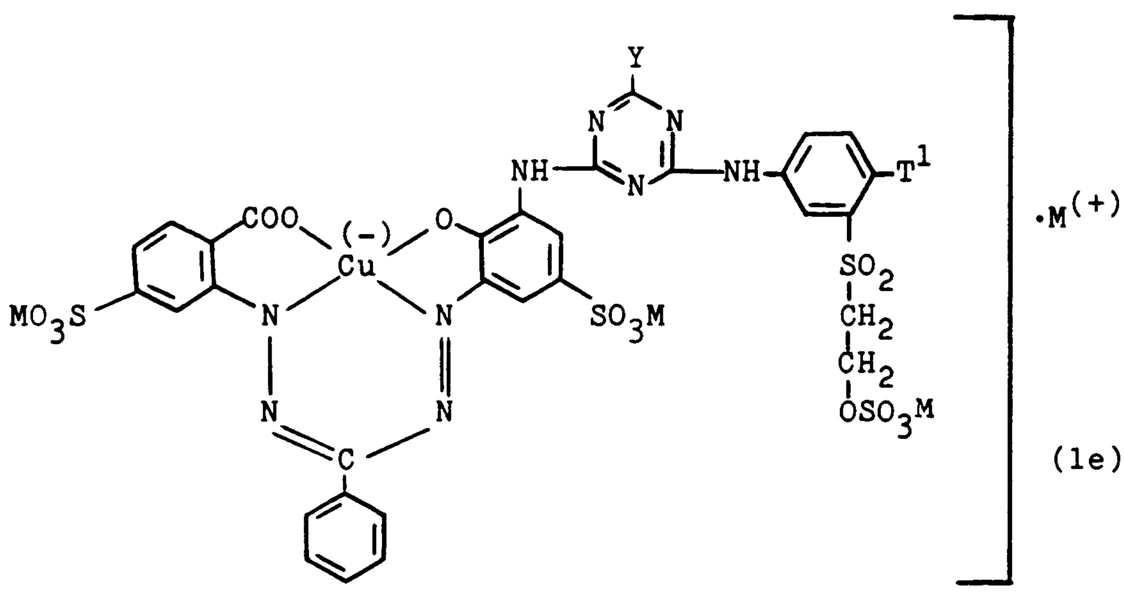

(1e)

in welcher M die in Anspruch 1 genannte Bedeutung besitzt, X für ein Chlor- oder Fluoratom steht und $T^1$ β-Sulfatoethyl-amino-, N-Methyl-N-(β-Sulfatoethyl)-amino, N-[β-(β'-Carboxy-ethyl)-carbonamido]-ethyl-amino-, β-Sulfoethyl-amino- oder β-Sulfatoethyl-thio-Gruppe ist.

**12.** Verbindung nach mindestens einem der Ansprüche 1 bis 11, dadurch gekennzeichnet, daß Y ein Chloratom ist.

**13.** Verbindung nach mindestens einem der Ansprüche 1 bis 11, dadurch gekennzeichnet, daß Y ein Fluoratom ist.

**14.** Verbindung nach mindestens einem der Ansprüche 1 bis 13, dadurch gekennzeichnet, daß Z die Vinylgruppe oder eine β-Sulfatoethyl-Gruppe ist.

**15.** Verbindung nach mindestens einem der Ansprüche 1 bis 14, dadurch gekennzeichnet, daß G eine Aminogruppe der allgemeinen Formel -N(R)- mit R gleich Wasserstoff, Methyl oder Ethyl ist.

**16.** Verbindung nach mindestens einem der Ansprüche 1 bis 15, dadurch gekennnzeichnet, daß K die Ethylengruppe oder die n-Propylen-Gruppe oder eine Gruppe der Formel $-CH_2-CH_2-O-CH_2-CH_2-$ oder $-CH_2-CH_2-NH-CO-CH_2-CH-$ ist.

**17.** Verbindung nach mindestens einem der Ansprüche 1 bis 16, dadurch gekennzeichnet, daß W eine Sulfato-, Sulfo- oder Carboxygruppe ist.

**18.** Verbindung nach mindestens einem der Ansprüche 8 bis 17, dadurch gekennzeichnet, daß eine Sulfogruppe von $(MO_3S)_{k''}$- bzw. $(MO_3S)_{k^*}$- in meta- oder para-Stellung, bevorzugt in para-Stellung zur Gruppe X an den Benzolkern gebunden ist.

**19.** Verbindung nach mindestens einem der Ansprüche 1 bis 18, dadurch gekennzeichnet, daß M ein Wasserstoffatom oder ein Alkalimetall ist.

**20.** Verfahren zur Herstellung einer in Anspruch 1 genannten und definierten Verbindung der allgemeinen Formel (1), dadurch gekennzeichnet, daß man Cyanurchlorid oder Cyanurfluorid in beliebiger Reihenfolge mit einer aminogruppenhaltigen Kupferkomplex-Formazanverbindung der allgemeinen Formel (3)

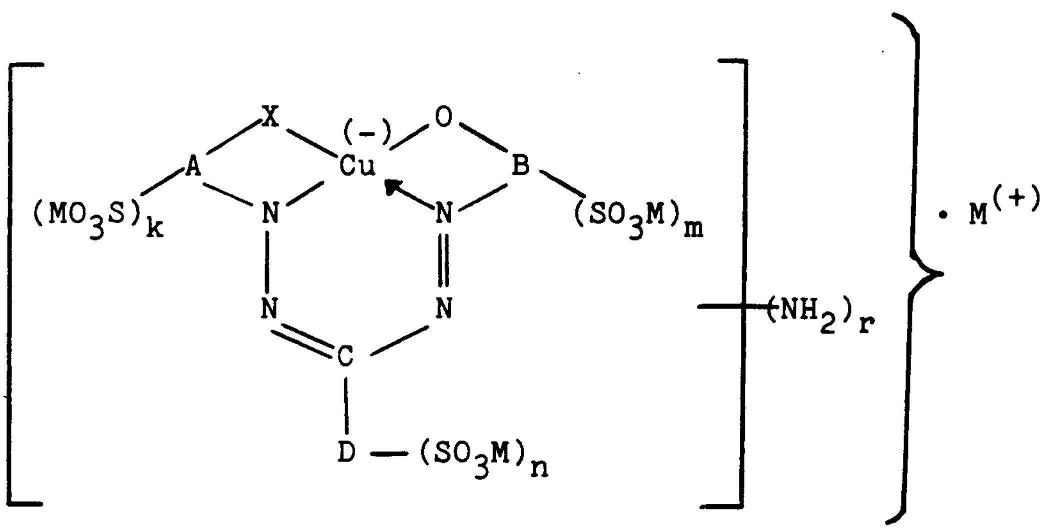

(3)

in welcher die einzelnen Formelglieder die für Formel (1) genannten Bedeutungen haben, wobei die Aminogruppe, die ein- oder zweimal im Kupferkomplexformazan-Molekül enthalten ist (r = 1 oder 2), - analog der faserreaktiven Gruppierung -NH-Q in den Verbindungen der Formel (1) - an ein aromatisches C-Atomen eines Benzol- oder Naphthalinringes von A oder von B oder von D oder an ein aliphatisches C-Atom von D oder eines Substituenten von A oder B gebunden ist, jedoch im Falle von r = 2 beide Aminogruppen nicht gleichzeitig an A oder an B oder an D gebunden sind,
und mit einer Anilinverbindung der allgemeinen Formel (4)

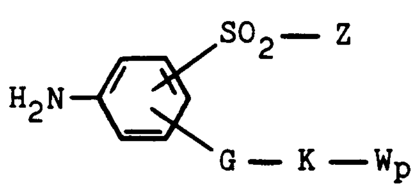

(4)

in welcher G, K, W, p und Z die in Anspruch 1 genannten Bedeutungen haben, umsetzt.

**21.** Verwendung eine Kupferkomplex-Formazanverbindung von mindestens einem der Ansprüche 1 bis 19 als Farbstoff.

**22.** Verfahren zum Färben von hydroxy- und/oder carbonamidgruppenhaltigem Material, insbesondere Fasermaterial, bei welchem man einen Farbstoff auf das Material aufbringt oder ihn in das Material einbringt und ihn mittels Wärme und/oder mittels eines säurebindenden Mittels fixiert, dadurch gekennzeichnet, daß man als Farbstoff eine Verbindung von mindestens einem der Ansprüche 1 bis 19 einsetzt.

**Patentansprüche für folgenden Vertragsstaat : ES**

**1.** Ein Verfahren zur Herstellung einer Kupferkomplex-Formazan-Verbindung, die der allgemeinen Formel (1)

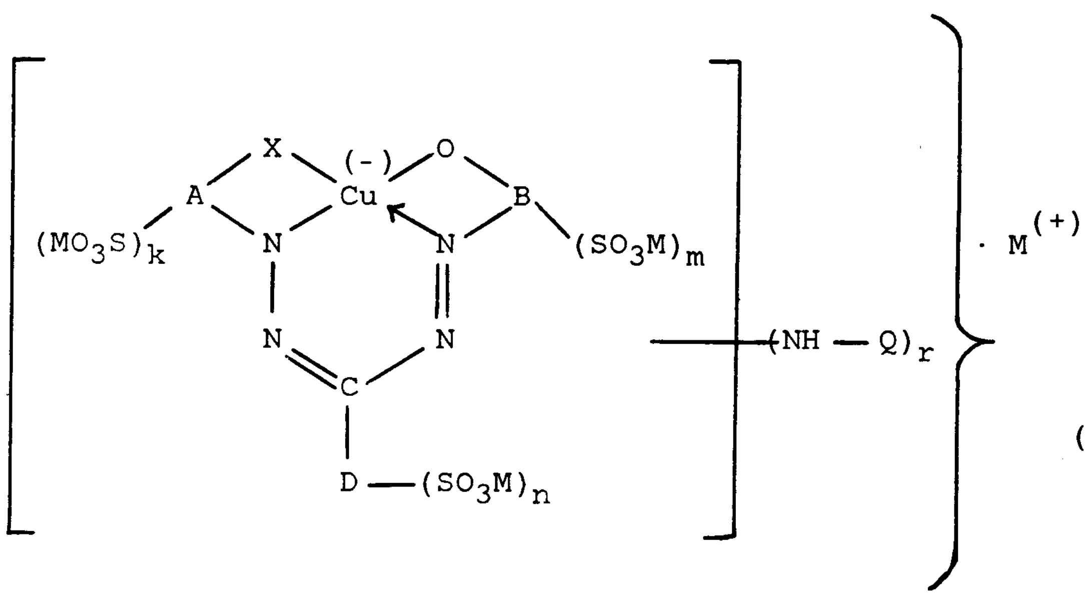

(1)

entspricht, in welcher bedeuten:

M ist ein Wasserstoffatom oder ein salzbildendes Metallatom;
k ist die Zahl Null, 1 oder 2,
m ist die Zahl Null, 1 oder 2 und
n ist die Zahl Null, 1 oder 2,

wobei die Summe von (k + m + n) gleich eine ganze Zahl von 1 bis 4 ist;

A ist ein Benzolring oder ein Naphthalinring, die beide neben den eingezeichneten Gruppen durch die angegebene und nachstehend definierte faserreaktive Gruppe -NH-Q und/oder durch 1 oder 2 andere Substituenten substituiert sein können, die der Gruppe der Substituenten Halogen, Nitro, Carboxy, Alkyl von 1 bis 4 C-Atomen, Alkoxy von 1 bis 4 C-Atomen, Sulfamoyl, N-($C_1$-$C_4$)-Alkyl-sulfamoyl, N,N-Di-[$C_1$-$C_4$)-alkyl]-sulfamoyl-, ($C_1$-$C_4$)-Alkyl-sulfonyl und Phenylsulfonyl angehören, wobei der an A gebundene Rest X und das Stickstoffatom bevorzugt in ortho-Stellung zueinander an A gebunden sind;

B ist ein Benzolring oder ein Naphthalinring, die beide neben den eingezeichneten Gruppen durch die angegebene und nachstehend definierte faserreaktive Gruppe -NH-Q und/oder durch 1 oder 2 Substituenten substituiert sein können, die der Gruppe der Substituenten Halogen, Nitro, Alkyl von 1 bis 4 C-Atomen, Alkoxy von 1 bis 4 C-Atomen, Sulfamoyl, N-($C_1$-$C_4$)-Alkyl-sulfamoyl,N,N-Di-[$C_1$-$C_4$)-alkyl]-sulfamoyl, ($C_1$-$C_4$)-Alkylsulfonyl und Phenylsulfonyl angehören, wobei die an B gebundenen Sauerstoff- und Stickstoffatome bevorzugt in ortho-Stellung zueinander an B gebunden sind;

D ist ein Benzol- oder Naphthalinring, die beide neben -($SO_3M$)n und der angegebenen Gruppe

-NH-Q zusätzlich durch 1 oder 2 Substituenten aus der Gruppe Halogen, Alkyl von 1 bis 4 C-Atomen, Alkoxy von 1 bis 4 C-Atomen, Nitro, Hydroxy, Carboxy und Carbalkoxy von 2 bis 5 C-Atomen substituiert sein können;

X ist eine Gruppe der Formel $-SO_3^{(-)}$, wobei die Bindung zum Kupferatom und dessen negative Ladung entfallen, oder ist die Oxygruppe -O- oder die Carbonyloxygruppe -CO-O- ;

r ist die Zahl 1 oder 2;

Q ist eine Gruppe der allgemeinen Formel (2)

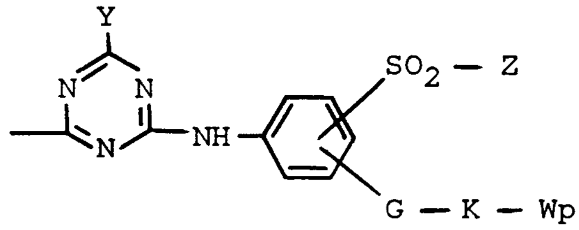

(2)

in welcher

Y ein Halogenatom ist,

Z die Vinylgruppe oder eine Ethylgruppe, die in ß-Stellung durch einen alkalisch eliminierbaren Substituenten substituiert ist, bedeutet,

G die Thiogruppe -S- oder eine Aminogruppe der Formel -N(R)- ist, worin

R für ein Wasserstoffatom oder eine Alkylgruppe von 1 bis 4 C-Atomen, die substituiert sein kann, steht oder eine nachstehend definierte Gruppe der Formel -K-Wp ist,

K eine Alkylengruppe oder ein Arylenrest oder ein Arylen-alkylen- oder ein Alkylen-arylen-Rest ist, wobei sowohl die Alkylen- als auch die Arylenreste substituiert sein können und wobei sowohl die Alkylenreste als auch die Alkylen- und Arylenreste in den Alkylen-arylen- und Arylen-alkylen-Resten noch durch mindestens eine Heterogruppe unterbrochen sein können,

W eine wasserlöslichkeits-vermittelnde Gruppe ist und

p für die Zahl 1, 2 oder 3 steht;

die faserreaktive Gruppierung -NH-Q ist an ein aromatisches C-Atom eines Benzol- oder Naphthalinringes von A oder von B oder von D oder an ein aliphatisches C-Atom von D oder eines Substituenten von A oder B gebunden, jedoch im Falle r = 2 beide Gruppen -NH-Q nicht gleichzeitig an A oder an B oder an D;

dadurch gekennzeichnet, daß man Cyanurchlorid oder Cyanurfluorid in beliebiger Reihenfolge mit einer aminogruppenhaltigen Kupferkomplex-Formazanverbindung der allgemeinen Formel (3)

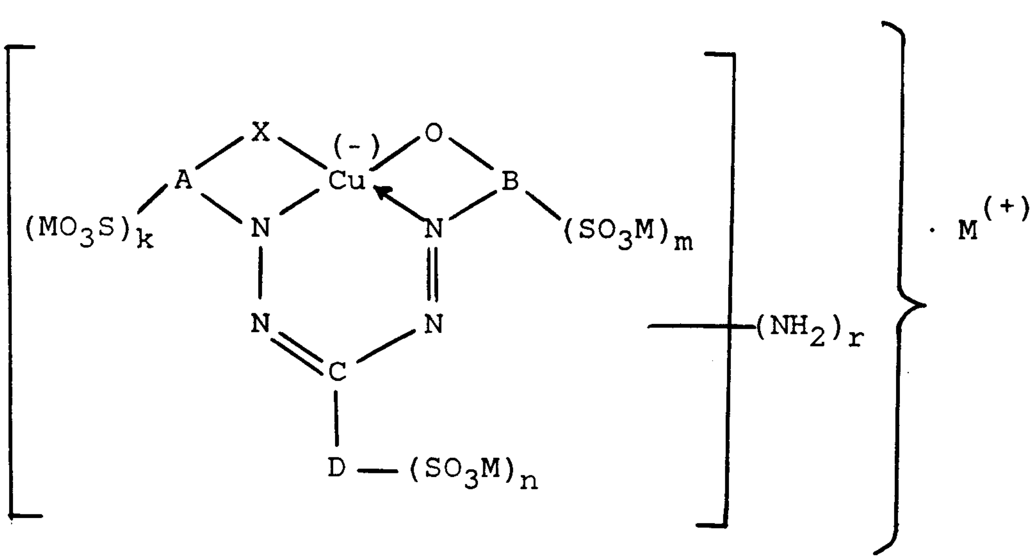

(3)

in welcher die einzelnen Formelglieder die für Formel (1) genannten Bedeutungen haben, wobei die Aminogruppe, die ein- oder zweimal im Kupferkomplexformazan-Molekül enthalten ist (r = 1 oder 2), - analog der faserreaktiven Gruppierung -NH-Q in den Verbindungen der Formel (1) - an ein aromatisches C-Atom eines Benzol- oder Naphthalinringes von A oder von B oder von D oder an ein aliphatisches C-Atom von D oder eines Substituenten von A oder B gebunden ist, jedoch im Falle von r = 2 beide Aminogruppen nicht gleichzeitig an A oder an B oder an D gebunden sind,
und mit einer Anilinverbindung der allgemeinen Formel (4)

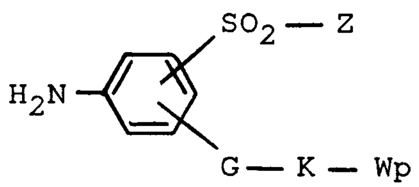

(4)

in welcher G, K, W, p und Z die oben genannten Bedeutungen haben, umsetzt.

2. Verfahren nach Anspruch 1, dadurch gekennzeichnet, daß r für die Zahl 1 steht.

3. Verfahren nach Anspruch 1 oder 2, dadurch gekennzeichnet, daß die faserreaktive Gruppierung -NH-Q an ein aromatisches C-Atom des Benzol- oder Naphthalinringes von A oder von B gebunden ist.

4. Verfahren nach mindestens einem der Ansprüche 1 bis 3, dadurch gekennzeichnet, daß A und B beide einen Benzolring mit den angegebenen Bedeutungen darstellen.

5. Verfahren nach Anspruch 1, dadurch gekennzeichnet, daß die Verbindung der Formel (1) eine Verbindung der allgemeinen Formel (1a)

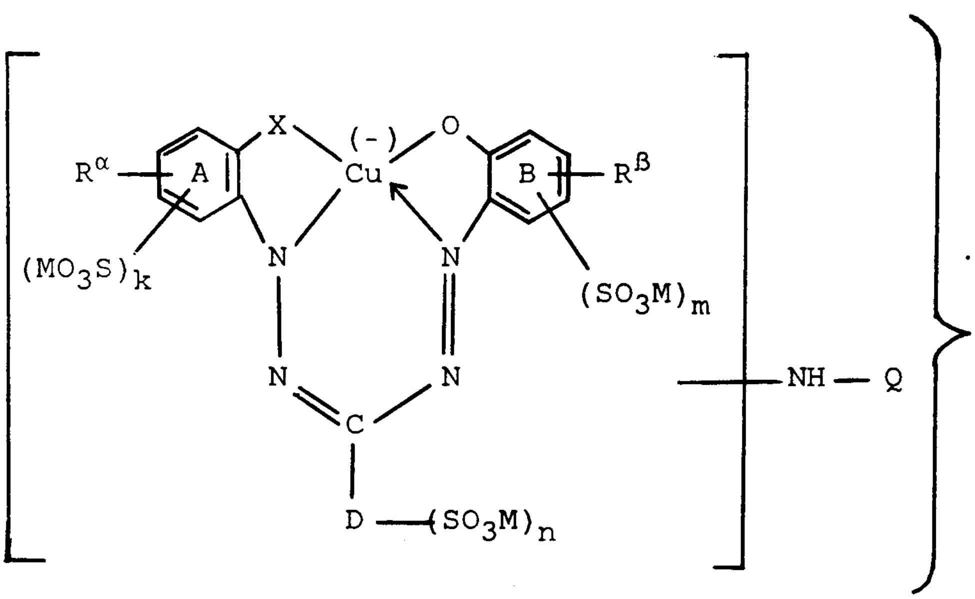

(1a)

in welcher bedeuten:

- $R^{\alpha}$ ist ein Wasserstoffatom oder die angegebene Gruppe -NH-Q oder eine Methyl-, Methoxy-, Ethoxy- oder Nitrogruppe oder ein Chloratom;
- $R^{\beta}$ ist ein Wasserstoffatom oder die angegebene Gruppe -NH-Q oder eine Methyl-, Methoxy-, Ethoxy-, Ethylsulfonyl- oder Nitrogruppe oder ein Chloratom;
- k ist die Zahl Null, 1 oder 2,
- m ist die Zahl Null, 1 oder 2 und
- n ist die Zahl Null, 1 oder 2,

wobei die Summe von (k + m + n) gleich 2 oder 3 ist;

M, D, Q und X haben die in mindestens einem der Ansprüche 1 bis 6 genannten Bedeutungen;

die faserreaktive Gruppierung -NH-Q ist an den Benzolring A oder den Benzolring B oder an ein aromatisches C-Atom eines Benzol- oder Naphthalinringes von D gebunden.

**6.** Verfahren nach Anspruch 1, dadurch gekennzeichnet, daß die Verbindung der Formel (1) eine Verbindung der allgemeinen Formel (1b)

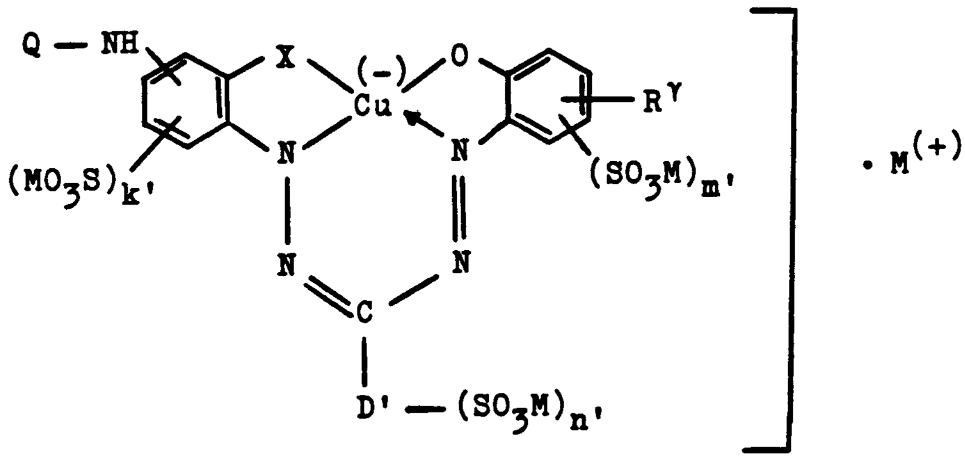

(1b)

ist, in welcher bedeuten:

k′ ist die Zahl Null oder 1,

m′ ist die Zahl 1 oder 2 und

n′ ist die Zahl Null, 1 oder 2,

wobei die Summe von (k′ + m′ + n′) gleich 2 oder 3 ist;

$R^{\gamma}$ ist eine Methoxy-, Ethoxy-, Methyl- oder Ethylsulfonyl-Gruppe oder ein Chloratom oder ein Wasserstoffatom;

D′ ist ein Benzolring, der neben der Gruppierung $-(SO_3M)_{n'}$ durch eine Methoxy-, Ethoxy- oder Methylgruppe oder ein Chloratom substituiert sein kann;

M, Q und X haben die in Anspruch 1 genannten Bedeutungen.

**7.** Verfahren nach Anspruch 1, dadurch gekennzeichnet, daß die Verbindung der Formel (1) eine Verbindung der allgemeinen Formel (1c)

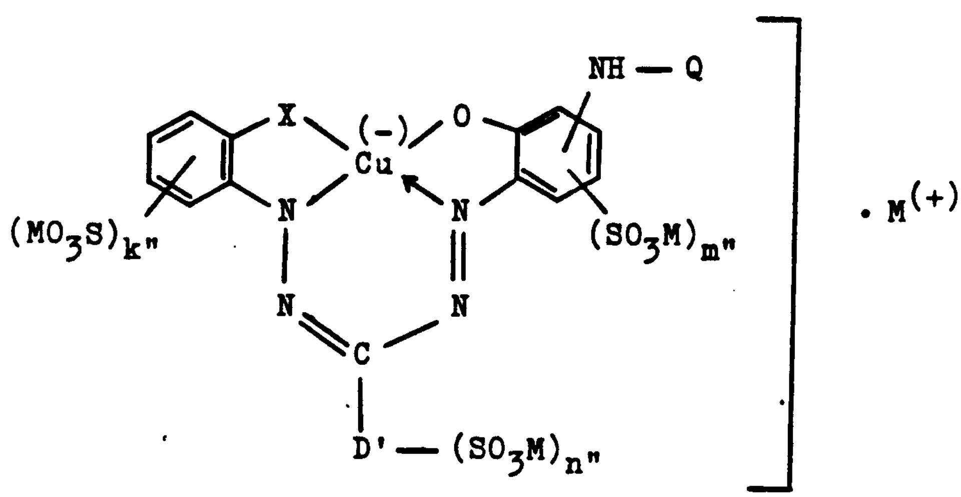

(1c)

ist, in welcher bedeuten:

k″ ist die Zahl Null, 1 oder 2,

m″ ist die Zahl Null oder 1 und
n″ ist die Zahl Null, 1 oder 2,
wobei die Summe von (k″ + m″ + n″) gleich 2 oder 3 ist;
D′ ist ein Benzolring, der neben der Gruppierung $-(SO_3M)_{n''}$ durch eine Methoxy-, Ethoxy- oder Methylgruppe oder ein Chloratom substituiert sein kann;
M, Q und X haben die in Anspruch 1 genannten Bedeutungen.

**8.** Verfahren nach mindestens einem der Ansprüche 1 bis 7, dadurch gekennzeichnet, daß X die Oxygruppe oder die Carbonyloxygruppe ist.

**9.** Verfahren nach mindestens einem der Ansprüche 1 bis 8, dadurch gekennzeichnet, daß X die Carbonyloxygruppe ist.

**10.** Verfahren nach Anspruch 1, dadurch gekennzeichnet, daß die Verbindung der Formel (1) eine Verbindung der allgemeinen Formel (1d)

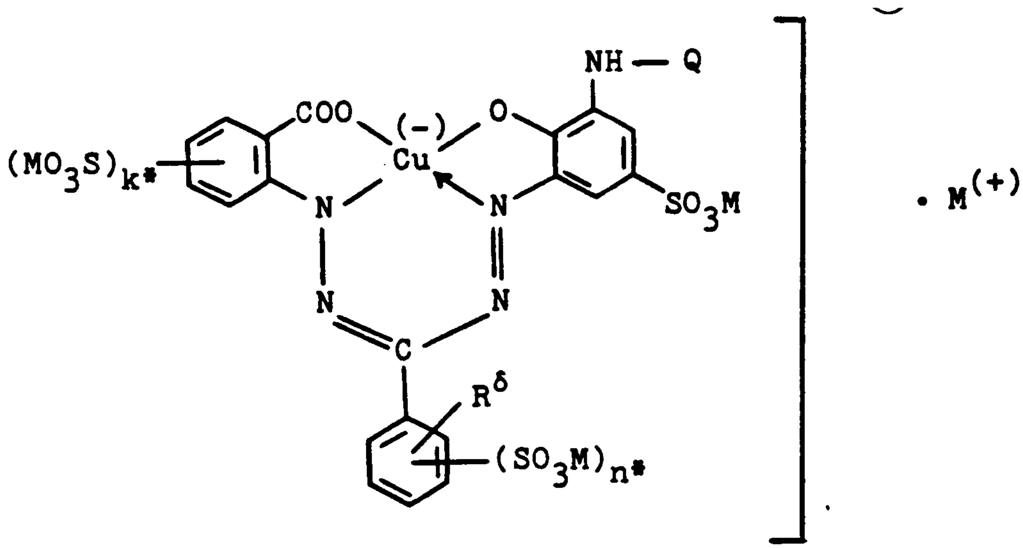

(1d)

ist, in welcher bedeuten:
k* ist die Zahl Null oder 1 und
n* ist die Zahl Null oder 1,
wobei die Summe von (k* + n*) die Zahl 1 oder 2, bevorzugt 1 ist;
$R^\delta$ ist ein Wasserstoffatom oder eine Methyl-, Methoxy-oder Ethoxygruppe oder ein Chloratom;
M und Q haben die in Anspruch 1 genannten Bedeutungen.

**11.** Verfahren nach Anspruch 1, dadurch gekennzeichnet, daß die Verbindung der Formel (1) eine Verbindung der allgemeinen Formel (1e)

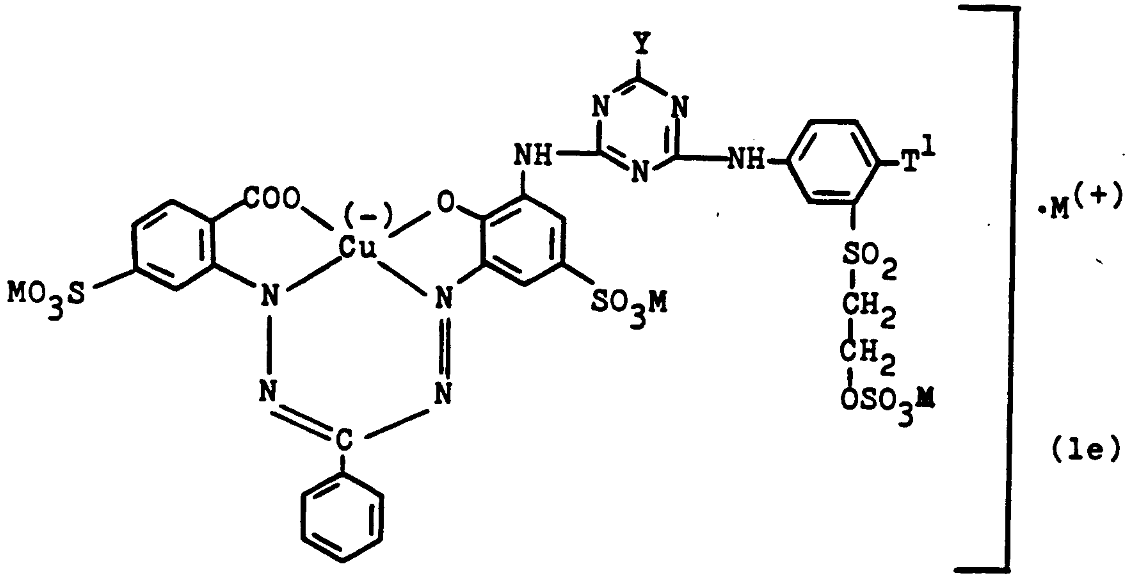

(1e)

ist, in welcher M die in Anspruch 1 genannte Bedeutung besitzt, X für ein Chlor- oder Fluoratom steht und $T^1$ β-Sulfatoethyl-amino-, N-Methyl-N-(β-sulfatoethyl)-amino-, N-[β-(β'-Carboxy-ethyl)-carbonamido]-ethyl-amino-, β-Sulfoethyl-amino- oder β-Sulfatoethyl-thio-Gruppe ist.

**12.** Verfahren nach mindestens einem der Ansprüche 1 bis 11, dadurch gekennzeichnet, daß Y ein Chloratom ist.

**13.** Verfahren nach mindestens einem der Ansprüche 1 bis 11, dadurch gekennzeichnet, daß Y ein Fluoratom ist.

**14.** Verfahren nach mindestens einem der Ansprüche 1 bis 13, dadurch gekennzeichnet, daß Z die Vinylgruppe oder eine β-Sulfatoethyl-Gruppe ist.

**15.** Verfahren nach mindestens einem der Ansprüche 1 bis 14, dadurch gekennzeichnet, daß G eine Aminogruppe der allgemeinen Formel -N(R)- mit R gleich Wasserstoff, Methyl oder Ethyl ist.

**16.** Verfahren nach mindestens einem der Ansprüche 1 bis 15, dadurch gekennzeichnet, daß K die Ethylengruppe oder die n-Propylen-Gruppe oder eine Gruppe der Formel $-CH_2-CH_2-O-CH_2-CH_2-$ oder $-CH_2-CH_2-NH-CO-CH_2-CH_2-$ ist.

**17.** Verfahren nach mindestens einem der Ansprüche 1 bis 16, dadurch gekennzeichnet, daß W eine Sulfato-, Sulfo- oder Carboxygruppe ist.

**18.** Verfahren nach mindestens einem der Ansprüche 8 bis 17, dadurch gekennzeichnet, daß eine Sulfogruppe von $(MO_3S)_{k''}$- bzw. $(MO_3S)_{k*}$- in meta- oder para-Stellung, bevorzugt in para-Stellung zur Gruppe X an den Benzolkern gebunden ist.

**19.** Verfahren nach mindestens einem der Ansprüche 1 bis 18, dadurch gekennzeichnet, daß M ein Wasserstoffatom oder ein Alkalimetall ist.

**20.** Verwendung einer Kupferkomplex-Formazanverbindung von mindestens einem der Ansprüche 1 bis 19 als Farbstoff .

**21.** Verfahren zum Färben von hydroxy- und/oder carbonamidgruppenhaltigem Material, insbesondere Fasermaterial, bei welchem man einen Farbstoff auf das Material aufbringt oder ihn in das Material einbringt und ihn mittels Wärme und/oder mittels eines säurebindenden Mittels fixiert, dadurch gekennzeichnet, daß man als Farbstoff eine Verbindung entsprechend der allgemeinen Formel (1) von mindestens einem der Ansprüche 1 bis 19 einsetzt.

## Claims

### Claims for the following Contracting States : DE, GB, FR, IT, CH, LI, BE

**1.** A copper complex formazan compound which conforms to the general formula (1)

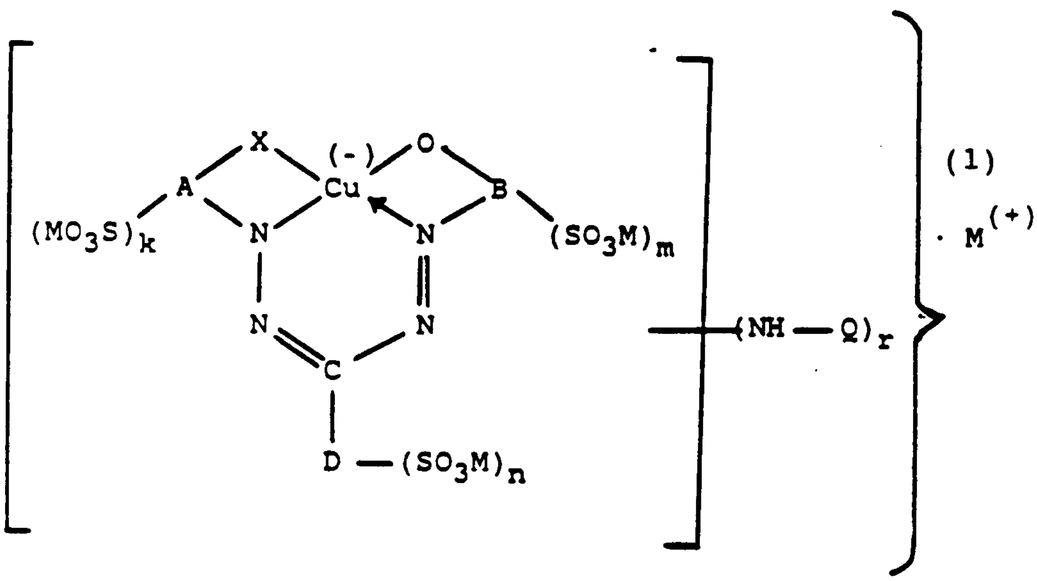

(1)

in which

M is a hydrogen atom or a salt-forming metal atom,

k is the number zero, 1 or 2,

m is the number zero, 1 or 2, and

n is the number zero, 1 or 2,

the sum of (k + m + n) being equal to an integer from 1 to 4,

A is a benzene ring or a naphthalene ring, which each can be substituted, in addition to the groups drawn in, by the indicated fiber-reactive group -NH-Q defined hereinafter and/or by 1 or 2 other substituents selected from the group consisting of halogen, nitro, carboxyl, alkyl of 1 to 4 carbon atoms, alkoxy of 1 to 4 carbon atoms, sulfamoyl, N-($C_1$-$C_4$)-alkylsulfamoyl, N,N-di-[($C_1$-$C_4$)-alkyl]-sulfamoyl, ($C_1$-$C_4$)-alkylsulfonyl and phenylsulfonyl, the radical X bonded to A and the nitrogen atom preferably being bonded to A in the ortho-position relative to each other,

B is a benzene ring or a naphthalene ring, which each can be substituted, in addition to the groups drawn in, by the indicated fiber-reactive group -NH-Q defined hereinafter and/or by 1 or 2 substituents selected from the group consisting of halogen, nitro, alkyl of 1 to 4 carbon atoms, alkoxy of 1 to 4 carbon atoms, sulfamoyl, N-($C_1$-$C_4$)-alkylsulfamoyl, N,N-di-[($C_1$-$C_4$)-alkyl]-sulfamoyl, ($C_1$-$C_4$)-alkylsulfonyl and phenylsulfonyl, the oxygen and nitrogen atoms bonded to B preferably being bonded to B in the ortho-position relative to each other,

D is a benzene or naphthalene ring which each, in addition to $-(SO_3M)_n$ and the indicated group -NH-Q, can additionally be substituted by 1 or 2 substituents selected from the group consisting of halogen, alkyl of 1 to 4 carbon atoms, alkoxy of 1 to 4 carbon atoms, nitro, hydroxy, carboxy and carbalkoxy of 2 to 5 carbon atoms,

X is a group of the formula $-SO_3^{(-)}$, the bonding to the copper atom and the negative charge thereof not being included, or is an oxy group -O- or a carbonyloxy group -CO-O-,

r is the number 1 or 2,

Q is a group of the general formula (2)

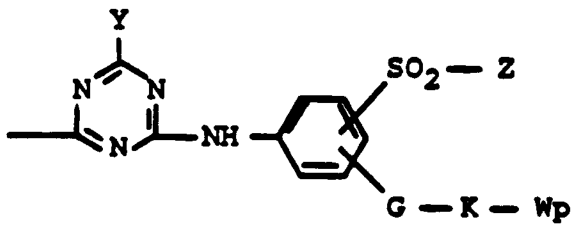

(2)

in which

Y is a halogen atom,

Z denotes the vinyl group or an ethyl group which is substituted in the $\beta$-position by an alkali-eliminable substituent,

G is the thio group -S- or an amino group of the formula -N(R)-, in which

R stands for a hydrogen atom or an alkyl group of 1 to 4 carbon atoms, which can be substituted, or is a group of the formula -K-Wp defined hereinafter,

K is an alkylene group or an arylene radical or an arylene-alkylene or an alkylene-arylene radical, where not only the alkylene but also the arylene radicals can be substituted and where not only the alkylene radicals but also the alkylene and arylene radicals in the alkylene-arylene and arylene-alkylene radicals can additionally be interrupted by at least one hetero group,

W is a water-solubilizing group and

p stands for the number 1, 2 or 3,

the fiber-reactive grouping -NH-Q is bonded to an aromatic carbon atom of a benzene or naphthalene ring of A or of B or of D or to an aliphatic carbon atom of D or of a substituent on A or B, except that in the case of r = 2 the two -NH-Q groups are not bonded simultaneously to A or to B or to D.

**2.** A compound as claimed in claim 1, wherein r stands for the number 1.

**3.** A compound as claimed in claim 1 or 2, wherein the fiber-reactive grouping -NH-Q is bonded to an aromatic carbon atom of the benzene or naphthalene ring of A or of B.

**4.** A compound as claimed in at least one of claims 1 to 3, wherein A and B both represent a benzene ring having the indicated meanings.

**5.** A compound as claimed in claim 1 of the general formula (1a)

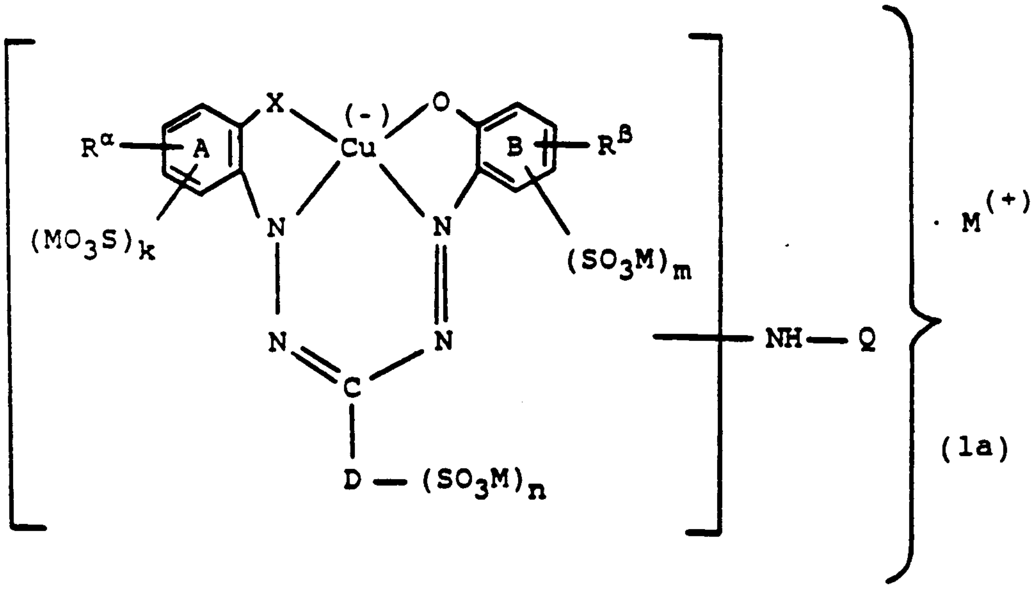

(1a)

in which

- $R^{\alpha}$ is a hydrogen atom or the indicated group -NH-Q or a methyl, methoxy, ethoxy or nitro group or a chlorine atom,
- $R^{\beta}$ is a hydrogen atom or the indicated group -NH-Q or a methyl, methoxy, ethoxy, ethylsulfonyl or nitro group or a chlorine atom,
- k is the number zero, 1 or 2,
- m is the number zero, 1 or 2 and
- n is the number zero, 1 or 2,

the sum of (k + m + n) being equal to 2 or 3,

- M, D, Q and X have the meanings mentioned in at least one of claims 1 to 6,

the fiber-reactive grouping -NH-Q is bonded to the benzene ring A or to the benzene ring B or to an aromatic carbon atom of a benzene or naphthalene ring D.

**6.** A compound as claimed in claim 1 of the general formula (1b)

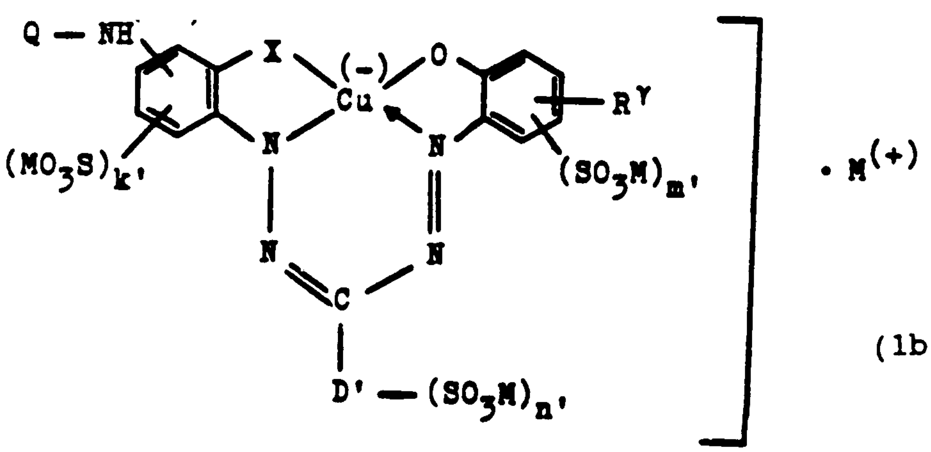

(1b)

in which

- k' is the number zero or 1,
- m' is the number 1 or 2 and
- n' is the number zero, 1 or 2,

the sum of (k' + m' + n') being equal to 2 or 3,

- $R^{\gamma}$ is a methoxy, ethoxy, methyl or ethylsulfonyl group or a chlorine atom or a hydrogen atom,

| | |
|---|---|
| D' | is a benzene ring which, in addition to the grouping $-(SO_3M)_{n'}$, can be substituted by a methoxy, ethoxy or methyl group or a chlorine atom, |
| M, Q and X | have the meanings mentioned in claim 1. |

**7.** A compound as claimed in claim 1 of the general formula (1c)

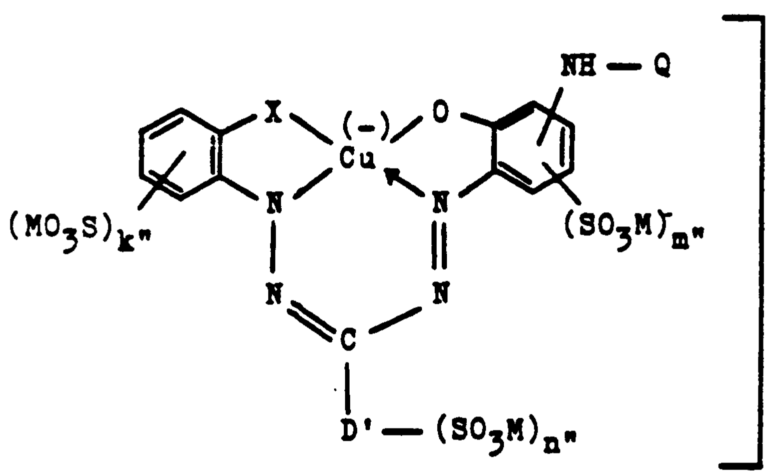

• $M^{(+)}$

(1c)

in which

| | |
|---|---|
| k" | is the number zero, 1 or 2, |
| m" | is the number zero or 1 and |
| n" | is the number zero, 1 or 2, |

the sum of (k" + m" + n") being equal to 2 or 3,

| | |
|---|---|
| D' | is a benzene ring which, in addition to the grouping $-(SO_3M)_{n''}$, can be substituted by a methoxy, ethoxy or a methyl group or a chlorine atom, |
| M, Q and X | having the meanings mentioned in claim 1. |

**8.** A compound as claimed in at least one of claims 1 to 7, wherein X is an oxy group or a carbonyloxy group.

**9.** A compound as claimed in at least one of claims 1 to 8, wherein X is a carbonyloxy group.

**10.** A compound as claimed in claim 1 of the general formula (1d)

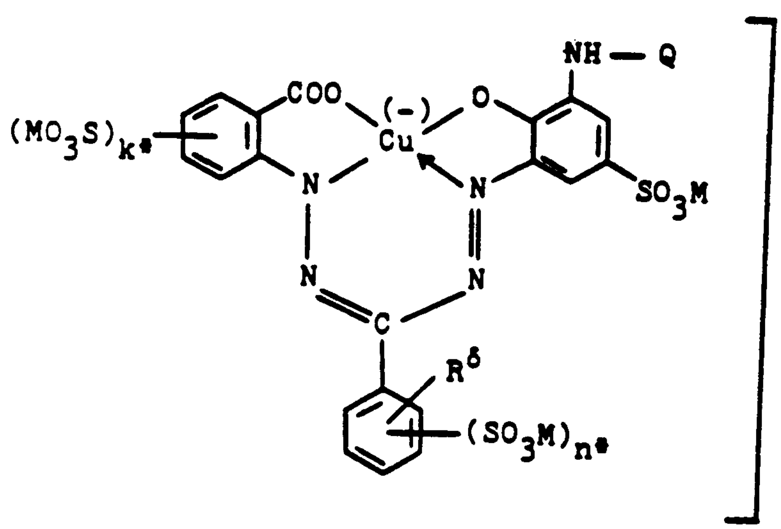

• $M^{(+)}$

(1d)

in which

$k^*$ is the number zero or 1 and

$n^*$ is the number zero or 1,

the sum of ($k^*$ + $n^*$) being the number 1 or 2, preferably 1,

$R^\delta$ is a hydrogen atom or a methyl, methoxy or ethoxy group or a chlorine atom,

M and Q have the meanings mentioned in claim 1.

**11.** A compound as claimed in claim 1 of the general formula (1e)

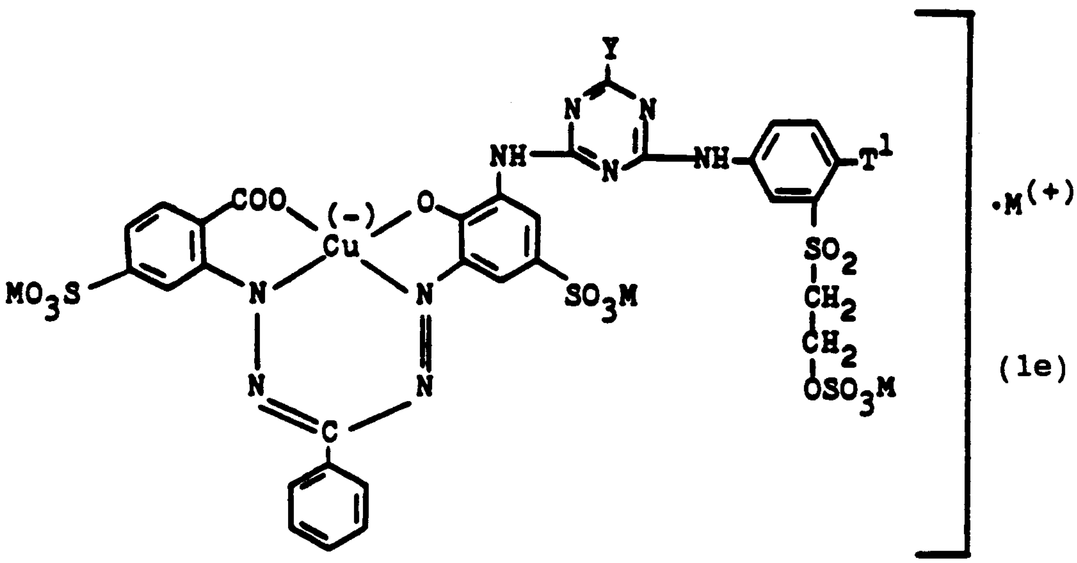

(1e)

in which M has the meaning mentioned in claim 1, X stands for a chlorine or fluorine atom or $T^1$ is a $\beta$-sulfatoethylamino, N-methyl-N-($\beta$-sulfatoethyl)-amino, N-[$\beta$-($\beta$'-carboxyethyl)-carboxamido]-ethyl-amino, $\beta$-sulfoethylamino or $\beta$-sulfatoethylthio group.

**12.** A compound as claimed in at least one of claims 1 to 11, wherein Y is a chlorine atom.

**13.** A compound as claimed in one of claims 1 to 11, wherein Y is a fluorine atom.

**14.** A compound as claimed in at least one of claims 1 to 13, wherein Z is a vinyl group or a $\beta$-sulfatoethyl group.

**15.** A compound as claimed in at least one of claims 1 to 14, wherein G is an amino group of the general formula -N(R)- where R is equal to hydrogen, methyl or ethyl.

**16.** A compound as claimed in at least one of claims 1 to 15, wherein K is an ethylene group or an n-propylene group or a group of the formula $-CH_2-CH_2-O-CH_2-CH_2-$ or $-CH_2-CH_2-NH-CO-CH_2-CH_2-$.

**17.** A compound as claimed in at least one of claims 1 to 16, wherein W is a sulfato, sulfo or carboxyl group.

**18.** A compound as claimed in at least one of claims 8 to 17, wherein a sulfo group of $(MO_3S)_{k''}$- or $(MO_3S)_{k^*}$- is bonded in the meta- or para-position, preferably in the para-position, relative to the group X to the benzene nucleus.

**19.** A compound as claimed in at least one of claims 1 to 18, wherein M is a hydrogen atom or an alkali metal.

**20.** A process for preparing a compound of the general formula (1) mentioned and defined in claim 1, which comprises reacting cyanuric chloride or cyanuric fluoride in any desired order with an amino-containing copper complex formazan compound of the general formula (3)

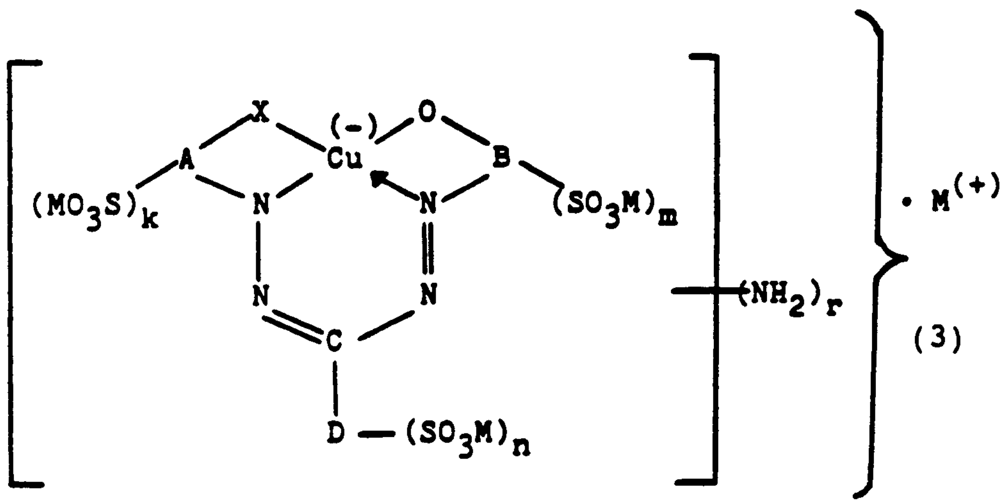

(3)

in which the individual symbols in the formula have the meanings mentioned for the formula (1), the amino group, which is present once or twice in the copper complex formazan molecule (r = 1 or 2) - analogously to the fiber-reactive grouping -NH-Q in the compounds of the formula (1) - being bonded to an aromatic carbon atom of a benzene or naphthalene ring of A or of B or of D or to an aliphatic carbon atom of D or of a substituent on A or B, except in the case of r = 2 the two amino groups not being bonded simultaneously to A or to B or to D, and with an aniline compound of the general formula (4)

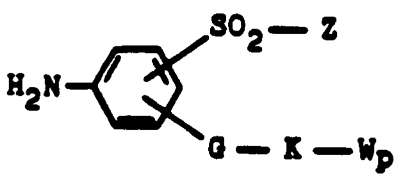

(4)

in which G, K, W, p and Z have the meanings mentioned in claim 1.

**21.** The use of a copper complex formazan compound of at least one of claims 1 to 19, as a dye.

**22.** A process for dyeing hydroxyl- and/or carboxamido-containing materials, in particular fiber material, wherein a dye is applied to or introduced into the material and fixed by means of heat and/or by means of an acid-binding agent, which comprises using as the dye a compound of at least one of claims 1 to 19.

**Claims for the following Contracting State : ES**

**1.** A process for preparing a copper complex formazan compound which conforms to the general formula (1)

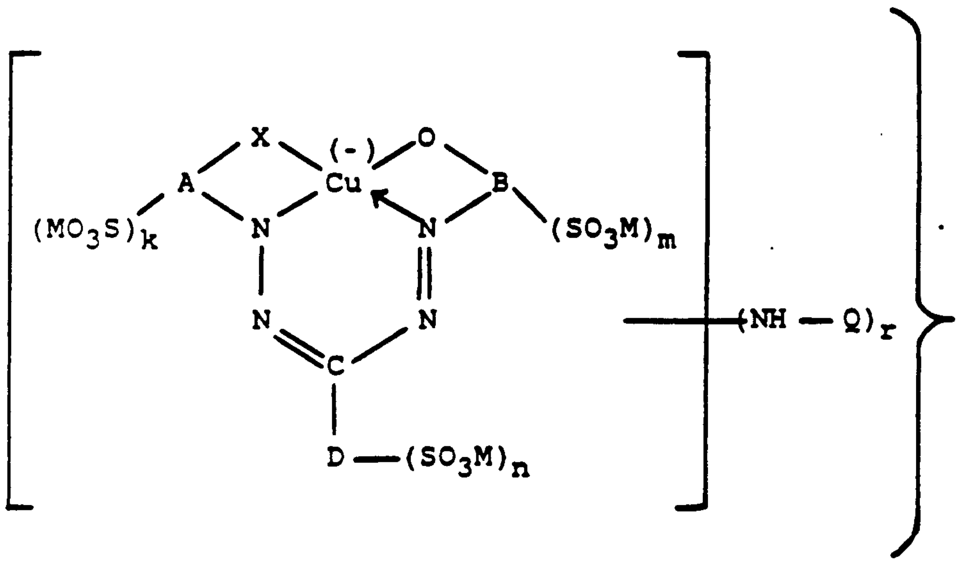

(1)

in which

- M is a hydrogen atom or a salt-forming metal atom,
- k is the number zero, 1 or 2,
- m is the number zero, 1 or 2, and
- n is the number zero, 1 or 2,

the sum of (k + m + n) being equal to an integer from 1 to 4,

- A is a benzene ring or a naphthalene ring, which each can be substituted, in addition to the groups drawn in, by the indicated fiber-reactive group -NH-Q defined hereinafter and/or by 1 or 2 other substituents selected from the group consisting of halogen, nitro, carboxyl, alkyl of 1 to 4 carbon atoms, alkoxy of 1 to 4 carbon atoms, sulfamoyl, N-($C_1$-$C_4$)-alkylsulfamoyl, N,N-di-[($C_1$-$C_4$)-alkyl]-sulfamoyl, ($C_1$-$C_4$)-alkylsulfonyl and phenylsulfonyl, the radical X bonded to A and the nitrogen atom preferably being bonded to A in the ortho-position relative to each other,
- B is a benzene ring or a naphthalene ring, which each can be substituted, in addition to the groups drawn in, by the indicated fiber-reactive group -NH-Q defined hereinafter and/or by 1 or 2 substituents selected from the group consisting of halogen, nitro, alkyl of 1 to 4 carbon atoms, alkoxy of 1 to 4 carbon atoms, sulfamoyl, N-($C_1$-$C_4$)-alkylsulfamoyl, N,N-di-[($C_1$-$C_4$)-alkyl]-sulfamoyl, ($C_1$-$C_4$)-alkylsulfonyl and phenylsulfonyl, the oxygen and nitrogen atoms bonded to B preferably being bonded to B in the ortho-position relative to each other,
- D is a benzene or naphthalene ring which each, in addition to -$(SO_3M)_n$ and the indicated group -NH-Q, can additionally be substituted by 1 or 2 substituents selected from the group consisting of halogen, alkyl of 1 to 4 carbon atoms, alkoxy of 1 to 4 carbon atoms, nitro, hydroxy, carboxy and carbalkoxy of 2 to 5 carbon atoms,
- X is a group of the formula -$SO_3^{(-)}$, the bonding to the copper atom and the negative charge thereof not being included, or is an oxy group -O- or a carbonyloxy group -CO-O-,
- r is the number 1 or 2,
- Q is a group of the general formula (2)

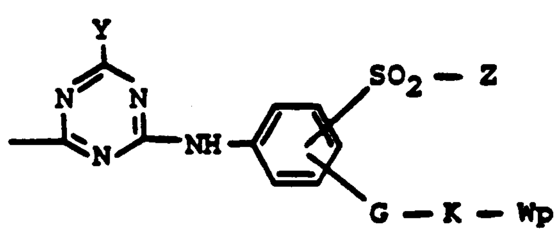

(2)

in which

Y is a halogen atom,

Z denotes the vinyl group or an ethyl group which is substituted in the β-position by an alkali-eliminable substituent,

G is the thio group -S- or an amino group of the formula -N(R)-, in which

R stands for a hydrogen atom or an alkyl group of 1 to 4 carbon atoms, which can be substituted, or is a group of the formula -K-Wp defined hereinafter,

K is an alkylene group or an arylene radical or an arylene-alkylene or an alkylene-arylene radical, where not only the alkylene but also the arylene radicals can be substituted and where not only the alkylene radicals but also the alkylene and arylene radicals in the alkylene-arylene and arylene-alkylene radicals can additionally be interrupted by at least one hetero group,

W is a water-solubilizing group and

p stands for the number 1, 2 or 3,

the fiber-reactive grouping -NH-Q is bonded to an aromatic carbon atom of a benzene or naphthalene ring of A or of B or of D or to an aliphatic carbon atom of D or of a substituent on A or B, except that in the case of r = 2 the two -NH-Q groups are not bonded simultaneously to A or to B or to D, which comprises reacting cyanuric chloride or cyanuric fluoride in any desired order with an amino-containing copper complex formazan compound of the general formula (3)

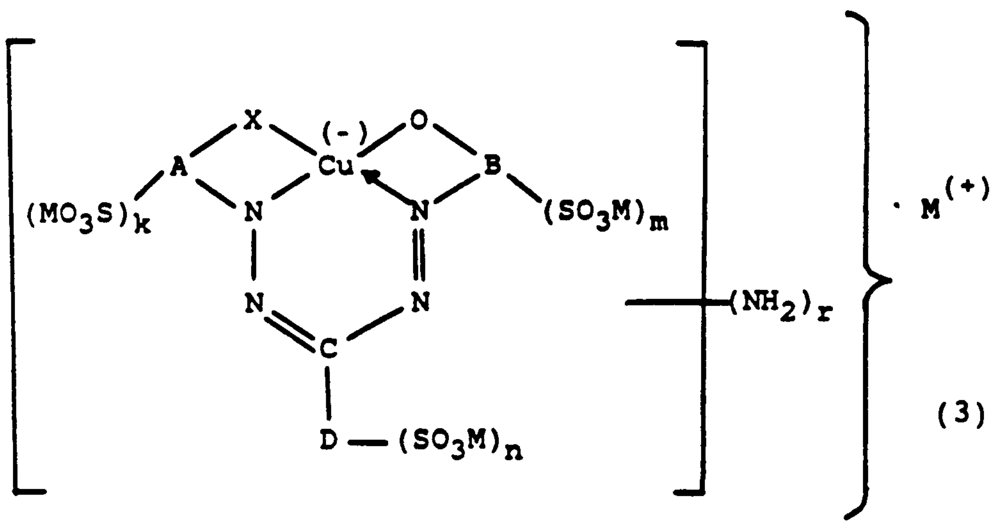

(3)

in which the individual symbols in the formula have the meanings mentioned for the formula (1), the amino group, which is present once or twice in the copper complex formazan molecule (r = 1 or 2) - analogously to the fiber-reactive grouping -NH-Q in the compounds of the formula (1) - being bonded to an aromatic carbon atom of a benzene or naphthalene ring of A or of B or of D or to an aliphatic carbon atom of D or of a substituent on A or B, except in the case of r = 2 the two amino groups not being bonded simultaneously to A or to B or to D, and with an aniline compound of the general formula (4)

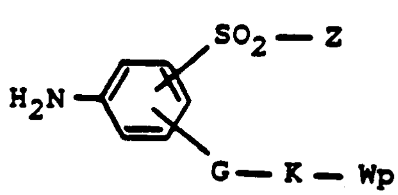

(4)

in which G, K, W, p and Z have the abovementioned meanings.

**2.** The process as claimed in claim 1, wherein r stands for the number 1.

3. The process as claimed in claim 1 or 2, wherein the fiber-reactive grouping -NH-Q is bonded to an aromatic carbon atom of the benzene or naphthalene ring of A or of B.

4. The process as claimed in at least one of claims 1 to 3, wherein A and B both represent a benzene ring having the indicated meanings.

5. The process as claimed in claim 1, wherein the compound of the formula (1) is a compound of the general formula (1a)

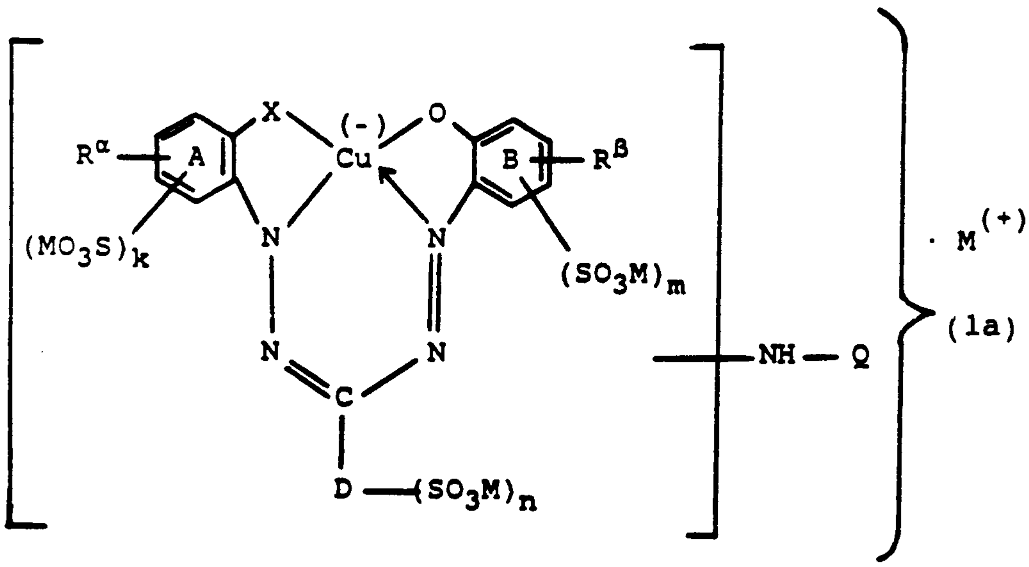

(1a)

in which

$R^{\alpha}$ is a hydrogen atom or the indicated group -NH-Q or a methyl, methoxy, ethoxy or nitro group or a chlorine atom,

$R^{\beta}$ is a hydrogen atom or the indicated group -NH-Q or a methyl, methoxy, ethoxy, ethylsulfonyl or nitro group or a chlorine atom,

k is the number zero, 1 or 2,

m is the number zero, 1 or 2 and

n is the number zero, 1 or 2,

the sum of (k + m + n) being equal to 2 or 3,

M, D, Q and X have the meanings mentioned in at least one of claims 1 to 6,

the fiber-reactive grouping -NH-Q is bonded to the benzene ring A or to the benzene ring B or to an aromatic carbon atom of a benzene or naphthalene ring D.

6. The process as claimed in claim 1, wherein the compound of the formula (1) is a compound of the general formula (1b)

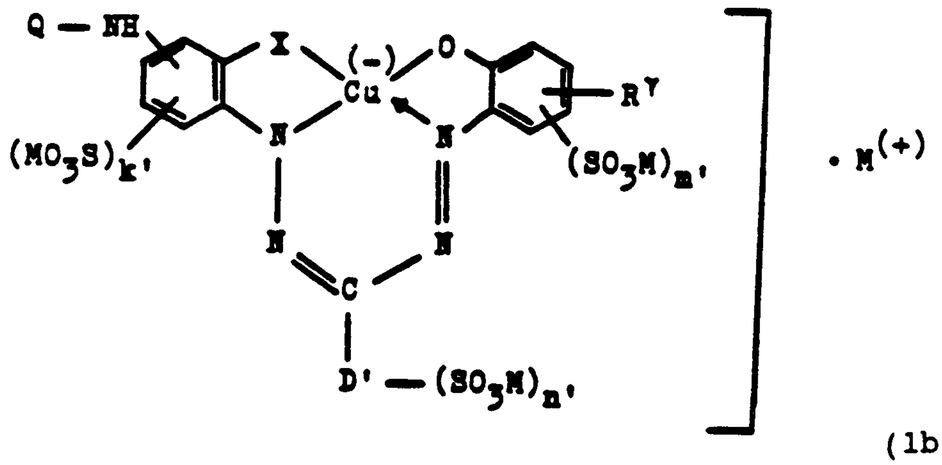

(1b)

in which

k' is the number zero or 1,

m' is the number 1 or 2 and

n' is the number zero, 1 or 2,

the sum of (k' + m' + n') being equal to 2 or 3,

$R^{\gamma}$ is a methoxy, ethoxy, methyl or ethylsulfonyl group or a chlorine atom or a hydrogen atom,

D' is a benzene ring which, in addition to the grouping $-(SO_3M)_{n'}$, can be substituted by a methoxy, ethoxy or methyl group or a chlorine atom,

M, Q and X have the meanings mentioned in claim 1.

7. A compound as claimed in claim 1, wherein the compound of the formula (I) is a compound of the general formula (1c)

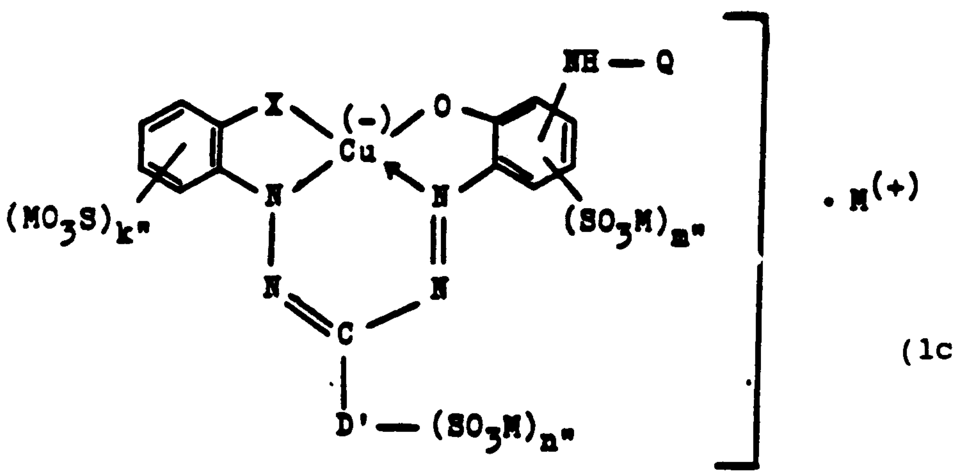

(1c)

in which

k'' is the number zero, 1 or 2,

m'' is the number zero or 1 and

n'' is the number zero, 1 or 2,

the sum of (k'' + m'' + n'') being equal to 2 or 3,

D' is a benzene ring which, in addition to the grouping $-(SO_3M)_{n''}$, can be substituted by a methoxy, ethoxy or a methyl group or a chlorine atom,

M, Q and X having the meanings mentioned in claim 1.

8. The process as claimed in at least one of claims 1 to 7, wherein X is an oxy group or a carbonyloxy group.

**9.** The process as claimed in at least one of claims 1 to 8, wherein X is a carbonyloxy group.

**10.** The process as claimed in claim 1, wherein the compound of the formula (1) is a compound of the general formula (1d).

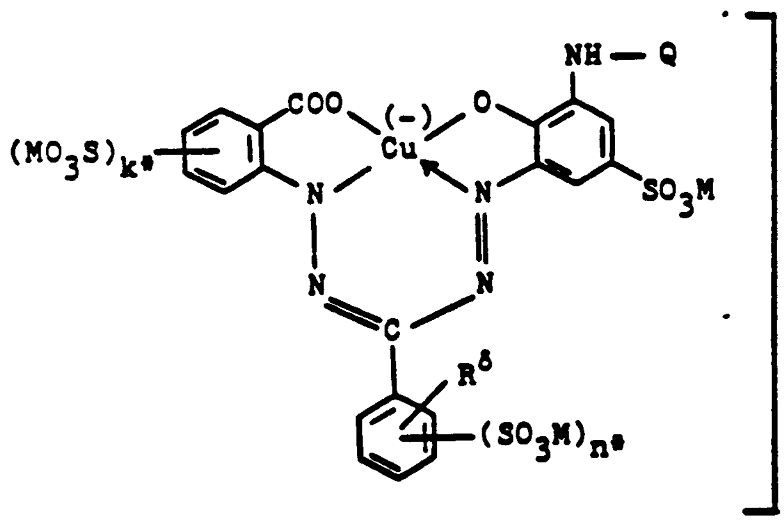

$\cdot M^{(+)}$

(1d)

in which

k* is the number zero or 1 and

n* is the number zero or 1,

the sum of (k* + n*) being the number 1 or 2, preferably 1,

$R^{\delta}$ is a hydrogen atom or a methyl, methoxy or ethoxy group or a chlorine atom,

M and Q have the meanings mentioned in claim 1.

**11.** The process as claimed in claim 1, wherein the compound of the formula (1) is a compound of the general formula (1e)

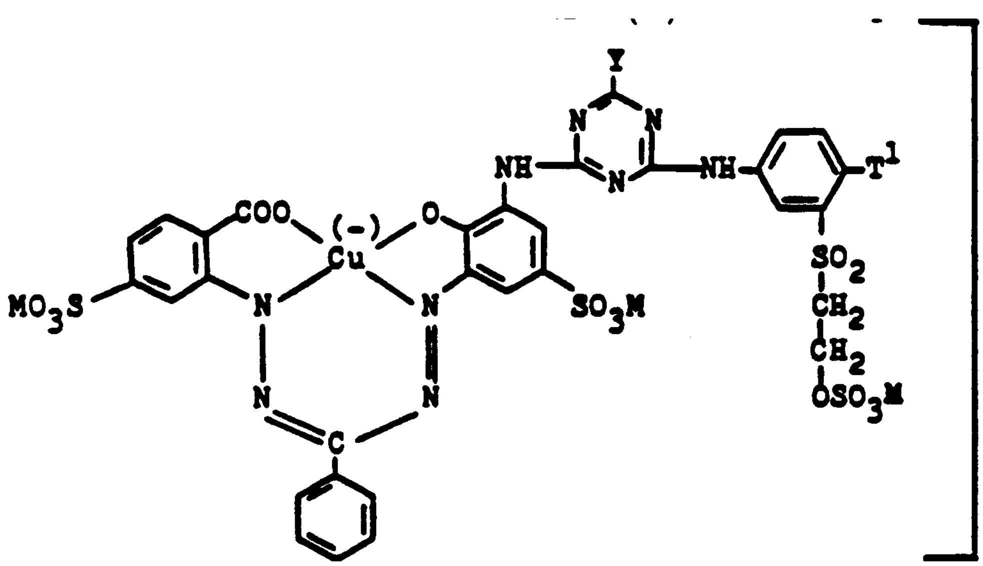

$\cdot M^{(+)}$

(1e)

in which M has the meaning mentioned in claim 1, X stands for a chlorine or fluorine atom and $T^1$ is a $\beta$-sulfatoethylamino, N-methyl-N-($\beta$-sulfatoethyl)-amino, N-[$\beta$-($\beta$'-carboxyethyl)-carboxamido]-ethylamino, $\beta$-sulfoethylamino or $\beta$-sulfatoethylthio group.

**12.** The process as claimed in at least one of claims 1 to 11, wherein Y is a chlorine atom.

**13.** The process as claimed in at least one of claims 1 to 11, wherein Y is a fluorine atom.

**14.** The process as claimed in at least one of claims 1 to 13, wherein Z is a vinyl group or a $\beta$-sulfatoethyl group.

**15.** The process as claimed in at least one of claims 1 to 14, wherein G is an amino group of the general formula -N(R)- where R is equal to hydrogen, methyl or ethyl.

**16.** The process as claimed in at least one of claims 1 to 15, wherein K is an ethylene group or an n-propylene group or a group of the formula $-CH_2-CH_2-O-CH_2-CH_2-$ or $-CH_2-CH_2-NH-CO-CH_2-CH_2-$.

**17.** The process as claimed in at least one of claims 1 to 16, wherein W is a sulfato, sulfo or carboxyl group.

**18.** The process as claimed in at least one of claims 8 to 17, wherein a sulfo group of $(MO_3S)_{k''}$- or $(MO_3S)_{k*}$- is bonded in the meta- or para-position, preferably in the para-position, relative to the group X to the benzene nucleus.

**19.** The process as claimed in at least one of claims 1 to 18, wherein M is a hydrogen atom or an alkali metal.

**20.** The use of a copper complex formazan compound of at least one of claims 1 to 19, as a dye.

**21.** A process for dyeing hydroxyl- and/or carboxamido-containing material, in particular fiber material, wherein a dye is applied to or introduced into the material and fixed by means of heat and/or by means of an acid-binding agent, which comprises using as the dye a compound conforming to the general formula (1) of at least one of claims 1 to 19.

**Revendications**

**Revendications pour les Etats contractants suivants : DE, GB, FR, IT, CH, LI, BE**

**1.** Composé formazanique complexe de cuivre, répondant à la formule générale (1)

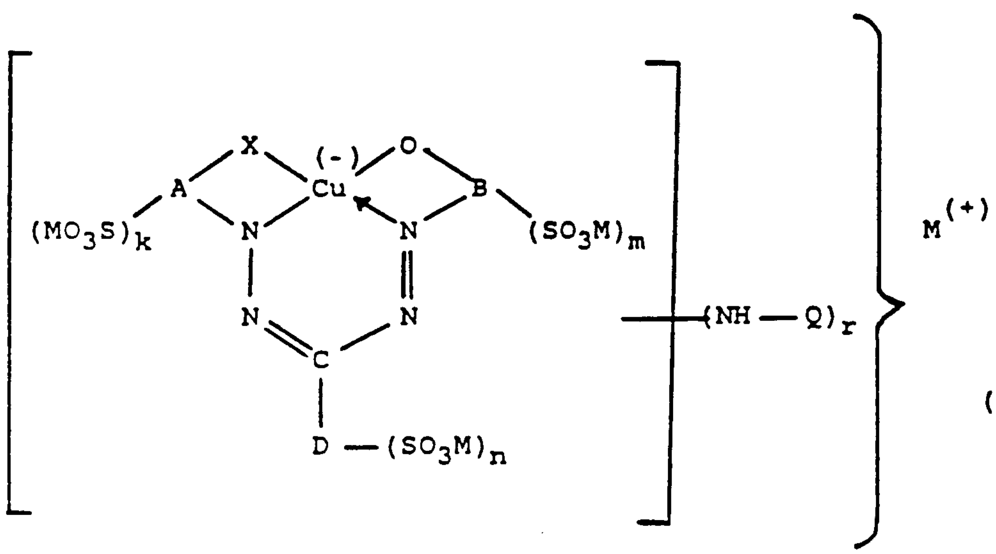

(1)

dans laquelle:
M représente un atome d'hydrogène ou un atome de métal formateur de sel;
k est nul ou représente un nombre valant 1 ou 2,
m est nul ou représente un nombre valant 1 ou 2, et
n est nul ou représente un nombre valant 1 ou 2,

la somme de (k + m + n) étant égale à un nombre entier valant de 1 à 4;

A représente un noyau benzénique ou un noyau napthtalénique qui, en plus des groupes indiqués dans la formule, peuvent porter le groupe -NH-Q pouvant réagir avec les fibres, indiqué et défini ci-après et/ou peuvent porter comme substituant(s)un ou deux autres substituant(s) choisi(s) parmi les substituants halogèno, nitro, carboxy, alkyle ayant 1 à 4 atomes , alcoxy ayant 1 à 4 atomes de carbone, sulfamoyle, N-alkyl (en $C_1$-$C_4$)-sulfamoyle, N,N-Di-[alkyl (en $C_1$-$C_4$)] -sulfamoyle, alkyl (en $c_1$ à $C_4$) sulfamoyle et phénylsulfonyle, le reste X fixé sur A et l'atome d'azote étant de préférence fixés sur A en position ortho l'un par rapport à l'autre;

B représente un noyau benzénique ou un noyau napthalénique qui, en plus des groupes indiqués dans la formule, peuvent porter le groupe -NH-Q pouvant réagir avec les fibres, indiqué et défini et/ou peuvent porter un ou deux substituants, appartenant à l'ensemble formé par les substituants halogéno,nitro, alkyle ayant 1 à 4 atomes de carbone, alcoxy ayant 1 à 4 atomes de carbone, sulfamoyle, N-alkyl[ (en $C_1$-$C_4$)]-sulfamoyle,N,N-di-alkyl (en $C_1$-$C_4$)-sulfamoyle, alkyl(en $C_1$-$C_4$) sulfonyle et phénylsulfonyle, les atomes d'oxygène et d'azote fixés sur B étant de préférence fixés sur B en position ortho l'un par rapport à l'autre;

D représente un noyau benzénique ou naphtalénique, qui tous deux peuvent, en plus du groupe -($SO_3M$) et du groupe -NH-Q, être encore substitués par un ou deux substituant(s) choisi(s) parmi un atome d'halogène, un groupe alkyle ayant 1 à 4 atomes de carbone, alcoxy ayant 1 à 4 atomes de carbone, nitro, hydroxy, carboxy et alcoxy ayant 2 à 5 atomes de carbone;

X représente un groupe de formule-$SO_3$(⁻), la liaison à l'atome de cuivre et sa charge négative disparaissant, ou bien X représente le groupe oxy -O- ou le groupe carbonyloxy -CO-O-;

r est un nombre valant 1 ou 2

Q représente un groupe de formule générale (2)

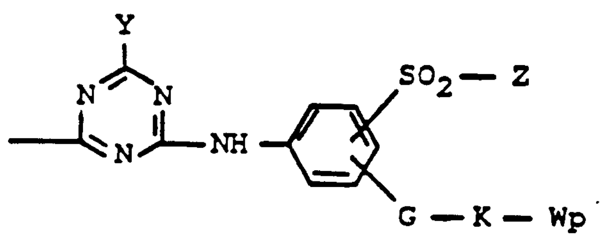

(2)

dans laquelle

Y représente un atome d'halogène

Z représente le groupe vinyle ou un groupe éthyle qui est substitué en position β par un substituant éliminable en milieu alcalin,

G représente le groupe thio-S- ou un groupe amino de formule -N(R)- dans laquelle R représente un atome d'hydrogène ou un groupe alkyle ayant 1 à 4 atomes de carbone, qui peut être substitué, ou bien il représente un groupe de formule -K-$W_p$ défini ci-après,

K représente un groupe alkylène ou un reste arylène ou un reste arylène-alkylène ou un reste alkylène-arylène, les restes alkylènes aussi bien qu'arylènes pouvant être substitués, et les restes alkylènes aussi bien que les restes alkylènes et arylènes dans les reste alkylènes-arylènes et arylènes-alkylènes pouvant être interrompus encore par au moins un hétéro groupe,

W représente un groupe conférant de la solubilité dans l'eau et,

p est un nombre valant 1, 2 ou 3 ;

le groupement, pouvant réagir avec les fibres, -NH-Q est fixé sur un atome de carbone aromatique d'un noyau benzénique ou naphtalénique de A ou de B ou de D ou sur un atome de carbone aliphatique de D ou sur un substituant de A ou B, mais, si r vaut 2, les deux groupes -NH-Q ne peuvent être simultanément fixés sur A ou sur B ou sur D.

**2.** Composé selon la revendication 1 caractérisé en ce que r représente le nombre 1.

**3.** Composé selon la revendication 1 ou 2, caractérisé en ce que le groupement -NH-Q pouvant réagir avec les fibres, est fixé sur un atome de carbone aromatique du noyau benzénique ou naphtalénique

de A ou de B.

**4.** Composé selon au moins une des revendications 1 à 3, caractérisé en ce que A et B représentent chacun un noyau benzénique ayant les significations indiquées.

**5.** Composé selon la revendication 1, de formule générale (1a):

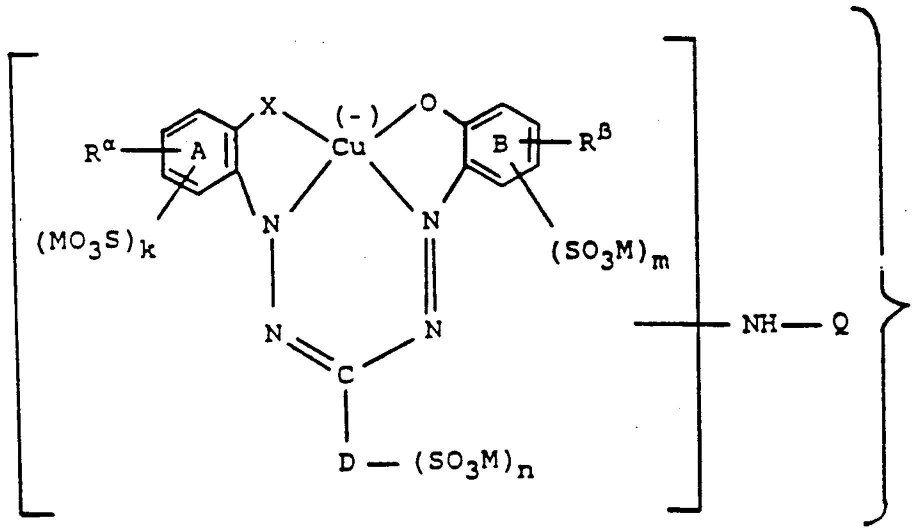

(1a)

dans laquelle :

$R^{\alpha}$ représente un atome d'hydrogène ou le groupe -NH-Q indiqué ou un groupe méthyle, méthoxy éthoxy ou nitro ou un atome de chlore;

$R^{\beta}$ représente un atome d'hydrogène ou le groupe -NH-Q indiqué ou un groupe méthyle, méthoxy,éthoxy, éthylesulfonyle ou nitro ou un atome de chlore;

k est un nombre nul ou valent 1 ou 2;

m est un nombre nul ou valent 1 ou 2 et,

n est un nombre nul ou valent 1 ou 2 ,

la somme de (k + m + n) étant égale à 2 ou 3;

M, D, Q et X ont au moins l'un des sens indiqués dans les revendications 1 à 6 ;

le groupement -NH-Q pouvant réagir avec les fibres est fixé sur le noyau benzénique A ou sur le noyau benzénique B ou sur un atome de carbone aromatique d'un noyau benzénique ou naptalénique de D.

**6.** Composé selon la revendication 1 de formule générale (1b)

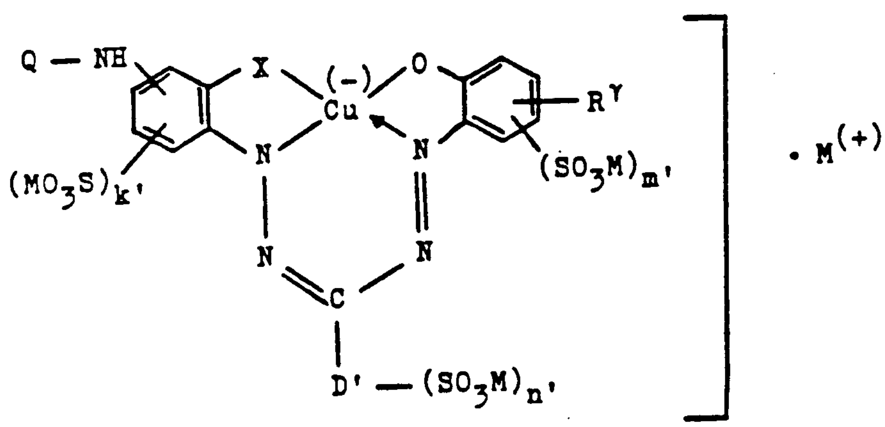

(1b)

dans laquelle :

k' est un nombre nul ou valant 1;

m' est un nombre valant 1 ou 2, et ,

n' est un nombre nul ou valant 1 ou 2,

la somme de (k' + m' + n') étant égale à 2 ou à 3,

$R^{\gamma}$ représente un groupe méthoxy,éthoxy,méthyl ou éthyl-sulfonyle, ou un atome de chlore ou un atome d'hydrogène,

D' est un noyau benzénique qui, en plus du groupement $-(SO_3M)_{n'}$ peut encore porter comme substituant un groupe méthoxy, éthoxy ou méthyle ou un atome de chlore;

M, Q et X ont les sens indiqués à la revendication 1.

**7.** Composé selon la revendication 1, de formule générale (1c)

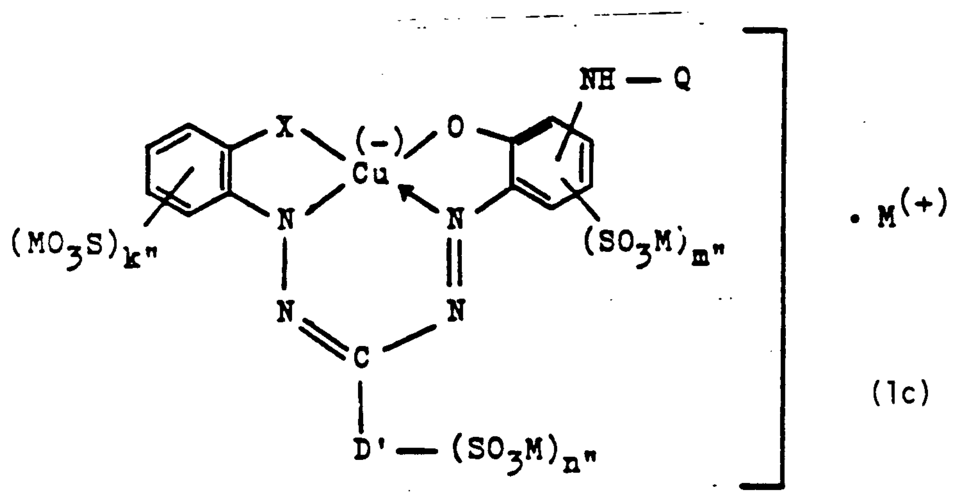

(1c)

dans laquelle :

k" représente un nombre nul ou valant 1 ou 2,

m" représente un nombre nul ou valant 1,

n" représente un nombre nul ou valant 1 ou 2,

la somme de (k" + m" + n") étant égale à 2 ou 3;

D' représente un noyau benzénique qui, en plus du groupement $-(SO_3M)_{n''}$ peut porter comme substituant un groupe méthoxy, éthoxy ou méthyle ou un atome de chlore;

M, Q et X ont les sens indiqués à la revendication 1.

**8.** Composé selon l'une au moins des revendications 1 à 7 caractérisé en ce que X représente le groupe oxy ou le groupe carbonyloxy.

**9.** Composé selon l'une au moins des revendications 1 à 8, caractérisé en ce que X représente le groupe carbonyloxy.

**10.** Composé selon la revendication 1, de formule générale (1d)

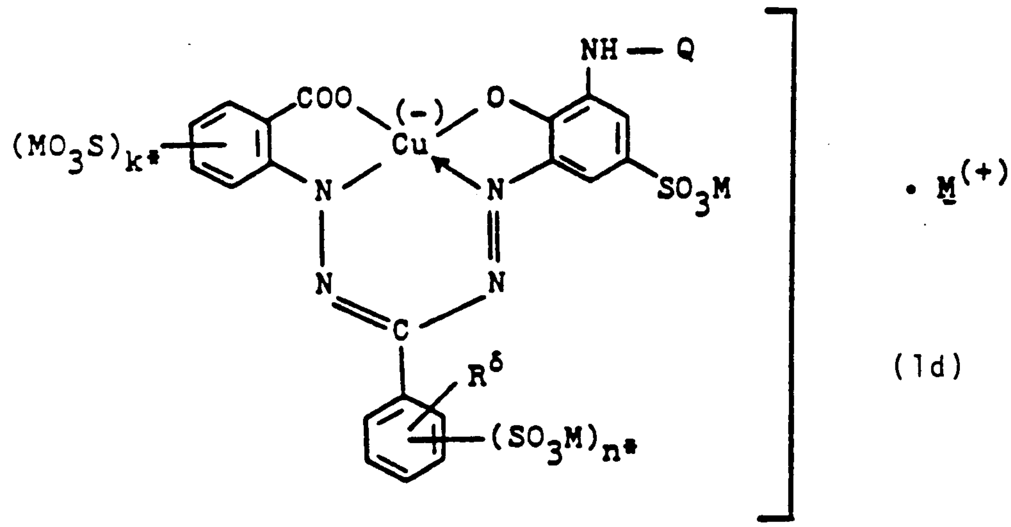

(1d)

dans laquelle :

k* est un nombre nul ou valant 1 et

n* est un nombre nul ou valant 1,

la somme de (k* + n*) est un nombre valant 1 ou 2, de préférence 1;

$R\delta$ représente un atome d'hydrogène ou un groupe méthyle, méthoxy ou éthoxy ou un atome de chlore;

M et Q ont les sens indiqués à la revendication 1.

**11.** Composé selon la revendication 1, de formule (1e)

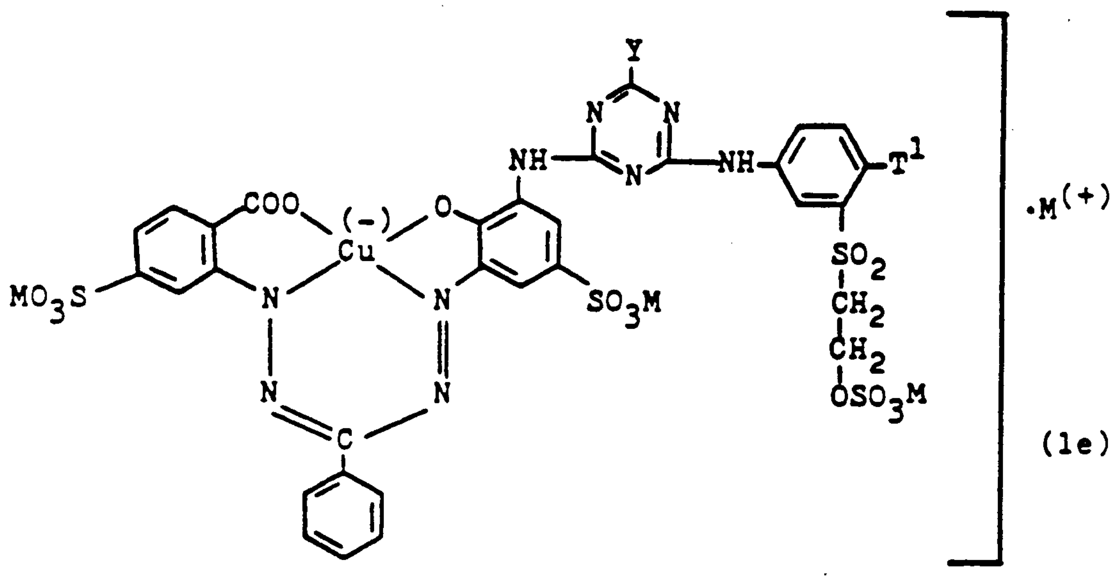

(1e)

dans laquelle M a le sens indiqué à la revendication 1, X représente un atome de chlore ou de fluor, et $T^1$ représente un groupe $\beta$-sulfato-éthyl-amino, N-méthyl-N-($\beta$-sulfatoéthyl)-amino, N-[$\beta$-($\beta$'-carboxy-éthyl)carboxamido]-éthyl-amino, $\beta$-sulfoéthyl-amino ou $\beta$-sulfatoéthyl-thio.

**12.** Composé selon l'une au moins des revendications 1 à 11, caractérisé en ce que Y représente un atome de chlore.

**13.** Composé selon l'une au moins des revendications 1 à 11, caractérisé en ce que Y représente un atome de fluor.

**14.** Composé selon l'une au moins des revendications 1 à 13, caractérisé en ce que Z représente le groupe vinyle ou un groupe $\beta$-sulfatoéthyle.

**15.** Composé selon l'une au moins des revendications 1 à 14, caractérisé en ce que G représente un groupe amino de formule générale-N(R)-, dans laquelle R représente un atome d'hydrogène ou un groupe méthyle ou éthyle.

**16.** Composé selon l'une au moins des revendications 1 à 15, caractérisé en ce que K représente le groupe éthylène, ou le groupe propylène ou un groupe de formule $-CH_2-CH_2-OCH_2-CH_2-$ ou $-CH_2-CH_2-NH-CO-CH_2-CH_2-$.

**17.** Composé selon l'une au moins des revendications 1 à 16, caractérisé en ce que W représente un groupe sulfato, sulfo ou carboxy.

**18.** Composé selon l'une au moins des revendications 1 à 17, caractérisé en ce qu'un groupe sulfo de $(MO_3S)_k$- ou $(MO_3S)_{k^*}$- est fixé en position méta ou para, de préférence en position para, par rapport au groupe X sur le noyau benzénique.

**19.** Composé selon l'une au moins des revendications 1 à 18, caractérisé en ce que M représente un atome d'hydrogène ou un métal alcalin.

**20.** Procédé pour préparer un composé de formule générale (1), cité et défini à la revendication 1, procédé caractérisé en ce qu'on fait réagir le chlorure de cyanuryle, ou le fluorure de cyanuryle, dans un ordre quelconque, avec un composé formazanique complexe de cuivre, contenant les groupes amino et répondant à la formule générale (3)

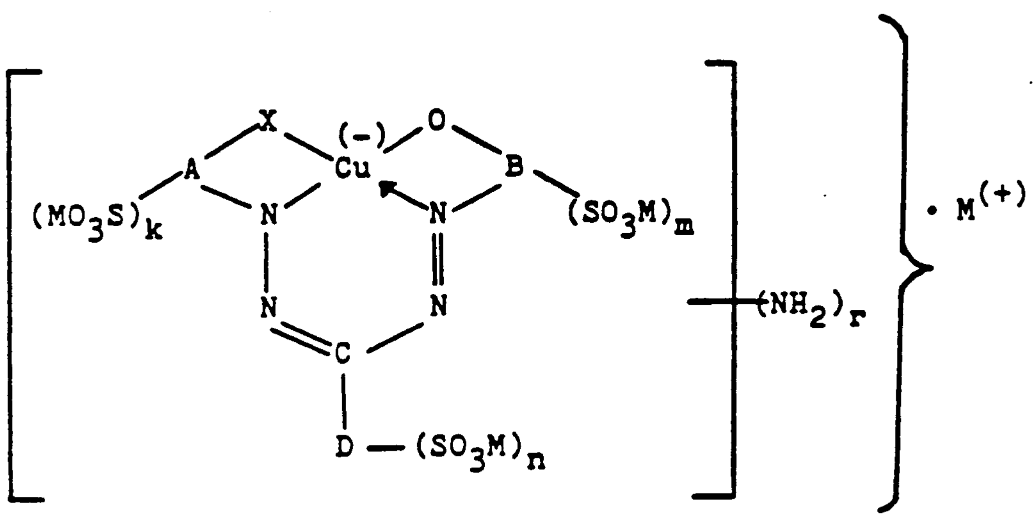

(3)

[dans laquelle les divers chaînons ont les sens indiqués pour la formule (1): le groupe amino qui est contenu une ou deux fois dans la molécule de composé formazanique complexe de cuivre (r valant 1 ou 2) est, de façon analogue au groupement -NH-Q pouvant réagir avec les fibres et qui est présent dans les composés de formule (1) fixé sur un atome de carbone aromatique d'un noyau benzénique ou naptalénique de A ou de B ou de D ou sur un atome de carbone aliphatique de D ou sur un susbtituant de A ou de B, mais, si r vaut 2, les deux groupes amino ne sont pas simultanément fixés sur A ou sur B ou sur D],
et avec une aniline de formule générale (4)

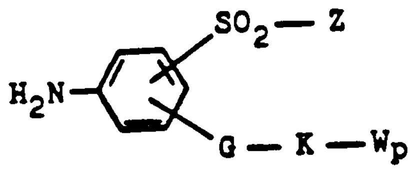

(4)

(dans laquelle G, K, W, p et Z ont les sens indiqués à la revendication 1).

**21.** Utilisation d'un composé formazanique complexe de cuivre, selon l'une au moins des revendications & à 19, comme colorant.

**22.** Procédé pour teindre des matières contenant des groupes hydroxyles et/ou carboxamides, en particulier de la matière fibreuse, selon lequel on applique un colorant sur la matière ou on l'introduit dans la matière et on l'y fixe à l'aide de la chaleur et/ou à l'aide d'un agent de fixation des acides, procédé caractérisé en ce qu'on utilise comme colorant un composé selon l'une au moins des revendications 1 à 19.

**Revendications pour l'Etat contractant suivant : ES**

**1.** Procédé pour préparer un composé farmazanique complexe de cuivre, répondant à la formule générale (1)

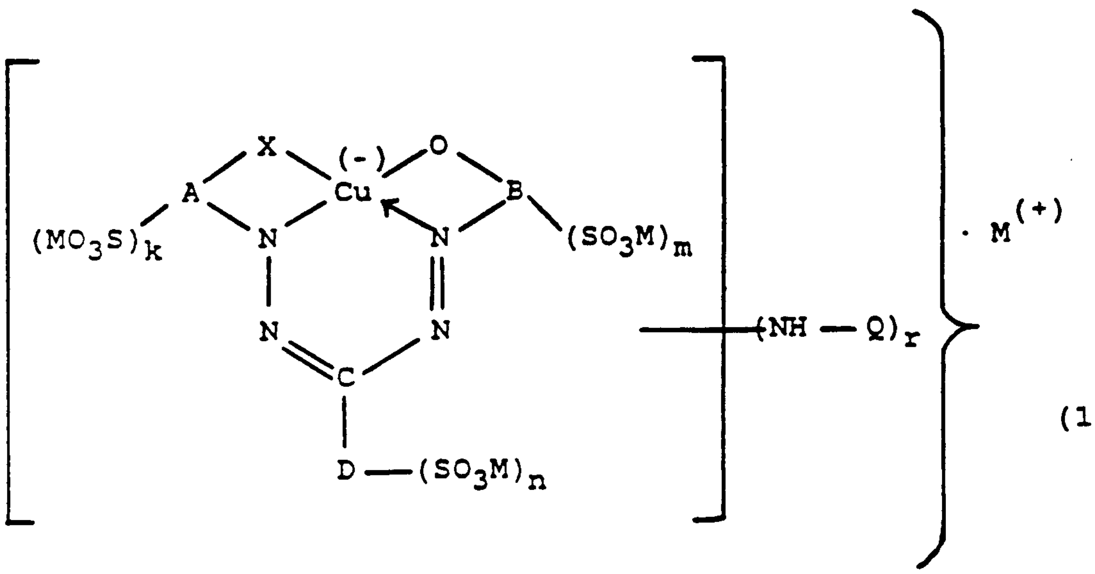

(1)

dans laquelle:
M représente un atome d'hydrogène ou un atome de métal formateur de sel;
k est nul ou représente un nombre valant 1 ou 2,
m est nul ou représente un nombre valant 1 ou 2, et
n est nul ou représente un nombre valant 1 ou 2,
la somme de (k + m + n) étant égale à un nombre entier valant de 1 à 4;

A représente un noyau benzénique ou un noyau napthtalénique qui, en plus des groupes indiqués dans la formule, peuvent porter le groupe -NH-Q pouvant réagir avec les fibres, indiqué et défini ci-après et/ou peuvent porter comme substituants un ou deux autres substituant(s) choisi(s) parmi les substituants halogèno, nitro, carboxy, alkyle ayant 1 à 4 atomes , alcoxy ayant 1 à 4 atomes de carbone, sulfamoyle, N-[alkyl (en $C_1$-$C_4$)] -sulfamoyle, N,N-Di-[alkyl (en $C_1$-$C_4$)] -sulfamoyle et phénylsulfonyle, le reste X fixé sur A et l'atome d'azote étant de préférence fixé sur A en position ortho l'un par rapport à l'autre;

B représente un noyau benzénique ou un noyau napthalénique qui, en plus des groupes indiqués dans la formule, peuvent porter le groupe -NH-Q pouvant réagir avec les fibres,

indiqué et défini ci-aprèset/ou peuvent porter un ou deux substituants, appartenant à l'ensemble des substituants halogéno, nitro, alkyle ayant 1 à 4 atomes de carbone, alcoxy ayant 1 à 4 atomes de carbone, sulfamoyle, N-[alkyl(en $C_1$-$C_4$)] -sulfamoyle,N,N-di- alkyl (en $C_1$-$C_4$)-sulfamoyle, [alkyl(en $C_4$-$C_4$)] sulfonyle et phénylsulfonyle, les atomes d'oxygène et d'azote fixés sur B étant de préférence fixés sur B en position ortho l'un par rapport à l'autre;

D représente un noyau benzénique ou naphtalénique, qui tous deux peuvent, en plus du groupe -($SO_3M$) et du groupe -NH-Q, encore être substitués par un ou deux substituant(s) choisi(s) parmi un atome d'halogène, un groupe alkyle ayant 1 à 4 atomes de carbone, alcoxy ayant 1 à 4 atomes de carbone, nitro, hydroxy, carboxy et carbalcoxy ayant 2 à 5 atomes de carbone;

X représente un groupe de formule-$SO_3(^-)$, la liaison à l'atome de cuivre et sa charge négative disparaissant, ou bien X représente le groupe oxy -O- ou le groupe carbonyloxy -CO-O-;

r est un nombre valant 1 ou 2

Q représente un groupe de formule générale (2)

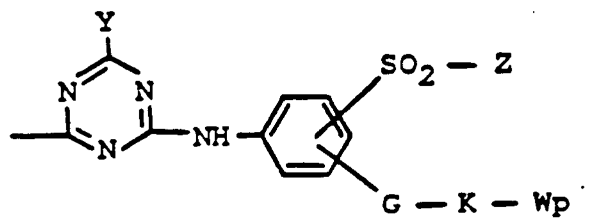

(2)

dans laquelle

Y représente un atome d'halogène

Z représente le groupe vinyle ou un groupe éthyle qui est substitué en position $\beta$ par un substituant éliminable en milieu alcalin,

G représente le groupe thio -S- ou un groupe amino de formule -N(R)- dans laquelle R représente un atome d'hydrogène ou un groupe alkyle ayant 1 à 4 atomes de carbone, qui peut être substitué, ou bien il représente un groupe de formule -K-$W_p$ défini ci-après,

K représente un groupe alkylène ou un reste arylène ou un reste arylène-alkylène ou un reste alkylène-arylène, les restes alkylènes aussi bien qu'arylènes pouvant être substitués, et les restes alkylènes aussi bien que les restes alkylènes et arylènes dans les reste alkylènes-arylènes et arylènes-alkylènes pouvant être interrompus encore par au moins un hétéro groupe,

W représente un groupe conférant de la solubilité dans l'eau et,

p est un nombre valant 1, 2 ou 3 ;

le groupement, pouvant réagir avec les fibres -NH-Q est fixé sur un atome de carbone aromatique d'un noyau benzénique ou naphtalénique de A ou de B ou de D ou sur un atome de carbone aliphatique de D ou sur un substituant de A ou B, mais, si r vaut 2, les deux groupes -NH-Q ne peuvent être simultanément fixés sur A ou sur B ou sur D,

procédé caractérisé en ce qu'on fait réagir le chlorure de cyanuryle ou le fluorure de cyanuryle, dans un ordre quelconque, avec un composé formazanique complexe de cuivre contenant des groupes amino et répondant à la formule générale (3)

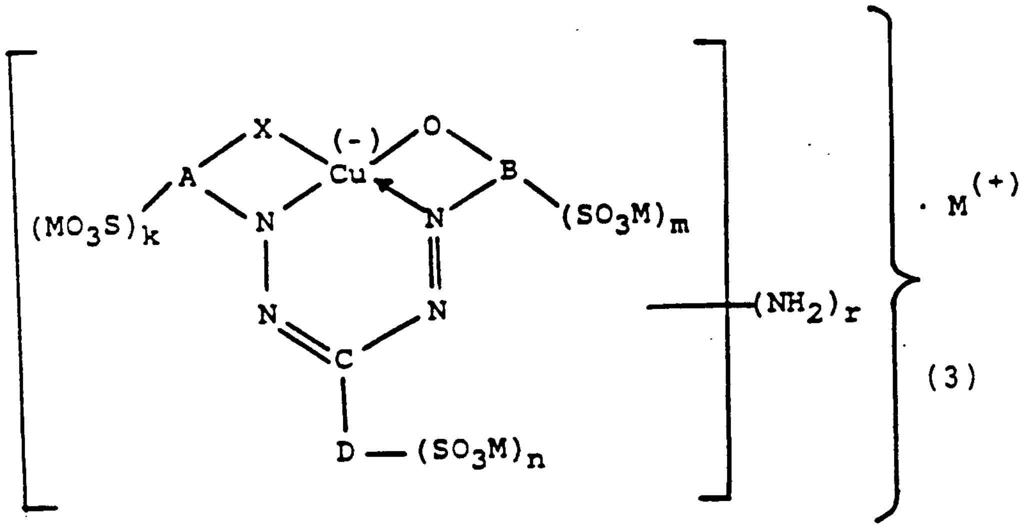

(3)

dans laquelle les divers termes ont les sens indiqués dans le cas de la formule (1) et, de façon analogue au groupement -NH-Q présent dans les composés de formule (1), le groupe amino, qui est contenu une ou deux fois (r = 1 ou 2) dans la molécule du composé formazanique complexe de cuivre, est fixé sur un atome de carbone aromatique d'un noyau benzénique ou napthlénique de A ou de B ou de D ou sur un atome de carbone aliphatique de D ou sur un substituant de A ou de B, mais, si r vaut 2, les deux groupes amino ne sont pas simultanément fixés sur A ou sur B ou sur D, et avec une aniline de formule générale (4)

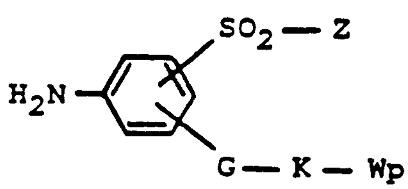

(4)

dans laquelle G, K, W, p et Z ont les sens indiqués ci-dessus.

**2.** Procédé selon la revendication 1, caractérisé en ce que r représente le nombre 1.

**3.** Procédé selon la revendication 1 ou 2, caractérisé en ce que le groupement -NH-Q pouvant réagir avec les fibres est fixé sur un atome de C aromatique du noyau benzénique ou napthalénique de A ou de B.

**4.** Procédé selon l'une au moins des revendications 1 à 3, caractérisé en ce que A et B représentent chacun un noyau benzénique ayant les sens indiqués.

**5.** Procédé selon la revendication 1, caractérisé en ce que le composé de formule (1) est un composé de formule (1a)

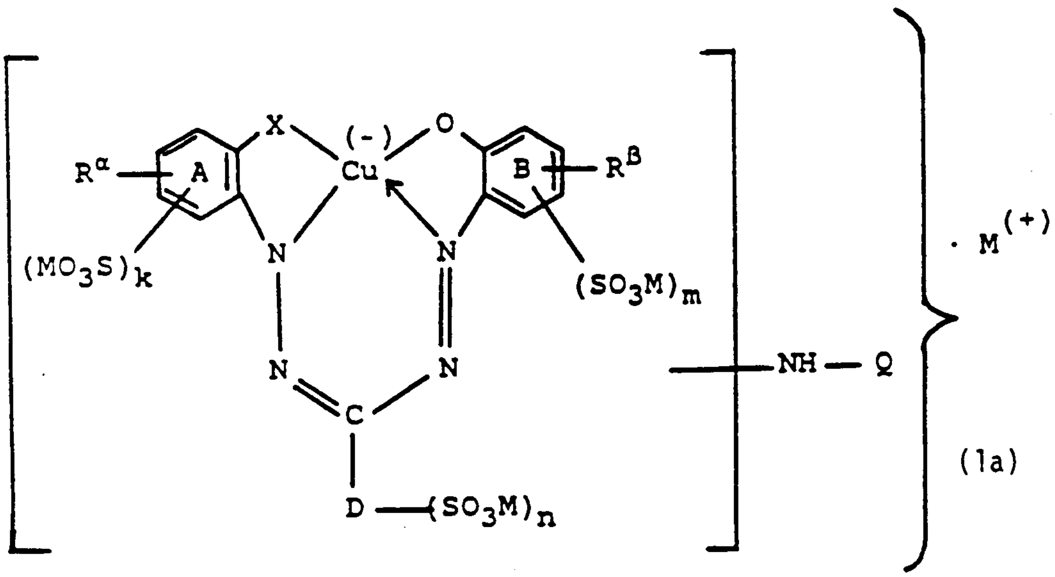

(1a)

dans laquelle :

- $R^{\alpha}$ représente un atome d'hydrogène ou bien le groupe -NH-Q indiqué ou un groupe méthyle, méthoxy, éthoxy bou nitro, ou un atome de chlore;
- $R^{\beta}$ représente un atome d'hydrogène ou le groupe -NH-Q indiqué ou un groupe méthyle, méthoxy, éthoxy, éthylesulfonyle ou nitro ou un atome de chlore;
- k est un nombre nul ou valant 1 ou 2,
- m est un nombre nul ou valant 1 ou 2, et
- n est un nombre nul ou valant 1 ou 2,

la somme de (k + m + n) valant 2 ou 3;

M, D , Q et X ont les sens indiqués dans l'une ou moins des revendications 1 à 6,

le groupement -NH-Q pouvant réagir avec les fibres, est fixé sur le noyau benzénique A ou sur le noyau benzénique a ou sur un atome de carbone aromatique d'un noyau benzénique ou naphtalénique de D.

6. Procédé selon la revendication 1, caractérisé en ce que le composé de formule (1) est un composé de formule générale (1b)

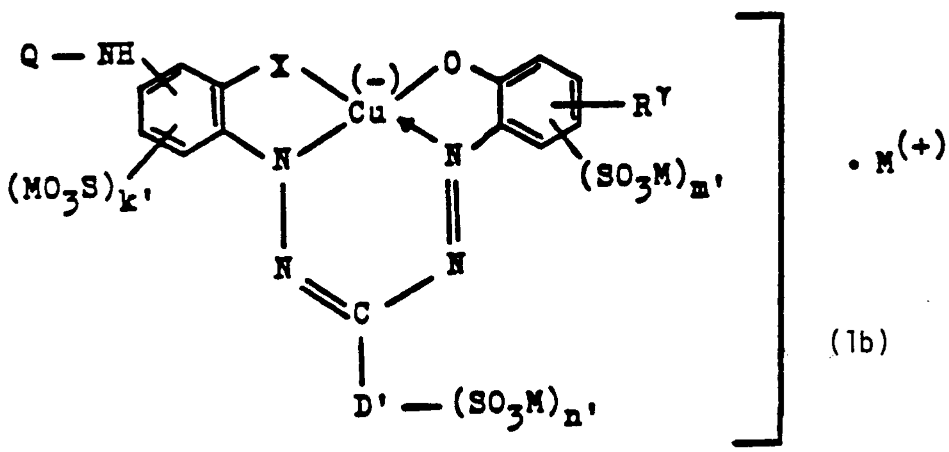

(1b)

dans laquelle :

- k' est un nombre nul ou valant 1,
- m' est un nombre nul ou valant 1 ou 2,
- n' est un nombre nul ou valant 1 ou 2,

la somme de (k' + m' + n') valant 2 ou 3;

| | |
|---|---|
| $R^{\gamma}$ | représente un groupe méthoxy, éthoxy, méthyle ou éthylsulfonyle ou un atome de chlore ou un atome d'hydrogène; |
| D' | représente un noyau benzénique qui, en plus du groupement $-(SO_3M)_{n'}$, peut porter un substituant qui est un groupe méthoxy, éthoxy, ou méthyle ou qui est un atome de chlore ; |
| M, Q, X | ont les sens indiqués à la revendication 1. |

**7.** Procédé selon la revendication 1, caractérisé en ce que le composé de formule (1) est un composé de formule générale (1c)

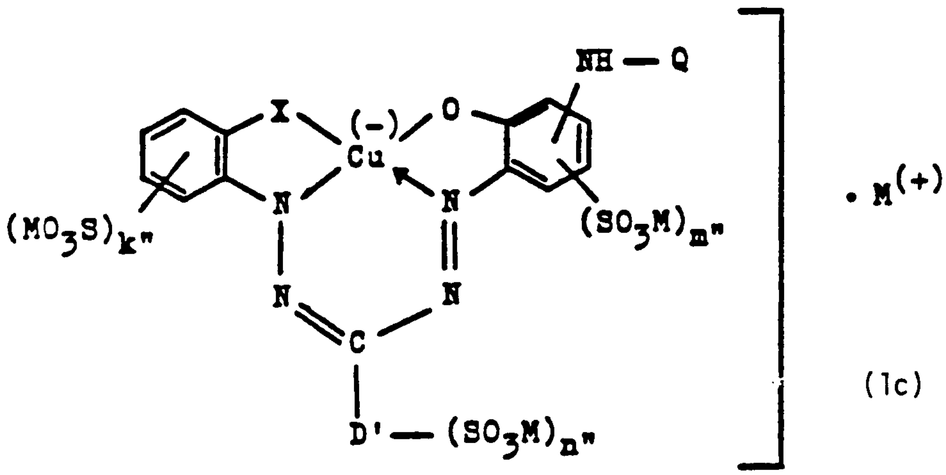

(1c)

dans laquelle :

| | |
|---|---|
| k" | est un nombre nul ou valant 1 ou 2, |
| m" | est un nombre nul ou valant 1, et |
| n" | est un nombre nul ou valant 1 ou 2, |

la somme de (k" + m" + n") valant 2 ou 3;

| | |
|---|---|
| D' | représente un noyau benzénique qui, en plus du groupement $-(SO_3M)n"$ peut porter comme substituant un groupe méthoxy, éthoxy, méthyle ou un atome de chlore; |
| M, Q et x | ont les sens indiqués à la revendication 1. |

**8.** Procédé selon l'une au moins des revendications 1 à 7, caractérisé en ce que X représente le groupe oxy ou le groupe carbonyloxy.

**9.** Procédé selon l'une au moins des revendications 1 à 8 , caractérisé en ce que X représente le groupe carbonyloxy.

**10.** Procédé selon la revendication 1, caractérisé en ce que la composé de formule (1) est un composé de formule générale (1d)

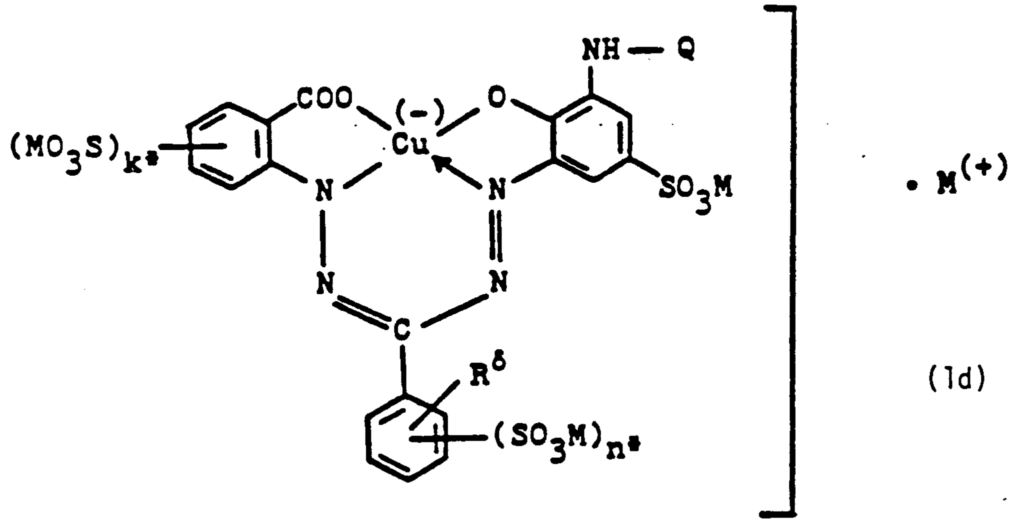

(1d)

dans laquelle :

k* représente un nombre nul ou valent 1, et

n* représente un nombre nul ou valent 1,

la somme de (k* + n*) est un nombre valant 1 ou 2, de préférence 1;

Rδ représente un atome d'hydrogène ou un groupe méthyle, méthoxy ou éthoxy ou un atome de chlore;

M et Q ont les sens indiqués à la revendication 1.

**11.** Procédé selon la revendication 1, caractérisé en ce que le composé de formule (1) est un composé de formule générale (1e)

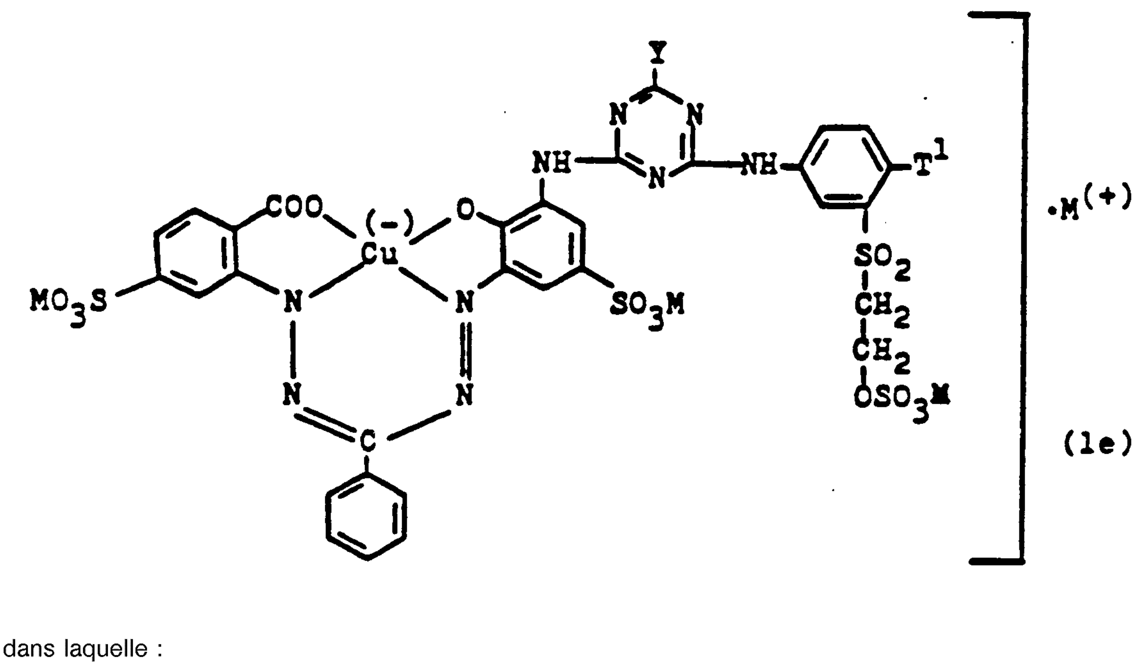

(1e)

dans laquelle :

M a le sens indiqué à la revendication 1, X représente un atome chlore ou de fluor et $T^1$ représente un groupe β-sulfatoéthyl-amino, N-méthyl-N-(β-sulfatoéthyl)-amino, N-[β-(β'-carboxyéthyl)-carboxamido]-éthyl-amino, β-sulfoéthyl-amino ou β-sulfatoéthyl-thio.

**12.** Procédé selon l'une au moins des revendications 1 à 11, caractérisé en ce que Y représente un atome de chlore.

**13.** Procédé selon l'une au moins des revendications 1 à 11, caractérisé en ce que Y représente un atome de fluor.

**14.** Procédé selon l'une au moins des revendications 1 à 13, caractérisé en ce que Z représente le groupe vinyle, ou un groupe $\beta$-sulfatoéthyle.

**15.** Procédé selon l'une au moins des revendications 1 à 14, caractérisé en ce que G représente un groupe amino de formule générale -N(R)- dans laquelle R représente un atome d'hydrogène, ou un groupe méthyle, ou éthyle.

**16.** Procédé selon l'une au moins des revendications 1 à 15, caractérisé en ce que K représente le groupe éthylène ou le groupe propylène ou un groupe de formule $-CH_2-CH_2-O-CH_2-CH_2-$ ou $-CH_2-CH_2-NH-CO-CH_2-CH_2$.

**17.** Procédé selon l'une au moins des revendications 1 à 16, caractérisé en ce que W représente un groupe sulfato, sulfo, ou carboxy.

**18.** Procédé selon l'une au moins des revendications 1 à 17, caractérisé en ce qu'un groupe sulfo de $(MO3S)_{k''}$- ou $(MO3S)_{k^*}$- est fixé en position méta ou para, de préférence en position para, par rapport au groupe X sur le noyau benzénique.

**19.** Procédé selon l'une au moins des revendications 1 à 18, caractérisé en ce que M représente hydrogène ou un métal alcalin

**20.** Utilisation d'un composé formazanique complexe de cuivre, selon l'une au moins des revendications 1 à 19 comme colorant.

**21.** Procédé pour teindre de la matière contenant des groupes hydroxy et/ou carboxamides, en particulier de la matière fibreuse, selon lequel on applique sur la matière un colorant ou l'on fait pénétrer ce colorant dans la matière et on le fixe à l'aide la chaleur et/ou à l'aide d'un des agents de fixation des acides, procédé caractérisé en ce qu'on utilise comme colorant un composé répondant à la formule générale (1) selon l'une au moins des revendications 1 à 19.